# EUROPÄISCHE PATENTSCHRIFT

(11) **EP 3 286 111 B1**
(45) Veröffentlichungstag und Bekanntmachung des Hinweises auf die Patenterteilung: **07.11.2018**
(21) Anmeldenummer: 16724268.4
(22) Anmeldetag: 21.04.2016
(51) Int. Cl.: B65G 1/04

(54) **VERFAHREN ZUM EINLAGERN VON STÜCKGÜTERN IN EIN LAGERREGAL UND LAGERSYSTEM**
METHOD FOR TRANSFERRING PART-LOAD CONSIGNMENTS TO A STORAGE RACK FOR STORAGE, AND STORAGE SYSTEM
PROCÉDÉ DE MISE EN STOCK DE CHARGES ISOLÉES DANS UN RAYONNAGE DE STOCKAGE ET SYSTÈME DE STOCKAGE

(30) Priorität: 22.04.2015 AT 503212015
(43) Veröffentlichungstag der Anmeldung: 28.02.2018
(73) Patentinhaber: TGW Mechanics GmbH, 4600 Wels (AT)
(72) Erfinder: GROSSE, Eric, 63225 Langen (DE); HASLINGER, Dieter, 4060 Leonding (AT); RAUSCH, Martin, 4810 Gmunden (AT)
(74) Vertreter: Burger, Hannes
(86) Internationale Anmeldenummer: PCT/AT2016/050106
(87) Internationale Veröffentlichungsnummer: WO 2016/168878

(56) Entgegenhaltungen:
- EP-B1- 2 351 698
- WO-A1-2012/106744
- WO-A1-2014/038308
- WO-A1-2014/038309

## Beschreibung

Die Erfindung betrifft ein Verfahren zum Einlagern von Stückgütern in Lagerkanäle eines Lagerregales mit einer Vielzahl von Lagerkanälen, bei dem die Stückgüter mittels einer entlang des Lagerregales in einer ersten Richtung (x-Richtung) bewegbaren Stückgutaufnahmevorrichtung zu den Lagerkanälen und einer relativ gegenüber der Stückgutaufnahmevorrichtung in einer zweiten Richtung (z-Richtung) in den Lagerkanal ausfahrbaren Transportvorrichtung in die Lagerkanäle gefördert werden, wobei die Transportvorrichtung entweder ausschließlich in einander gegenüberliegenden Endbereichen mit jeweils zumindest einem äußeren Transportorgan oder in einander gegenüberliegenden Endbereichen mit jeweils zumindest einem äußeren Transportorgan und dazwischen mit zumindest einem inneren Transportorgan ausgestattet ist, um in zumindest einem der Lagerkanäle an hintereinander liegenden Tiefenpositionen die Stückgüter mit gegenseitigem Abstand einzulagern. Ist die Transportvorrichtung ausschließlich in einander gegenüberliegenden Endbereichen mit jeweils zumindest einem äußeren Transportorgan versehen, so kann die Stückgutaufnahmevorrichtung ein Stückgut (mit im Wesentlichen beliebiger Längenabmessung) zwischen den äußeren Transportorganen aufnehmen. Ist die Transportvorrichtung auch mit zumindest einem inneren Transportorgan ausgestattet ist, so kann die Stückgutaufnahmevorrichtung entweder ein Stückgut einer ersten Längenabmessung ausschließlich zwischen den äußeren Transportorganen oder zumindest ein Stückgut einer zweiten Längenabmessung zwischen einem der äußeren Transportorgane und dem inneren Transportorgan aufnehmen. Ferner betrifft die Erfindung ein Lagersystem mit zumindest einem Lagerregal mit einer Vielzahl von Lagerkanälen, einer Stückgutaufnahmevorrichtung und einer Transportvorrichtung.

Die EP 2 234 904 A1 offenbart ein Verfahren zum Einlagern von Stückgütern mit einer Transportvorrichtung in einen Lagerkanal mit hintereinander angeordneten Lagerplätzen für Stückgüter einheitlicher Längen- und Breitenabmessungen. Dabei wird ein erstes Stückgut von der Transportvorrichtung in den Lagerkanal auf den in Einlagerrichtung vorderen Lagerplatz gefördert. Danach wird ein zweites Stückgut von der Transportvorrichtung in den Lagerkanal auf den vorderen Lagerplatz bewegt und dabei das erste Stückgut in Einlagerrichtung auf den dahinter liegenden Lagerplatz bewegt und das zweite Stückgut auf den vorderen Lagerplatz gefördert, sodass die Stückgüter dicht aneinander liegend im Lagerkanal abgestellt sind. Die Transportvorrichtung weist Transportorgane für den Einlagervorgang und Transportorgane für den Auslagervorgang auf.

Eine Transportvorrichtung zum Einlagern von Stückgütern in Lagerkanäle bzw. Auslagern von Stückgütern aus Lagerkanälen ist auch aus der EP 2 351 698 B1 bekannt. Diese bekannte Transportvorrichtung ist auf einer Stückgutaufnahmevorrichtung angeordnet und in einander gegenüberliegenden Endbereichen mit jeweils einem äußeren Transportorgan und dazwischen mit inneren Transportorganen ausgestattet. Dabei wird ein Stückgut, welches eine erste Längenabmessung (600 mm x 400 mm) aufweist, auf der Stückgutaufnahmevorrichtung zwischen einem der äußeren Transportorgane und entweder dem ersten inneren Transportorgan oder zweiten inneren Transportorgan platziert. Das Stückgut, welches eine erste Längenabmessung aufweist, wird dabei mittels dem äußeren Transportorgan an die endgültige Tiefenposition in den Lagerkanal bewegt.

Die EP 2 433 882 A1 offenbart ein Verfahren zum Einlagern von Stückgütern in Lagerkanäle bzw. Auslagern von Stückgütern aus Lagerkanälen, bei dem die Stückgüter über eine in einen Lagerkanal ausfahrbare Transportvorrichtung als Stückgutgruppe oder vereinzelt nacheinander von der Stückgutaufnahmevorrichtung auf in Längsrichtung des Lagerkanales hintereinander angeordneten Tiefenpositionen bewegt werden.

Die aus der AT 7107 U1 bekannte Transportvorrichtung zum Einlagern von Stückgütern in Lagerkanäle bzw. Auslagern von Stückgütern aus Lagerkanälen umfasst ausschließlich in einander gegenüberliegenden Endbereichen angeordnete äußere Transportorgane.

Hingegen offenbart die US 2003/0185656 A1 eine Transportvorrichtung zum Einlagern von Stückgütern in Lagerkanäle bzw. Auslagern von Stückgütern aus Lagerkanälen, welche zusätzlich zu den in ihren einander gegenüberliegenden Endbereichen angeordneten äußeren Transportorganen auch innere Transportorgane umfasst.

Eine Stückgutaufnahmevorrichtung mit einer Transportvorrichtung zum Einlagern von Stückgütern in Lagerkanäle bzw. Auslagern von Stückgütern aus Lagerkanälen ist auch aus der EP 0 733 563 A1 bekannt. Die Transportvorrichtung entspricht vom Aufbau im Wesentlichen jener der EP 2 351 698 B1 (Siehe Oberbegriff der Ansprüche 1, 6, 10 und 13).

Aus der EP 2 393 735 A1 ist eine Transportvorrichtung zum Einlagern von Stückgütern bekannt, mittels welcher Stückgüter unterschiedlicher Längen- und Breitenabmessungen manipulierbar sind. Die Lagerkanäle weisen Stegrippenböden auf, an deren vorragenden Stegen die Stückgüter in unterschiedlichen Tiefenpositionen abstellbar sind.

Die WO 2014/023539 A1 offenbart ein Verfahren zum Bereitstellen von Stückgütern aus einem Lagerregal auf einer Auslagerbahn, wobei die Stückgüter in bzw. aus dem Lagerregal über eine Transportvorrichtung (Ein- und Auslagervorrichtung) pro Regalgasse ein- und ausgelagert werden. Dabei kann zwischen zwei angrenzenden Lagerregalen ein direkter Austausch von Stückgütern von einer Regalgasse in eine benachbarte Regalgasse über Querförderplätze in den Lagerregalen erfolgen, wobei die Transportvorrichtung die Stückgüter in den Querförderplätzen bewegt. Die Transportvorrichtung umfasst hierzu Teleskoparme, welche mit beweglichen Mitnehmern versehen sind.

Die US 8,594,835 B2 offenbart ein automatisches Lagersystem mit Lagerregalen mit in einem Raster angeordneten Lagerkanälen, einer Vielzahl von je Lagerebene entlang von Führungsschienen in einer ersten Richtung (x-Richtung) bewegbaren Stückgutaufnahmevorrichtungen (Shuttle). Die Stückgutaufnahmevorrichtungen sind jeweils mit einer, in einer zweiten Richtung (z-Richtung) in den Lagerkanal ausfahrbaren Transportvorrichtung versehen. Die Stückgutaufnahmevorrichtungen und Transportvorrichtungen werden von einer Steuereinheit angesteuert. Die Lagerkanäle können Stückgüter unterschiedlicher Abmessungen aufnehmen.

Der vorliegenden Erfindung liegt die Aufgabe zugrunde, ein Verfahren zum Einlagern von Stückgütern und ein Lagersystem bereitzustellen, bei dem das Verhältnis Raumvolumen zu verfügbaren Lagervolumen optimiert und eine hohe Einlagerleistung erreicht wird.

Die Aufgabe der Erfindung wird durch folgende Verfahrensmaßnahmen und Merkmale gelöst:
- Übernahme eines Stückgutes (gegebenenfalls der ersten Längenabmessung oder gegebenenfalls zumindest eines Stückgutes einer zweiten Längenabmessung) auf die Stückgutaufnahmevorrichtung,
- Positionierung der Stückgutaufnahmevorrichtung vor einem durch eine Steuereinheit festgelegten Lagerkanal, in welchen zumindest an einer ersten Tiefenposition (Zₙ) ein Stückgut und an einer dahinter liegenden zweiten Tiefenposition (Zₙ₊₁) ein Stückgut eingelagert werden sollen,
- Vorverlagerung eines Stückgutes von der Stückgutaufnahmevorrichtung in den Lagerkanal derart, dass dieses Stückgut von einem der Transportorgane durch Bewegung der Transportvorrichtung in Richtung (erste Verstellrichtung) des Lagerkanales bis zu einer Zwischenposition (Z_{P}) verlagert wird,
- Rückbewegung der Transportvorrichtung in Richtung (zweite Verstellrichtung) der Stückgutaufnahmevorrichtung derart, dass das andere der Transportorgane, welches das Stückgut aus der Zwischenposition (Z_{P}) in die zweite Tiefenposition (Zₙ₊₁) verlagern soll, hinter einer der Stückgutaufnahmevorrichtung zugewandten Seitenwand des Stückgutes positioniert wird,
- Nachverlagerung des Stückgutes im Lagerkanal aus der Zwischenposition (Z_{P}) in die zweite Tiefenposition (Zₙ₊₁) mittels dem anderen der Transportorgane durch Bewegung der Transportvorrichtung in Richtung (erste Verstellrichtung) des Lagerkanales.

Das Stückgut, welches an der in Tiefenrichtung des Lagerkanales hinteren / hintersten Tiefenposition gelagert werden soll, wird in aufeinander folgenden Verlagerungsbewegungen von der Stückgutaufnahmevorrichtung bis zur endgültigen Tiefenposition bzw. Lagerposition verlagert. Vorerst wird das Stückgut in eine Zwischenposition und erst danach aus dieser in eine zweite Tiefenposition (Lagerposition) bewegt bzw. verlagert. Es wird einerseits bei schmaler Bauweise der Stückgutaufnahmevorrichtung eine mehrfachtiefe Lagerung von Stückgütern (entweder der ersten Längenabmessung oder zweiten Längenabmessung) ermöglicht und andererseits wird die Transportvorrichtung, insbesondere die Teleskopeinheit(en), in z-Richtung bis maximal über die Länge der Lagertiefe des Lagerkanales verstellt, selbst wenn ein Stückgut an der hinteren / hintersten Tiefenposition eingelagert wird. Eine hintere Längsseite des Lagerregales wird von der Transportvorrichtung nicht überragt. Demnach ist eine maximale Ausfahrbewegung bzw. Ausfahrlänge der Transportvorrichtung relativ gegenüber der Stückgutaufnahmevorrichtung geringer als die Lagertiefe des Lagerkanales. Darüber hinaus kann die Transportvorrichtung besonders einfach gestaltet werden und im einfachsten Fall nach einer ersten Ausführung bloß die äußeren Transportorgane und ein inneres Transportorgan oder nach einer zweiten Ausführung bloß die äußeren Transportorgane aufweisen. Dennoch können nahezu uneingeschränkt Stückgüter unterschiedlichster Längenabmessungen eingelagert werden. Die Stückgutaufnahmevorrichtung kann gegenüber den aus dem Stand der Technik bekannten Stückgutaufnahmevorrichtungen schmäler gebaut und das verfügbare Raumvolumen für mehr Lagervolumen genutzt werden. Die Rückbewegung der Transportvorrichtung, insbesondere der Teleskopeinheit(en), wird von der elektronischen Steuereinheit abhängig von der Längenabmessung des Stückgutes, welches aus der Zwischenposition in die endgültige (hintere / hinterste) Tiefenposition zu verlagern ist, berechnet und ist geringer als die (mögliche) Verstellbewegung der Transportvorrichtung bis zu einer Ausgangsstellung, in welcher die Transportvorrichtung im Wesentlichen zentrisch auf der Stückgutaufnahmevorrichtung positioniert ist. Bevorzugt wird die Transportvorrichtung nur bis knapp hinter die Seitenwand rückbewegt, sodass das / die Transportorgan(e) in die Betätigungsstellung bewegt werden kann / können, ohne mit dem Stückgut zu kollidieren.

Es erweist sich auch von Vorteil, wenn folgende Verfahrensmaßnahmen ausgeführt werden:
- Übernahme eines ersten Stückgutes der ersten Länge (lange Stückgüter) auf die Stückgutaufnahmevorrichtung,
- Positionierung der Stückgutaufnahmevorrichtung vor einem durch eine Steuereinheit festgelegten Lagerkanal, in welchen zumindest an einer ersten Tiefenposition (Zₙ) ein Stückgut der ersten Länge und an einer dahinter liegenden zweiten Tiefenposition (Zₙ₊₁) ein Stückgut der ersten Länge eingelagert werden sollen,
- Vorverlagerung des Stückgutes von der Stückgutaufnahmevorrichtung in den Lagerkanal derart, dass dieses Stückgut von dem in dessen Verlagerungsrichtung hinteren, äußeren Transportorgan durch Bewegung der Transportvorrichtung in Richtung (erste Verstellrichtung) des Lagerkanales bis zur Zwischenposition (Z_{P}) verlagert wird,
- Rückbewegung der Transportvorrichtung in Richtung (zweite Verstellrichtung) der Stückgutaufnahmevorrichtung derart, dass das innere Transportorgan hinter einer der Stückgutaufnahmevorrichtung zugewandten Seitenwand des Stückgutes positioniert wird,
- Nachverlagerung des Stückgutes im Lagerkanal aus der Zwischenposition (Z_{P}) in die zweite Tiefenposition (Zₙ₊₁) mittels dem inneren Transportorgan durch Bewegung der Transportvorrichtung in Richtung (erste Verstellrichtung) des Lagerkanales.

Das Stückgut, welches an der in Tiefenrichtung des Lagerkanales hinteren Tiefenposition gelagert werden soll, wird in aufeinander folgenden Verlagerungsbewegungen von der Stückgutaufnahmevorrichtung bis zur endgültigen Lagerposition verlagert. Das Stückgut wird auf der Verlagerungsbewegung zwischen der Stückgutaufnahmevorrichtung und dem Lagerkanal von der Transportvorrichtung geführt, womit eine unerwünschte Verdrehung des Stückgutes begrenzt werden kann. Es können auch Stückgüter mit "minderwertigerer" Verpackungsqualität gefördert und an der hinteren Tiefenposition ausreichend genau gelagert werden, um nachfolgenden einen Auslagervorgang zuverlässig durchführen zu können.

Es können auch folgende Verfahrensmaßnahmen in vorteilhafter Weise umgesetzt werden:
- Übernahme eines zweiten Stückgutes der ersten Länge (lange Stückgüter) auf die Stückgutaufnahmevorrichtung,
- Positionierung der Stückgutaufnahmevorrichtung vor dem festgelegten Lagerkanal, in welchem bereits auf die zweite Tiefenposition (Zₙ₊₁) das erste Stückgut der ersten Länge eingelagert wurde,
- Verlagerung des zweiten Stückgutes von der Stückgutaufnahmevorrichtung in den Lagerkanal auf die erste Tiefenposition (Zₙ) von dem in dessen Verlagerungsrichtung hinteren, äußeren Transportorgan durch Bewegung der Transportvorrichtung in Richtung (erste Verstellrichtung) des Lagerkanales.

Das Stückgut, welches an der in Tiefenrichtung des Lagerkanales vorderen Tiefenposition gelagert werden soll, wird in einer einzigen Verlagerungsbewegung von der Stückgutaufnahmevorrichtung bis zur endgültigen Lagerposition verlagert. Auch nach dieser Maßnahme wird das Stückgut, welches an der in Tiefenrichtung des Lagerkanales vorderen Tiefenposition gelagert werden soll, auf der Verlagerungsbewegung zwischen der Stückgutaufnahmevorrichtung und dem Lagerkanal von der Transportvorrichtung geführt und damit eine unerwünschte Verdrehung des Stückgutes begrenzt. Es können auch Stückgüter mit "minderwertigerer" Verpackungsqualität gefördert und an der vorderen Tiefenposition ausreichend genau gelagert werden, um nachfolgenden einen Auslagervorgang zuverlässig durchführen zu können.

Vorteilhaft erweisen sich auch folgende Verfahrensmaßnahmen:
- Übernahme eines ersten Stückgutes der zweiten Länge (kurzes Stückgut) auf die Stückgutaufnahmevorrichtung,
- Positionierung der Stückgutaufnahmevorrichtung vor einem durch eine Steuereinheit festgelegten Lagerkanal, in welchen zumindest an einer ersten Tiefenposition (Zₙ) ein Stückgut der zweiten Länge und an einer dahinter liegenden zweiten Tiefenposition (Zₙ₊₁) ein Stückgut der zweiten Länge und an einer dahinter liegenden dritten Tiefenposition (Zₙ₊₂) ein Stückgut der zweiten Länge eingelagert werden sollen,
- Vorverlagerung des Stückgutes von der Stückgutaufnahmevorrichtung in den Lagerkanal derart, dass dieses Stückgut von dem inneren Transportorgan durch Bewegung der Transportvorrichtung in Richtung (erste Verstellrichtung) des Lagerkanales bis zur Zwischenposition (Z_{P}) verlagert wird,
- Rückbewegung der Transportvorrichtung in Richtung (zweite Verstellrichtung) der Stückgutaufnahmevorrichtung derart, dass das in zweiter Verstellrichtung hintere, äußere Transportorgan hinter einer der Stückgutaufnahmevorrichtung zugewandten Seitenwand des Stückgutes positioniert wird,
- Nachverlagerung des Stückgutes im Lagerkanal aus der Zwischenposition (Z_{P}) in die dritte Tiefenposition (Zₙ₊₂) mittels dem in erster Verstellrichtung vorderen, äußeren Transportorgan durch Bewegung der Transportvorrichtung in Richtung (erste Verstellrichtung) des Lagerkanales.

Das (dritte oder vierte usw.) Stückgut, welches an der in Tiefenrichtung des Lagerkanales hintersten Tiefenposition gelagert werden soll, wird in aufeinander folgenden Verlagerungsbewegungen von der Stückgutaufnahmevorrichtung bis zur endgültigen Lagerposition verlagert. Auch erweist es sich von Vorteil, wenn die Stückgüter der zweiten Länge jeweils einzeln von der Stückgutaufnahmevorrichtung in den Lagerkanal verlagert werden, auch wenn die Stückgutaufnahmevorrichtung mehr als ein Stückgut der zweiten Länge aufnehmen kann, da auf diese Weise die Abstände jeweils zwischen den an den hintereinander liegenden Tiefenpositionen abgestellten Stückgüter auf ein Minimum reduziert werden können.

Es sind auch folgende Verfahrensmaßnahmen von Vorteil:
- Übernahme eines zweiten Stückgutes der zweiten Länge (kurzes Stückgut) auf die Stückgutaufnahmevorrichtung,
- Positionierung der Stückgutaufnahmevorrichtung vor dem festgelegten Lagerkanal, in welchem bereits auf die dritte Tiefenposition (Zₙ₊₂) das erste Stückgut der zweiten Länge eingelagert wurde,
- Verlagerung des zweiten Stückgutes von der Stückgutaufnahmevorrichtung in den Lagerkanal auf die zweite Tiefenposition (Zₙ₊₁) von dem in dessen Verlagerungsrichtung hinteren, äußeren Transportorgan oder mittleren Transportorgan durch Bewegung der Transportvorrichtung in Richtung (erste Verstellrichtung) des Lagerkanales, und danach
- Übernahme eines dritten Stückgutes der zweiten Länge auf die Stückgutaufnahmevorrichtung,
- Positionierung der Stückgutaufnahmevorrichtung vor dem festgelegten Lagerkanal, in welchem bereits auf die dritte Tiefenposition (Zₙ₊₂) das erste Stückgut der zweiten Länge und auf die zweite Tiefenposition (Zₙ₊₁) das zweite Stückgut der zweiten Länge eingelagert wurden,
- Verlagerung des dritten Stückgutes von der Stückgutaufnahmevorrichtung in den Lagerkanal auf die erste Tiefenposition (Zₙ) von dem in dessen Verlagerungsrichtung hinteren, äußeren Transportorgan oder mittleren Transportorgan durch Bewegung der Transportvorrichtung in Richtung (erste Verstellrichtung) des Lagerkanales.

Während das (dritte oder vierte usw.) Stückgut in aufeinander folgenden Verlagerungsbewegungen von der Stückgutaufnahmevorrichtung bis zur endgültigen Lagerposition verlagert wird, wie oben beschrieben, werden hingegen jene Stückgüter, welche an den in Tiefenrichtung des Lagerkanales davor liegenden Tiefenpositionen gelagert werden sollen, jeweils mit einer einzigen Verlagerungsbewegung von der Stückgutaufnahmevorrichtung bis zu den endgültigen Lagerpositionen verlagert.

Als besonders vorteilhafte Maßnahme erweist sich, wenn die Stückgutaufnahmevorrichtung einen Tragrahmen, die am Tragrahmen gelagerte Transportvorrichtung und eine Aufnahmeplattform aufweist, wobei die Aufnahmeplattform dazu eingerichtet ist, ein einziges Stückgut der ersten Länge (langes Stückgut) oder zumindest ein Stückgut der zweiten Länge (kurzes Stückgut) zu transportieren, und wobei die Transportvorrichtung parallel zu Längsseiten der Aufnahmeplattform angeordnete (synchron ausfahrbare) Teleskopeinheiten aufweist, und wobei die Teleskopeinheiten jeweils einen Grundrahmen, einen gegenüber dem Grundrahmen verstellbaren ersten Schlitten und einen gegenüber dem ersten Schlitten verstellbaren zweiten Schlitten aufweisen, und wobei die zweiten Schlitten jeweils an ihren einander gegenüberliegenden Endbereichen mit dem äußeren Transportorgan und dem dazwischen angeordneten inneren Transportorgan versehen sind, und wobei die Transportorgane zwischen einer gegenüber dem Stückgut zurückgezogenen Ausgangsstellung und einer das Stückgut ergreifenden Betätigungsstellung verstellbar sind.

Die Transportvorrichtung zeichnet sich durch ihren kompakten Aufbau aus und ermöglicht einen horizontalen Transport der Stückgüter zwischen der Stückgutaufnahmevorrichtung und einem Lagerkanal. Das Einlagern von Stückgütern in den Lagerkanal und das Auslagern von Stückgütern aus dem Lagerkanal kann sehr dynamisch erfolgen. Auch ist ein schonender Transport der Stückgüter möglich.

In einer vorteilhaften Ausführung der Erfindung ist die Stückgutaufnahmevorrichtung durch ein Einebenenregalbediengerät gebildet.

Gemäß einer Ausgestaltung der Erfindung umfasst das Lagersystem:
- ein erstes Lagerregal mit in übereinander liegenden Regalebenen nebeneinander angeordneten Lagerkanälen,
- ein zweites Lagerregal mit in übereinander liegenden Regalebenen nebeneinander angeordneten Lagerkanälen,
- eine Regalgasse, welche in x-Richtung zwischen dem ersten Lagerregal und zweiten Lagerregal verläuft,
- eine Vielzahl von Stückgutaufnahmevorrichtungen, wobei jede Stückgutaufnahmevorrichtung mit einer relativ gegenüber dieser Stückgutaufnahmevorrichtung in einer zweiten Richtung (z-Richtung) in den Lagerkanal ausfahrbare Transportvorrichtung aufweist, und wobei die Steuereinheit die Stückgutaufnahmevorrichtungen und Transportvorrichtungen ansteuert, um in den Lagerkanälen an hintereinander liegenden Tiefenpositionen (Zₙ .. Zₙ₊₂) die Stückgüter mit gegenseitigem Abstand einzulagern,
- eine Ladegut-Manipulationseinheit, welche zumindest eine Stückgut-Hebevorrichtung mit einer heb- und senkbaren Transportvorrichtung zum Einlagern und/oder Auslagern von Stückgütern sowie eine Puffervorrichtung mit Bereitstellvorrichtungen für das Zwischenpuffern von Stückgütern,
- Führungsschienen, welche in zumindest einigen der Regalebenen zwischen dem ersten Lagerregal und zweiten Lagerregal derart angeordnet sind, dass die Stückgutaufnahmevorrichtungen die Lagerkanäle und die Bereitstellvorrichtungen anfahren können, um Stückgüter zwischen den Lagerkanälen und Bereitstellvorrichtungen zu transportieren,
- einer an die Stückgut-Hebevorrichtung angeschlossenen Fördertechnik zum Antransport und Abtransport von Stückgütern zu bzw. von der Stückgut-Hebevorrichtung.

Mit einem solchen Lagersystem können besonders hohe Einlager- und Auslagerleistungen erreicht werden. Die Transportvorrichtung kann beim Auslagern wahlfrei auf ein großes Sortiment an Stückgüter mit unterschiedlichen Längenabmessungen oder Stückgüter mit gleichen Längenabmessungen zugreifen.

Nach einer vorteilhaften Ausführung der Erfindung kann vorgesehen werden, dass das Stückgut vor deren Verlagerung von der Stückgutaufnahmevorrichtung in den Lagerkanal auf der Stückgutaufnahmevorrichtung und in einer Richtung quer zur Längserstreckung des Lagerkanales ausgerichtet wird. Damit wird sichergestellt, dass das Stückgut mit hoher Positionsgenauigkeit auf der Stückgutaufnahmevorrichtung bereitgestellt und ohne wesentlicher Verdrehung von der Stückgutaufnahmevorrichtung in die Zwischenposition und endgültige Tiefenposition bzw. Lagerposition bewegt werden kann, selbst wenn das Stückgut ausschließlich von den äußeren Transportorganen geführt wird. Der Ausrichtvorgang kann entweder mittels der Transportvorrichtung oder gesonderter Zentrierleisten erfolgen. Es wäre auch denkbar, dass die äußeren Transportorgane jeweils von den einander gegenüberliegenden Stirnenden der Transportvorrichtung entfernt angeordnet sind, sodass eine Länge der Transportvorrichtung größer ist als ein Abstand zwischen den äußeren Transportorganen. Dadurch kann das Stückgut während der Verlagerungsbewegung nicht bloß von dem/den äußeren Transportorgan(en), sondern auch durch die Transportvorrichtung geführt werden.

Es kann sich auch von Vorteil erweisen, wenn das Stückgut vor deren Verlagerung von der Stückgutaufnahmevorrichtung in den Lagerkanal auf der Stückgutaufnahmevorrichtung und in einer Richtung parallel zur Längserstreckung des Lagerkanales positioniert wird. Das Stückgut wird mittels einer die Aufnahmeplattform aufweisenden, motorisierten Fördervorrichtung oder der Transportvorrichtung auf der Stückgutaufnahmevorrichtung parallel zur z-Richtung positioniert.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt eines Lagersystems in einer ersten Ausführung mit Lagerregalen und einer Stückgut-Manipulationseinheit in Draufsicht auf eine Regalebene;
- Fig. 2: das Lagersystem in Ansicht gemäß der Linie II in Fig. 1;
- Fig. 3: das Lagersystem ohne der Stückgut-Manipulationseinheit nach Fig. 1 in Stirnansicht;
- Fig. 4: einen Ausschnitt eines Lagersystems in einer zweiten Ausführung mit Lagerregalen und einer Stückgut-Manipulationseinheit in Draufsicht auf eine Regalebene;
- Fig. 5: einen Ausschnitt eines Lagersystems in einer dritten Ausführung mit Lagerregalen und einer Stückgut-Manipulationseinheit in Draufsicht auf eine Regalebene;
- Fig. 6: einen Ausschnitt eines Lagersystems in einer vierten Ausführung mit Lagerregalen und einer Stückgut-Manipulationseinheit in Draufsicht auf eine Regalebene;
- Fig. 7: eine Stückgutaufnahmevorrichtung mit einer ersten Ausführung einer Transportvorrichtung zum Einlagern von Stückgütern in Lagerkanäle und Auslagern von Stückgütern aus Lagerkanälen, in perspektivischer Ansicht;
- Fig. 8: eine Ausschnittsvergrößerung aus einem Lagerregal und der Stückgutaufnahmevorrichtung gemäß Fig. 7, in Stirnsicht;
- Fig. 9a bis 9h: eine Sequenzdarstellung zu einem Einlagervorgang von Stückgütern einer ersten Längenabmessung mit der Transportvorrichtung gemäß Fig. 7;
- Fig. 10a bis 10b: eine Sequenzdarstellung zu einem Auslagervorgang von Stückgütern einer ersten Längenabmessung;
- Fig. 11a bis 11i: eine Sequenzdarstellung zu einem Einlagervorgang von Stückgütern einer zweiten Längenabmessung;
- Fig. 12: eine Stückgutaufnahmevorrichtung mit einer zweiten Ausführung einer Transportvorrichtung zum Einlagern von Stückgütern in Lagerkanäle und Auslagern von Stückgütern aus Lagerkanälen, in perspektivischer Ansicht;
- Fig. 13a bis 13h: eine Sequenzdarstellung zu einem Einlagervorgang von Stückgütern, beispielweise einer ersten Längenabmessung mit der Transportvorrichtung gemäß Fig. 12.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

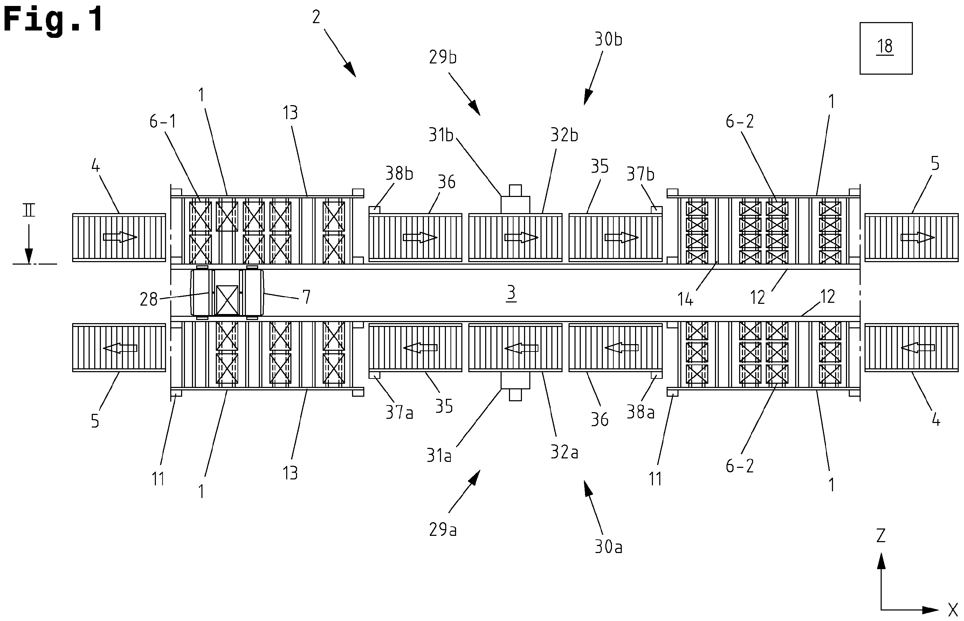

In den Fig. 1 bis 3 ist eine erste Ausführung eines Lagersystems gezeigt, welches parallel angeordnete Lagerregale 1, eine Stückgut-Manipulationseinheit 2, zumindest eine zwischen den Lagerregalen 1 und entlang der Stückgut-Manipulations-einheit 2 in einer x-Richtung verlaufende Regalgasse 3, eine an die Stückgut-Manipulationseinheit 2 angeschlossene Fördertechnik 4, 5 zum Antransport von Stückgütern 6-1, 6-2 und zum Abtransport von Stückgütern 6-1, 6-2 und zumindest eine Stückgutaufnahmevorrichtung 7 zum Einlagern der Stückgüter 6-1, 6-2 in Lagerkanäle 15 bzw. Auslagern von Stückgütern 6-1, 6-2 aus den Lagerkanälen 15 umfasst. Im gezeigten Beispiel sind zwei Lagerregale 1 dargestellt. Im Rahmen der Erfindung können aber auch mehr als zwei Lagerregale 1 vorgesehen werden, wobei zwischen benachbarten Lagerregalen 1 jeweils eine Regalgasse 3 ausgebildet ist. Die Fördertechnik 4, 5 ist aus Gründen der besseren Übersicht in Fig. 1 nur abschnittsweise dargestellt.

Die Stückgüter 6-1, 6-2 sind Kartons (Packeinheiten) oder Ladehilfsmittel (LHM), wie Tablar oder Behälter, mittels welchen Einzelartikel oder je Ladehilfsmittel zumindest ein Karton gefördert und gelagert werden können. In den Kartons sind Einzelartikel, beispielweise aus der Textilbranche oder Lebensmittelindustrie bevorratet.

Die Lagerregale 1 können jeweils der Regalgasse 3 benachbarte, vertikale vordere Regalsteher 10 und von der Regalgasse 3 entfernte, vertikale hintere Regalsteher 11 umfassen. Die vorderen Regalsteher 10 sind mit in Richtung der Regalgasse 3 horizontal verlaufenden vorderen Längstraversen 12 und die hinteren Regalsteher 11 mit in Richtung der Regalgasse 3 horizontal verlaufenden hinteren Längstraversen 13 verbunden. Zwischen den Längstraversen 12, 13 können Querträger 14 vorgesehen werden, welche sich in Tiefenrichtung eines Lagerregales 1 (z-Richtung) erstrecken. In diesem Fall bilden die Querträger 14 obenseitig eine Lagerfläche bzw. Lagerkanäle 15 aus. Ein Stückgut 6-1, 6-2 lagert je nach Breitenabmessung auf zumindest zwei Querträgern 14.

Möglich wäre aber auch eine (nicht gezeigte) Ausführung, bei der die Lagerregale 1 jeweils vordere Regalsteher, hintere Regalsteher, an diesen befestigte vordere Längstraversen und hintere Längstraversen sowie einen je Regalebene zwischen den Längstraversen angeordneten und an diesen befestigten Lagerboden, beispielsweise eine Lagerplatte oder ein Gitter. Der Lagerboden bildet obenseitig eine Lagerfläche aus, die sich je Regalebene in Tiefenrichtung (z-Richtung) zwischen der vorderen Längstraverse und hinteren Längstraversen erstreckt. In Längenrichtung (x-Richtung) des Lagerregales erstreckt sich die Lagerfläche je Regalebene zumindest zwischen den aufeinander folgenden vorderen Regalstehern und hinteren Regalstehern. In diesem Fall bilden bildet der Lagerboden eine Lagerfläche bzw. Lagerkanäle 15 aus.

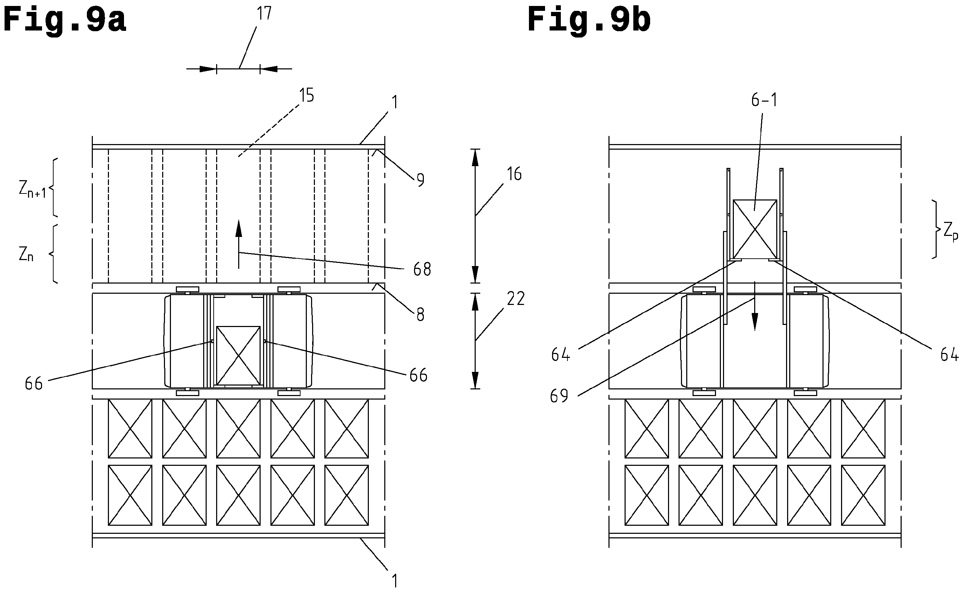

Somit bildet jedes Lagerregal 1 in übereinander liegenden Regalebenen (RE) jeweils nebeneinander eine Vielzahl von Lagerkanälen 15 aus, welche sich in z-Richtung zwischen den voneinander abgewandten Längsseiten 8, 9 (Fig. 9a) des Lagerregales 1 erstrecken. Die Lagerkanäle 15 weisen dabei eine einheitliche Lagertiefe 16 (Fig. 9a) auf.

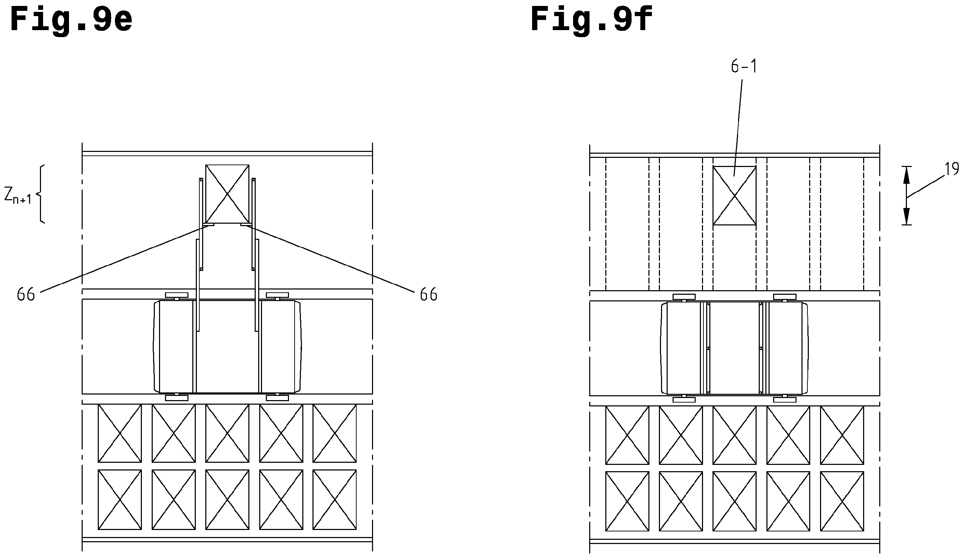

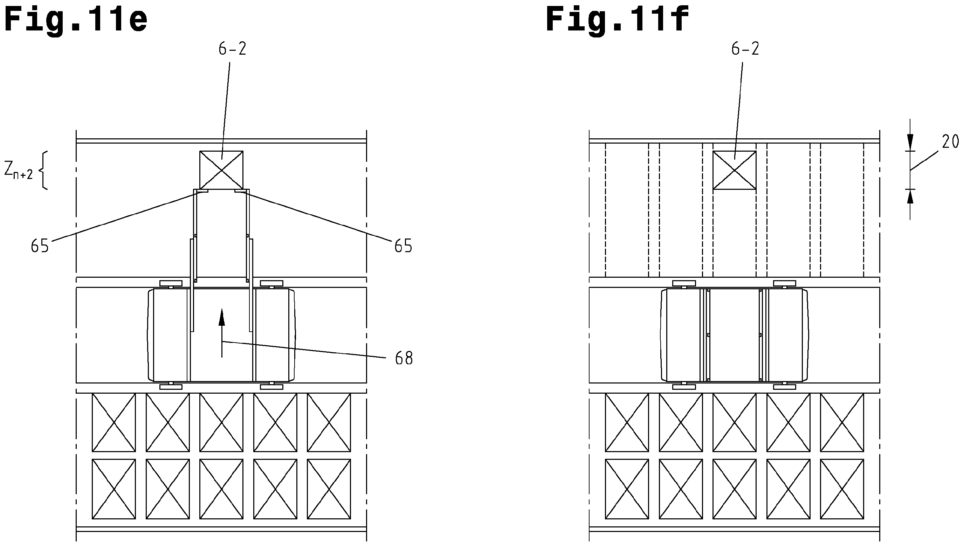

Jeder Lagerkanal 15 kann abhängig von einer Längenabmessung der Stückgüter 6-1, 6-2, welche in den Lagerkanälen 15 zwischengelagert werden, eine entsprechende Anzahl an Stückgütern 6-1, 6-2 aufnehmen. Die Längenabmessung verläuft dabei in Richtung der Längserstreckung des Lagerkanales 15, wenn das Stückgut 6-1, 6-2 im Lagerkanal 15 eingelagert wurde. Die Breitenabmessung der Stückgüter 6-1, 6-2 hingegen, wirkt sich auf die Anzahl der nebeneinander liegenden Lagerkanäle 15 aus. Die Breitenabmessung verläuft dabei quer zur Längserstreckung des Lagerkanales 15, wenn das Stückgut 6-1, 6-2 im Lagerkanal 15 eingelagert wurde. Die Stückgüter 6-1, 6-2 können üblicherweise eine Längenabmessung zwischen 100 mm und 1200 mm, insbesondere zwischen 150 mm und 850 mm, und eine Breitenabmessung zwischen 100 mm und 1200 mm, insbesondere zwischen 150 mm und 850 mm, aufweisen. Aus Gründen der besseren Übersicht sind die Stückgüter 6-1, 6-2 in Fig. 1 aber mit gleicher Breitenabmessung eingetragen. Wird im Nachfolgenden von einer ersten Längenabmessung 19 (Fig. 9f) gesprochen, so handelt es sich um Stückgüter 6-1 mit einer Länge, die größer ist als ein Längsabstand zwischen einem äußeren Transportorgan 64, 65 und einem inneren Transportorgan 66. Die erste Längenabmessung 19 versteht sich als ein Längenbereich mit einer Untergrenze (minimale erste Längenabmessung) und einer Obergrenze (maximale erste Längenabmessung). So kann der Längenbereich für die erste Längenabmessung 19 zwischen 451 mm bis 705 mm liegen. Wird von einer zweiten Längenabmessung 20 (Fig. 11f) gesprochen, so handelt es sich um Stückgüter 6-2 mit einer Länge, die kleiner ist als ein Abstand zwischen einem äußeren Transportorgan 64, 65 und einem inneren Transportorgan 66. Die zweite Längenabmessung 20 versteht sich als ein Längenbereich mit einer Untergrenze (minimale zweite Längenabmessung) und einer Obergrenze (maximale zweite Längenabmessung). So kann der Längenbereich für die zweite Längenabmessung 20 zwischen 150 mm bis 450 mm liegen.

Es sei erwähnt, dass der Begriff "Lagerkanal" so zu verstehen ist, dass dieser von einer elektronischen Steuereinheit 18 "fiktiv" als Stellfläche festgelegt wird. Während die "ausnutzbare" Lagertiefe 16 der Lagerkanäle 15 nicht variiert, kann eine Lagerbreite 17 (Fig. 9a) abhängig von der Breitenabmessung der Stückgüter 6-1, 6-2 variieren. Die Stellfläche je Stückgut 6-1, 6-2 ergibt sich aus der Lagertiefe 16 des Lagerkanales 15 und der Breitenabmessung der Stückgüter 6-1, 6-2, welche in diesem Lagerkanal 15 eingelagert werden sollen. Bevorzugt werden in einem Lagerkanal 15 Stückgüter 6-1, 6-2 zumindest mit derselben Längenabmessung 19, 20 gelagert. Im Rahmen der Erfindung ist es aber auch möglich, dass in einem Lagerkanal 15 Stückgüter 6-1, 6-2 mit unterschiedlicher Längenabmessung 19, 20 gelagert werden. Ebenso verhält es sich mit der Breitenabmessung der Stückgüter 6, welche in einem Lagerkanal 15 gelagert werden.

Die Lagerkanäle 15 sind jeweils mit einer Lagertiefe 16 ausgeführt, welche die Lagerung von zwei Stückgütern 6-1 einer ersten Längenabmessung 19 oder mehr als zwei Stückgütern 6-2 einer zweiten Längenabmessung 20 ermöglicht. Die maximale Lagertiefe 16 bzw. Länge des Lagerkanales 15 beträgt nach gezeigter Ausführung weniger als 1600 mm, beispielweise 1525 mm.

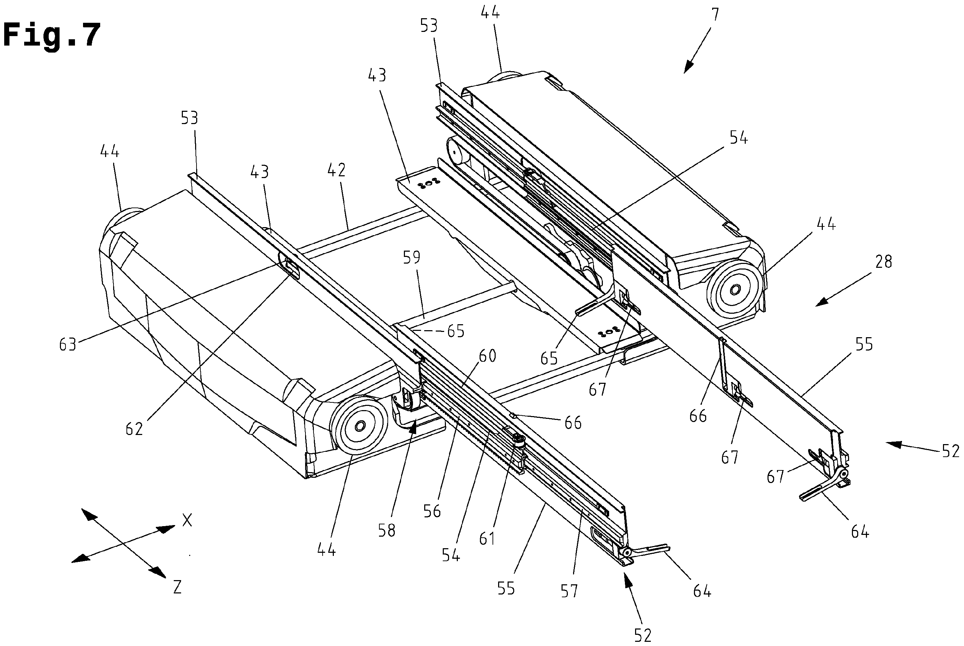

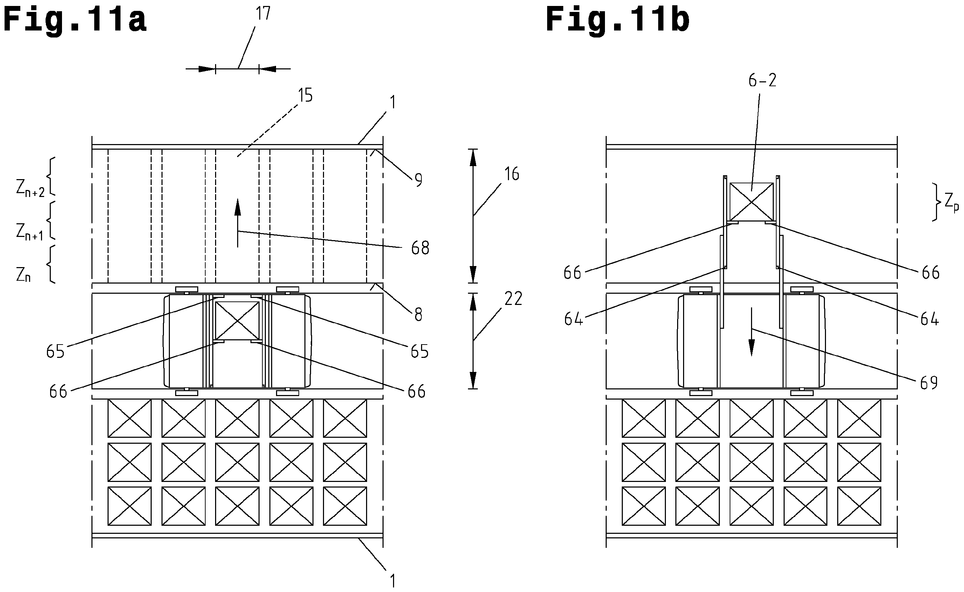

So können über eine noch näher zu beschreibende Transportvorrichtung 28 (Fig. 7) und nach dem noch näher zu beschreibenden Einlagerverfahren in den Lagerkanälen 15 jeweils in Tiefenrichtung (z-Richtung) an hintereinander liegenden Tiefenpositionen Zₙ, Zₙ₊₁, Zₙ₊₂ usw. Stückgüter 6-1, 6-2 in unterschiedlicher Anzahl eingelagert werden. Beispielweise können über die Transportvorrichtung 28 (Fig. 7) und nach dem Einlagerverfahren (Fig. 9a-9h) in den Lagerkanälen 15 jeweils in Tiefenrichtung (z-Richtung) an hintereinander liegenden Tiefenpositionen Zₙ, Zₙ₊₁ zwei Stückgüter 6-1 eingelagert werden. Andererseits können über die Transportvorrichtung 28 (Fig. 7) und nach dem Einlagerverfahren (Fig. 11a-11i) in den Lagerkanälen 15 jeweils in Tiefenrichtung (z-Richtung) an hintereinander liegenden Tiefenpositionen Zn, Zₙ₊₁, Zₙ₊₂ drei Stückgüter 6-2 eingelagert werden. In Fig. 1 sind in einigen der Lagerkanäle 15 jeweils in Tiefenrichtung (z-Richtung) an hintereinander liegenden Tiefenpositionen Zn, Zₙ₊₁, Zₙ₊₂, Zₙ₊₃ vier Stückgüter 6-2 eingelagert.

Hingegen ist eine Breite 22 (Fig. 9a) der Stückgutaufnahmevorrichtung 7 geringer als eine Lagertiefe 16 und derart ausgelegt, dass auf einer Aufnahmeplattform 43 (Fig. 7) ein einziges Stückgut 6-1 mit der ersten Längenabmessung 19 transportiert werden kann, welches dann zwischen den äußeren Transportorganen 64, 65 platziert wird. Andererseits können auch mehrere Stückgüter 6-2 mit der zweiten Längenabmessung 20 transportiert werden, wobei ein erstes Stückgut 6-2 zwischen dem ersten äußeren Transportorgan 64 und einem inneren Transportorgan 66 platziert wird und ein zweites Stückgut 6-2 zwischen dem zweiten äußeren Transportorgan 65 und einem inneren Transportorgan 66 platziert wird. Es ist aber auch möglich, dass die Stückgutaufnahmevorrichtung 7 bloß ein Stückgut 6-2 mit der zweiten Längenabmessung 20 transportiert, wobei dann dieses Stückgut 6-2 entweder zwischen dem ersten äußeren Transportorgan 64 und einem inneren Transportorgan 66 oder zwischen dem zweiten äußeren Transportorgan 65 und einem inneren Transportorgan 66 platziert wird, wie in Fig. 11a gezeigt. Die Breite 22 der Stückgutaufnahmevorrichtung 7 beträgt nach gezeigter Ausführung weniger als 1100 mm, beispielweise 1000 mm.

Diese Ausführung erweist sich von Vorteil, da bei verhältnismäßig geringer Breite 22 der Stückgutaufnahmevorrichtung 7 bzw. schmaler Regalgasse 3 eine mehrfachtiefe Lagerung von Stückgütern 6-1, 6-2 in einem Lagerkanal 15 größerer Lagertiefe 16 möglich ist. Dadurch wird das Verhältnis Raumvolumen zu verfügbaren Lagervolumen gesteigert.

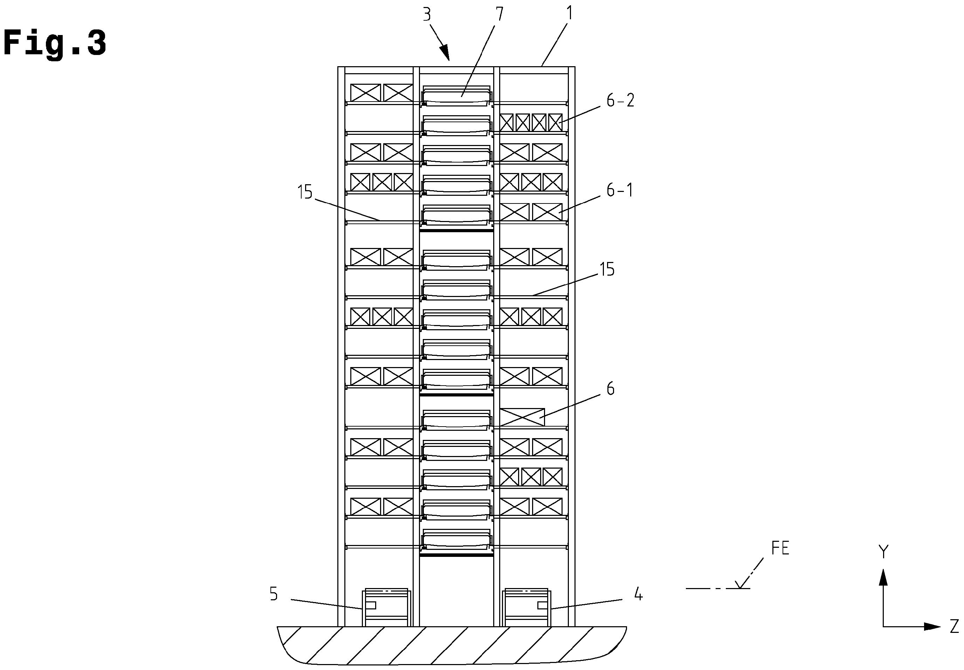

Grundsätzlich kann das Stückgut 6 auch eine (dritte) Längenabmessung aufweisen, welche größer ist, als eine erste Längenabmessung. Dies ist in Fig. 3 dargestellt. Ein solches Stückgut 6 kann aber nach wie vor auf der Stückgutaufnahmevorrichtung 7 zwischen dem ersten äußeren Transportorgan 64 und zweiten äußeren Transportorgan 65 platziert werden, jedoch kann in einem Lagerkanal 15 aufgrund der begrenzt vorhandenen Lagertiefe 16 nur noch ein einziges Stückgut 6 gelagert werden. In diesem Fall erfolgt die Einlagerung gemäß dem Stand der Technik.

Dies bedeutet, dass in den Lagerkanälen 15 Stückgüter 6 unterschiedlicher Längenabmessungen lagern können. Beispielweise sind in einem ersten Lagerkanal 15 oder einigen ersten Lagerkanälen 15 Stückgüter 6-1 mit der ersten Längenabmessung gelagert, in einem zweiten Lagerkanal 15 oder einigen zweiten Lagerkanälen 15 Stückgüter 6-2 mit der zweiten Längenabmessung gelagert und/oder einem dritten Lagerkanal 15 oder einigen dritten Lagerkanälen 15 Stückgüter 6 mit der dritten Längenabmessung gelagert. Grundsätzlich ist es auch möglich, dass in einem Lagerkanal 15 Stückgüter 6-1, 6-2 unterschiedlicher Längenabmessung 19, 20 lagern, beispielweise ein Stückgut 6-1 mit der ersten Längenabmessung 19 und zwei Stückgüter 6-2 mit der zweiten Längenabmessung 20.

Das Lagersystem umfasst nach gezeigter Ausführung in übereinander liegenden (horizontalen) Fahrebenen 27 in der Regalgasse 3 bewegbare und von der Steuereinheit 18 unabhängig voneinander ansteuerbare Stückgutaufnahmevorrichtungen 7 zum Einlagern der Stückgüter 6, 6-1, 6-2 in die Lagerkanäle 15 bzw. Auslagern von Stückgütern 6, 6-1, 6-2 aus den Lagerkanälen 15. Es kann vorgesehen werden, dass jeder Regalebene (RE) zumindest eine Stückgutaufnahmevorrichtung 7 zugeordnet ist. Somit bedient eine Stückgutaufnahmevorrichtung 7 über eine Transportvorrichtung 28 eine Regalebene. Die Transportvorrichtung 28 kann in einer Querrichtung (z-Richtung) doppelseitig ein oder mehrere Stückgüter 6, 6-1, 6-2 in die Lagerkanäle 15 einlagern bzw. aus den Lagerkanälen auslagern. Die Fahrebenen 27 und Regalebenen (RE) liegen im gezeigten Ausführungsbeispiel im Wesentlichen auf gleicher Höhenebene, wobei die in Längsrichtung der Regalgasse 3 (x-Richtung) verlaufenden und paarweise einander gegenüberliegenden Längstraversen 12 jeweils eine Fahrebene 27 ausbilden, entlang welcher die Stückgutaufnahmevorrichtung 7 bewegt wird.

Es können aber nach einer anderen nicht gezeigten Ausführung auch weniger Stückgutaufnahmevorrichtungen 7 als Regalebenen (RE) vorhanden sein, wenn die Stückgutaufnahmevorrichtung 7 stockweise übereinander angeordnete Transportvorrichtungen 28 umfasst. Die Transportvorrichtungen 28 können von der Steuereinheit 18 unabhängig voneinander angesteuert werden, wovon eine erste Transportvorrichtung 28 in einer Querrichtung (z-Richtung) auf einer ersten Regalebene (RE) ein oder mehrere Stückgüter 6, 6-1, 6-2 in einen Lagerkanal 15 einlagern bzw. aus einem Lagerkanal 15 auslagern kann und eine zweite Transportvorrichtung 28 in einer Querrichtung (z-Richtung) auf einer zweiten Regalebene (RE) ein oder mehrere Stückgüter 6, 6-1, 6-2 in einen Lagerkanal 15 einlagern bzw. aus einem Lagerkanal 15 auslagern kann. Somit kann ein Stückgutaufnahmevorrichtung 7 beispielweise über zwei Transportvorrichtungen 28 mehr als eine Regalebene, beispielweise zwei Regalebenen bedienen. Die Fahrebenen 27 liegen zwar nicht mehr in jeder Regalebene (RE), aber im Wesentlichen auf gleicher Höhenebene jeder zweiten Regalebene (RE), wobei die in Längsrichtung der Regalgasse 3 (x-Richtung) verlaufenden und paarweise einander gegenüberliegenden Längstraversen 12 jeweils eine Fahrebene 27 ausbilden, entlang welcher die Stückgutaufnahmevorrichtung bewegt wird.

Wird andererseits eine spezielle Hebevorrichtung eingesetzt, kann die Anzahl der Stückgutaufnahmevorrichtungen 7 ebenso geringer sein als die Anzahl an Fahrebenen 27. Dabei können die Stückgutaufnahmevorrichtungen 7 zwischen den Fahrebenen 27 umgesetzt werden.

Eine solche Hebevorrichtung ist beispielweise aus der WO 2012/106744 A1 oder WO 2012/106745 A1 bekannt.

Die in den Fig. 1 bis 3 gezeigte Stückgut-Manipulationseinheit 2 ist zwischen einander gegenüber liegenden Stirnseiten der Lagerregale 1 angeordnet und umfasst eine erste Stückgut-Hebevorrichtung 29a, eine erste Puffervorrichtung 30a, eine zweite Stückgut-Hebevorrichtung 29b und eine zweite Puffervorrichtung 30b.

Die Stückgut-Hebevorrichtungen 29a, 29b sind ortsfest aufgestellt und umfassen jeweils eine über einen Hubantrieb 31a, 31b heb- und senkbare Transportvorrichtung 32a, 32b. Der Hubantrieb 31a, 31b umfasst einen schematisch dargestellten Antriebsmotor 33a, 33b, welcher mit der Steuereinheit 18 verbunden ist. Bevorzugt sind die Transportvorrichtungen 32a, 32b jeweils auf einem Vertikalmast gelagert. Die Transportvorrichtungen 32a, 32b umfassen jeweils eine über einen Förderantrieb 34a, 34b antreibbare Fördervorrichtung mit einer parallel zur Regalgasse 3 verlaufenden Förderrichtung, wie durch die Pfeile in Fig. 1 angedeutet. Der Förderantrieb ist mit der Steuereinheit 18 verbunden. Die Fördervorrichtungen sind beispielweise ein Rollenförderer, Gurtförderer.

Die Puffervorrichtungen 30a, 30b umfassen jeweils in Richtung der Regalgasse 3 an einer Seite der Stückgut-Hebevorrichtung 29a, 29b und in zumindest einigen der Regalebenen (RE) erste Bereitstellvorrichtungen 35 für das Zwischenpuffern eines oder mehrerer einzulagernder Stückgüter 6 sowie in Richtung der Regalgasse 3 an der anderen Seite der zweiten Stückgut-Hebevorrichtung 29a, 29b und in zumindest einigen der Regalebenen (RE) zweite Bereitstellvorrichtungen 36 für das Zwischenpuffern eines oder mehrerer auszulagernder Stückgüter 6. Wie gezeigt, sind die ersten Bereitstellvorrichtungen 35 und zweiten Bereitstellvorrichtungen 36 jeweils in allen Regalebenen (RE) angeordnet. Die ersten Bereitstellvorrichtungen 35 bilden einen ersten Pufferbereich, einen so genannten Einlager-Pufferbereich und die zweiten Bereitstellvorrichtungen 36 bilden einen zweiten Pufferbereich, einen so genannten Auslager-Pufferbereich, wobei jeder Stückgut-Hebevorrichtung 29a, 29b der erste und zweite Pufferbereich zugeordnet sind. Die Bereitstellvorrichtungen 35, 36 weisen nach dieser Ausführung jeweils eine über einen Förderantrieb 37a, 37b, 38a, 38b antreibbare Fördervorrichtung, beispielweise Rollenförderer, auf. Die Bereitstellfördervorrichtungen 35, 36 bilden demnach motorisch angetriebene Bereitstellfördervorrichtungen.

Wie auch aus Fig. 1 ersichtlich, verlaufen die vorderen Längstraversen 12 entlang der Lagerregale 1 und der Stückgut-Manipulationseinheit 2 (Stückgut-Hebevorrichtung 29a, 29b und Puffervorrichtungen 30a, 30b) in Längsrichtung der Regalgasse 3 (x-Richtung) und in zumindest einigen der Regalebenen (RE), bevorzugt in jeder Regalebene (RE). Die Stückgutaufnahmevorrichtungen 7 können zum Einlagern von Stückgütern 6, 6-1, 6-2 und Auslagern von Stückgütern 6 entlang der Längstraversen 12 verfahren werden, wobei einerseits über deren Transportvorrichtung 28 auszulagernde Stückgüter 6, 6-1, 6-2 von den Lagerkanälen 15 entnommen und auf die Bereitstellvorrichtungen 36 der Puffervorrichtung 30a oder Puffervorrichtung 30b abgeben werden können, und andererseits über deren Transportvorrichtung 28 einzulagernde Stückgüter 6, 6-1, 6-2 von den Bereitstellvorrichtungen 35 der Puffervorrichtung 30a oder Puffervorrichtung 30b entnommen und auf Lagerkanäle 15 abgeben werden können.

Im Detail wird das Einlagern und Auslagern von Stückgütern 6, 6-1, 6-2 mittels der Fördertechniken 4, 5, der Stückgut-Manipulationseinheit 2 und der Stückgutaufnahmevorrichtungen 7 in der WO 2013/090970 A2 beschreiben und wird zum Gegenstand dieser Offenbarung gemacht.

Die Fördertechniken 4, 5 sind aus Gründen der besseren Übersicht in Fig. 1 nur abschnittsweise dargestellt. Die Fördertechnik 4 zum Antransport von Stückgütern 6, 6-1, 6-2 zur Stückgut-Hebevorrichtung 29a, 29b und die Fördertechnik 5 zum Abtransport von Stückgütern 6, 6-1, 6-2 von der Stückgut-Hebevorrichtung 29a, 29b verlaufen parallel zur Regalgasse 3 unterhalb der Lageregale 1 und bilden eine Fördertechnikebene (FE) aus.

Die heb- und senkbare Transportvorrichtung 32a, 32b kann auf Höhe der Fördertechnikebene (FE) zwischen die einander gegenüber liegenden Fördertechniken 4, 5 und auf Höhe der Regalebenen (RE) zwischen die einander gegenüber liegenden Bereitstellvorrichtungen 35, 36 positioniert werden, um einzulagernde/auszulagernde Stückgüter 6, 6-1, 6-2 zwischen der Transportvorrichtung 32a, 32b und der jeweiligen Fördertechnik 4, 5 sowie zwischen der Transportvorrichtung 32a, 32b und der jeweiligen Bereitstellvorrichtung 35, 36 der ersten/zweiten Puffervorrichtung 30a, 30b zu fördern.

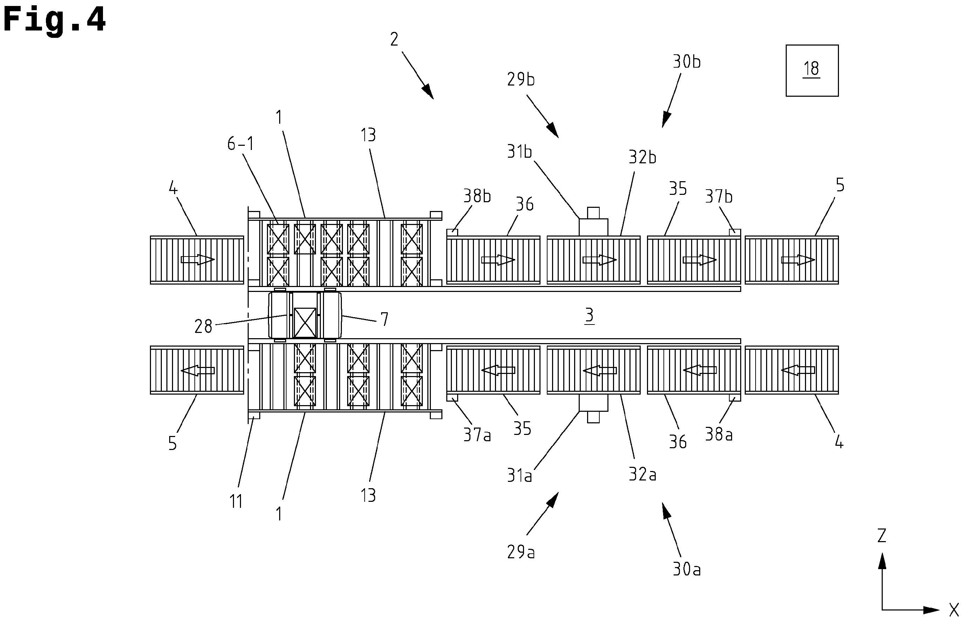

Nach einer anderen Ausführung, wie in Fig. 4 gezeigt, ist die oben beschriebene Stückgut-Manipulationseinheit 2 stirnseitig vor den Lagerregalen 1 angeordnet. Die vorderen Längstraversen 12 verlaufen wiederum entlang der Lagerregale 1 und der Stückgut-Manipulationseinheit 2 (Stückgut-Hebevorrichtung 29a, 29b und Puffervorrichtungen 30a, 30b) in Längsrichtung der Regalgasse 3 (x-Richtung) und in zumindest einigen der Regalebenen (RE), bevorzugt in jeder Regalebene (RE). Das Einlagern und Auslagern von Stückgütern 6, 6-1, 6-2 kann auf oben beschriebene Weise erfolgen.

Auch können die oben beschriebenen Stückgut-Manipulationseinheiten 2 gemäß den Fig. 1 und 4, daher mit der in den Lagerregalen 1 integriert oder stirnseitig vor den Lagerregalen 1 angeordneten Stückgut-Manipulationseinheit 2, auch jeweils bloß eine einzige Stückgut-Hebevorrichtung 29a und eine einzige Puffervorrichtung 30a aufweisen, wie dies jedoch nicht weiter dargestellt ist.

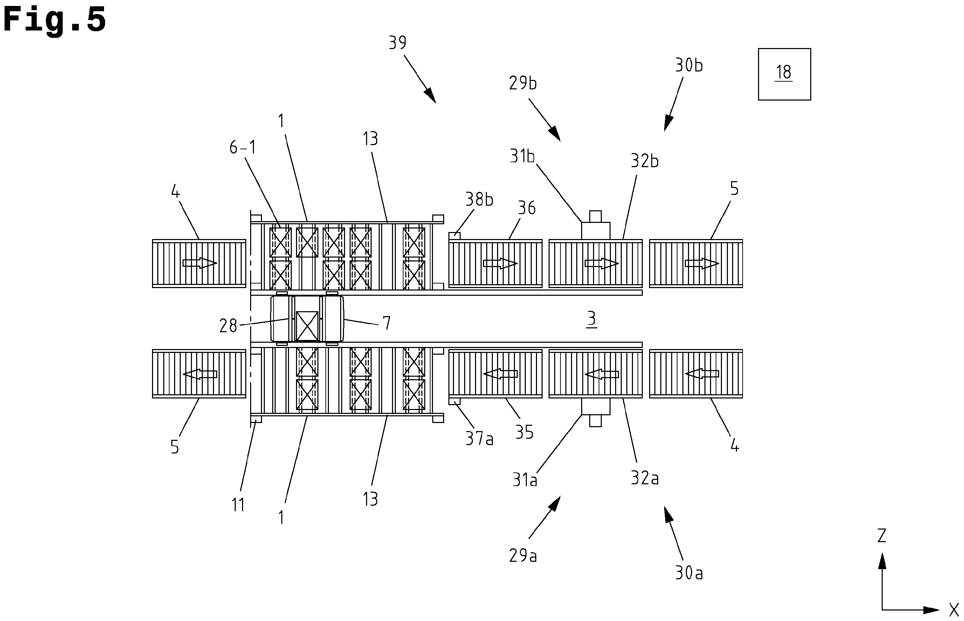

Gemäß einer Ausführung nach Fig. 5, ist die Stückgut-Manipulationseinheit 39 stirnseitig vor den Lagerregalen 1 angeordnet und umfasst die erste Stückgut-Hebevorrichtung 29a, die erste Puffervorrichtung 30a, die zweite Stückgut-Hebevorrichtung 29b und die zweite Puffervorrichtung 30b. Die ersten Bereitstellvorrichtungen 35 bilden einen ersten Pufferbereich, einen so genannten Einlager-Pufferbereich und die zweiten Bereitstellvorrichtungen 36 bilden einen zweiten Pufferbereich, einen so genannten Auslager-Pufferbereich. Die erste Puffervorrichtung 30a und zweite Puffervorrichtung 30b umfassen nach dieser Ausführung jeweils in Richtung der Regalgasse 3 ausschließlich an einer der Seiten der ersten / zweiten Stückgut-Hebevorrichtung 29a, 29b und in zumindest einigen der Regalebenen (RE) die Bereitstellvorrichtungen 35, 36 für das Zwischenpuffern eines oder mehrerer einzulagernder und auszulagernder Stückgüter 6, 6-1, 6-2. Natürlich ist es auch nach dieser Ausführung möglich, dass die Stückgut-Manipulations-einheit 39 in den Lagerregalen 1 integriert angeordnet ist.

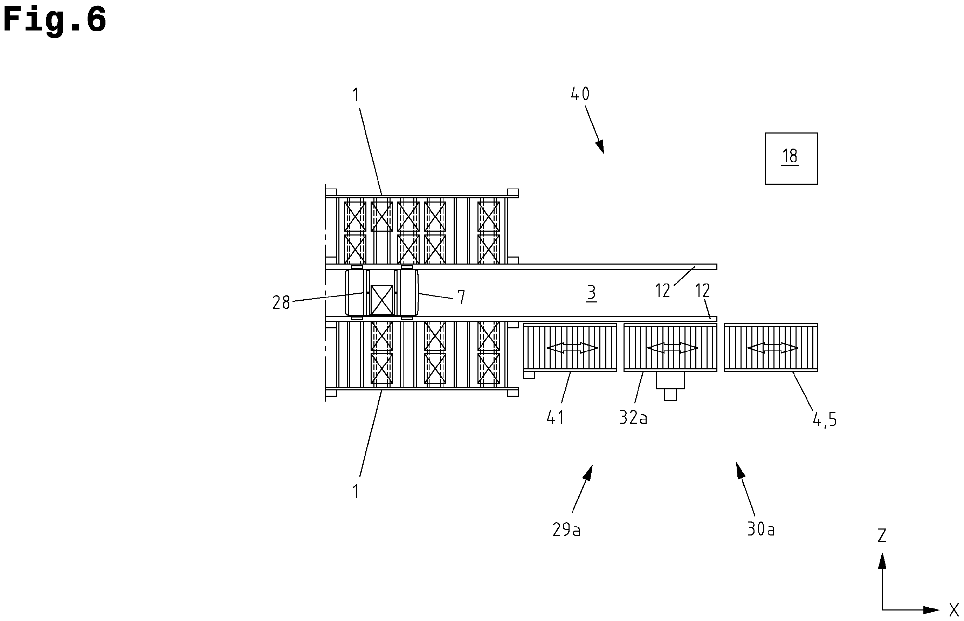

In Fig. 6 ist eine Ausführung gezeigt, bei der die Stückgut-Manipulationseinheit 40 stirnseitig vor den Lagerregalen 1 angeordnet ist. Diese umfasst die erste Stückgut-Hebevorrichtung 29a und die erste Puffervorrichtung 30a. Die Puffervorrichtung 30a umfasst in Richtung der Regalgasse 3 an einer einzigen Seiten der Stückgut-Hebevorrichtung 29a und in zumindest einigen der Regalebenen (RE) angeordnete Bereitstellvorrichtungen 41 für das Zwischenpuffern eines oder mehrerer einzulagernder und/oder auszulagernder Stückgüter 6, 6-1, 6-2. Dabei sei noch erwähnt, dass im Gegensatz zu den zuvor beschriebenen Ausführungsformen bei den hier eingesetzten Bereitstellvorrichtungen 41 in jeder Regalebene (RE) auch ein Reversierbetrieb vorgesehen sein kann. Umfassen die Bereitstellvorrichtungen 41 Fördervorrichtungen, können letztere die Förderrichtungen reversieren, wie mit dem Doppelpfeil angedeutet. Natürlich ist es auch nach dieser Ausführung möglich, dass die Stückgut-Manipulationseinheit 40 in den Lagerregalen 1 integriert angeordnet ist.

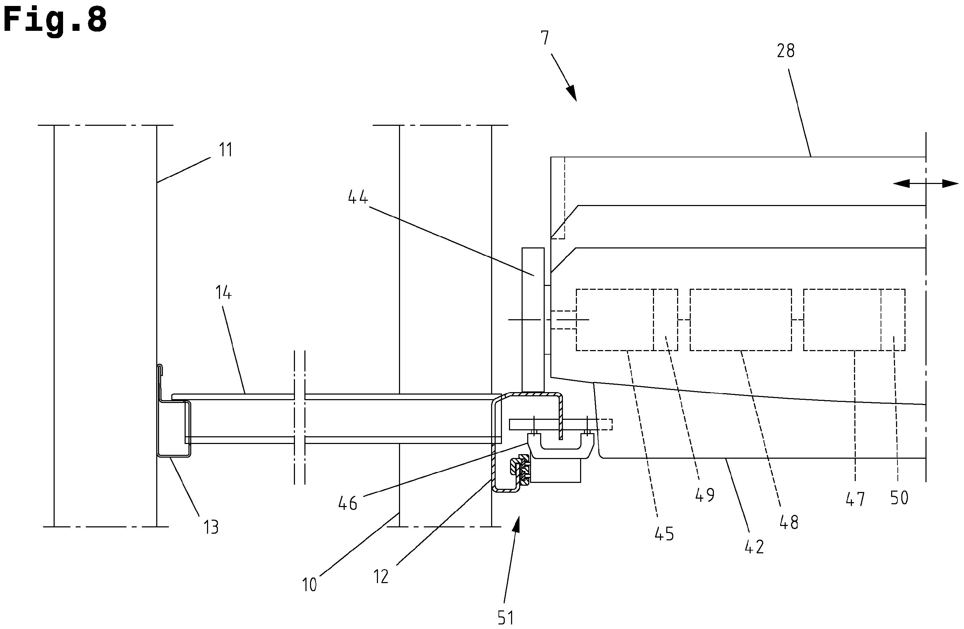

In den Fig. 7 und 8 ist noch eine mögliche Ausgestaltung der Stückgutaufnahmevorrichtung 7 gezeigt, welches als Einebenenregalbediengerät ausgebildet ist.

Die Stückgutaufnahmevorrichtung 7 weist, wie auch im Zusammenhang mit den vorhergehenden Fig. ersichtlich, einen Tragrahmen 42, eine Aufnahmeplattform 43, Laufräder 44, einen Fahrantrieb mit zumindest einem Antriebsmotor 45 zum Antrieb mindestens eines Laufrades 44, eine Führungsvorrichtung 46 mit Seitenführungsrädern, einen Stellantrieb mit zumindest einem Antriebsmotor 47 zum Ausfahren / Einfahren der Transportvorrichtung 28, eine Steuerelektronik 48 sowie die Transportvorrichtung 28, beispielweise zur Einlagerung und Auslagerung von Stückgütern 6, 6-1, 6-2 in ein bzw. aus einem Lagerregal 1 auf.

Die Erfassung der Fahrposition der Stückgutaufnahmevorrichtung 7 in x-Richtung kann über eine geeignete Sensorik erfolgen. Vorzugsweise ist ein Sensor 49 vorgesehen, welcher durch einen Drehgeber gebildet und am Antriebsmotor 45 angeordnet ist. Die Erfassung des Ausfahrweges der Transportvorrichtung 28 in z-Richtung kann ebenso über eine geeignete Sensorik erfolgen. Vorzugsweise ist ein Sensor 50 vorgesehen, welcher durch einen Drehgeber gebildet und am Antriebsmotor 47 angeordnet ist.

Wie in Fig. 8 gezeigt, kann die Energie- und/oder Datenversorgung der Stückgutaufnahmevorrichtung 7, insbesondere der Antriebsmotoren 45, 47 und der Steuerelektronik 48 über eine Schleifleitungsanordnung 51 erfolgen, welche je Fahrebene 27 an je einer der vorderen Längstraversen 12 (Führungsschienen) befestigt ist und sich über die gesamte Länge der Längstraverse 12 erstreckt. Die Stückgutaufnahmevorrichtung 7 umfasst ihrerseits Stromabnehmer und kontaktiert damit Schleifleitungen der Schleifleitungsanordnung 51 zur Energie- und/oder Datenversorgung.

Die Transportvorrichtung 28 (Lastaufnahmevorrichtung), wie sie in Fig. 7 näher dargestellt ist, kann parallel zueinander auf dem Tragrahmen 42 angeordnete und aus einer Ausgangsstellung (Fig. 9a; Fig. 11a) nach beiden Richtung synchron ausfahrbare Teleskopiereinheiten 52 umfassen, sodass in die zu beiden Seiten der Stückgutaufnahmevorrichtung 7 angeordneten Lagerregale 1 Stückgüter 6, 6-1, 6-2 eingelagert bzw. Stückgüter 6, 6-1, 6-2 ausgelagert werden können. Der Ausfahrweg bzw. Ausfahrlänge der Transportvorrichtung 28 bzw. Teleskopiereinheit(en) 52 relativ gegenüber der Stückgutaufnahmevorrichtung 7, daher die Länge der Transportvorrichtung 28 bzw. Teleskopiereinheit(en) 52 welche an der Stückgutaufnahmevorrichtung 7 in z-Richtung vorragt, beträgt nach gezeigter Ausführung weniger als 1500 mm.

Die Teleskopiereinheiten 52 weisen jeweils einen Grundrahmen 53 und relativ gegenüber dem Grundrahmen 53 horizontal in einer Richtung (z-Richtung) ein- bzw. ausfahrbare Schlitten 54, 55 auf. Die Teleskopiereinheiten 52 bilden Teleskoparme. Der erste Schlitten 54 ist über eine Führungsanordnung 56 am Grundrahmen 53 verschiebbar gelagert und der zweite Schlitten 55 ist über eine Führungsanordnung 57 am ersten Schlitten 54 verschiebbar gelagert. Der erste Schlitten 54 kann mit Hilfe einer schematisch dargestellten Antriebsvorrichtung 58 relativ gegenüber dem Grundrahmen 53, beispielweise einer Zahnriemen- und Zahnleistenanordnung gegenüber dem Grundrahmen 53 bewegt werden. Andererseits ist auch eine Ketten- und Zahnleistenanordnung möglich. Das endlose Zugmittel (Zahnriemen oder Kette) ist an einen (in Fig. 8 schematisch dargestellten) elektrischen Antriebsmotor 47 gekuppelt. Bevorzugt sind die Zahnriemen für die beiden ersten Schlitten 54 über eine gemeinsame Antriebswelle 59 miteinander gekoppelt. Auch sind getrennte Antriebsvorrichtungen 58 möglich. Die Teleskopiereinheit 52 umfasst demnach ausschließlich einen ersten Schlitten 54 und einen zweiten Schlitten 55. Die Teleskopiereinheit(en) 52, insbesondere der Grundrahmen 53, der erste Schlitten 54 und der zweite Schlitten 55 haben nach gezeigter Ausführung eine Längenabmessung von weniger als 1000 mm, beispielweise 990 mm.

Wie in Fig. 7 weiters ersichtlich, ist ein erster Riemen 60 um eine am ersten Schlitten 54 gelagerte (vordere) erste Rolle 61 umgelenkt und mit seinem ersten Ende am Grundrahmen 53 und mit seinem zweiten Ende am zweiten Schlitten 55 befestigt. Ein zweiter Riemen 62 ist um eine am ersten Schlitten 54 gelagerte (hintere) zweite Rolle 63 umgelenkt und mit seinem ersten Ende am Grundrahmen 53 und mit seinem zweiten Ende am zweiten Schlitten 55 befestigt. Wird der erste Schlitten 54 durch die Antriebsvorrichtung 58 bewegt, so wird auch der zweite Schlitten 55 über die Riemen 60, 62 mitbewegt, also entweder ein- bzw. ausgefahren.

Die zweiten Schlitten 55 umfassen jeweils Transportorgane 64, 65, 66 zum Transport von Stückgütern 6, 6-1, 6-2 zwischen dem Lagerkanal 15 und der Stückgutaufnahmevorrichtung 7. Es wird zwischen äußeren Transportorganen 64, 65 und inneren Transportorganen 66 unterschieden.

Die äußeren Transportorgane 64, 65 sind in den gegenüber liegenden Endbereichen des zweiten Schlittens 55 angeordnet, wobei jedes Transportorgan 64, 65 (Mitnahmeorgan) mit einem elektrischen Antriebsmotor 67 gekuppelt und über diesen zwischen einer Ausgangsstellung und Betätigungsstellung bewegbar ist. In der Ausgangsstellung sind die äußeren Transportorgane 64, 65 aus einem Transportweg für die Stückgüter 6, 6-1, 6-2 heraus bewegt, sodass das Stückgut 6, 6-1, 6-2 die Transportorgane 64, 65 passieren kann, und in der Betätigungsstellung sind die Transportorgane 64, 65 in den Transportweg für die Stückgüter 6, 6-1, 6-2 hinein bewegt, sodass die jeweiligen Transportorgane 64, 65 das Stückgut 6, 6-1, 6-2 formschlüssig hintergreifen.

Das innere Transportorgan 66 ist am zweiten Schlitten 55 mittig zwischen den äußeren Transportorganen 64, 65 angeordnet, wobei das innere Transportorgan 66 (Mitnahmeorgan) mit einem elektrischen Antriebsmotor 67 gekuppelt und über diesen zwischen einer Ausgangsstellung und Betätigungsstellung bewegbar ist. In der Ausgangsstellung ist das innere Transportorgan 66 aus einem Transportweg für die Stückgüter 6, 6-1, 6-2 heraus bewegt, sodass das Stückgut 6, 6-1, 6-2 das innere Transportorgan 66 passieren kann, und in der Betätigungsstellung ist das innere Transportorgan 64, 65 in den Transportweg für die Stückgüter 6, 6-1, 6-2 hinein bewegt, sodass die Transportorgane 66 das Stückgut 6, 6-1, 6-2 formschlüssig hintergreifen.

Auch wenn in einer bevorzugten Ausführung jeder zweite Schlitten 55 die Transportorgane 64, 65, 66 umfasst, welche paarweise zusammenwirken, wäre es auch denkbar, dass nur einer der zweiten Schlitten 55 mit den Transportorganen 64, 65, 66 ausgestattet ist. Auch kann die Transportvorrichtung 28 nur eine einzige Teleskopeinheit 52 aufweisen, wie dies jedoch nicht weiters dargestellt ist.

Darüber hinaus erweist es sich auch von Vorteil, wenn die Teleskopiereinheiten 52 auch über einen (nicht dargestellten) Stellantrieb relativ zueinander und in einer x-Richtung verstellbar am Tragrahmen 42 gelagert sind. Auf diese Weise kann ein Abstand zwischen den Teleskopiereinheiten 52 variabel und auf die jeweiligen Breitenabmessungen der Stückgüter 6, 6-1, 6-2 eingestellt werden. Andererseits kann die Abstandsverstellung zwischen den Teleskopiereinheiten 52 auch nur der Ausrichtung (Zentrierung) eines Stückgutes 6, 6-1, 6-2, wenn sich dieses auf der Stückgutaufnahmevorrichtung 7 befindet, dienen. Der Aufbau eines solchen Stellantriebes für die Abstandverstellung und Teleskopierbewegung sind im Detail in der US 6,923,622 B2 beschrieben und ist Gegenstand dieser Offenbarung.

Der Antriebsmotor 45 für den Fahrantrieb, der Antriebsmotor 47 für den Stellantrieb sind an die Steuerelektronik 48 der Stückgutaufnahmevorrichtung 7 angeschlossen, wobei die Steuerelektronik 48 mit der Steuereinheit 18 verbunden ist, um von ihr Fahrbefehle, Ein- und/oder Auslagerbefehle bzw. Steuersignale zu erhalten.

Wie in Fig. 7 auch ersichtlich, kann die Aufnahmeplattform durch in z-Richtung verlaufende Stückgutauflagen 43 gebildet sein. Ist eine Abstandsverstellung zwischen den Teleskopiereinheiten 52 vorgesehen, so sind auch die Stückgutauflagen 43 relativ zueinander und in einer x-Richtung verstellbar am Tragrahmen 42 gelagert.

Wie nicht weiters dargestellt, kann zwischen den Stückgutauflagen 43 zusätzlich eine dritte Stückgutauflage vorgesehen werden, welche das Stückgut 6, 6-1, 6-2 zusätzlich von unten unterstützen kann, wenn sich dieses auf der Stückgutaufnahmevorrichtung 7 befindet. Damit wird ein sicherer Transport auch von denjenigen Stückgütern 6, 6-1, 6-2 erreicht, welche eine geringe Formstabilität haben oder von "minderwertigerer" Verpackungsqualität sind. Es besteht aber zunehmend das Bestreben nach kostengünstigem Verpackungsmaterial, womit eine schlechtere Verpackungsqualität einhergeht.

Andererseits ist es auch in einer nicht gezeigten Ausführung möglich, dass die Aufnahmeplattform eine motorisierte Fördervorrichtung umfasst, welche eine parallel zur z-Richtung verlaufende Förderrichtung aufweist. Die Fördervorrichtung ist beispielweise ein Gurtförderer oder Rollenförderer, welche im Wesentlichen mit der Stellgeschwindigkeit der Teleskopeinheiten synchronisiert betrieben wird.

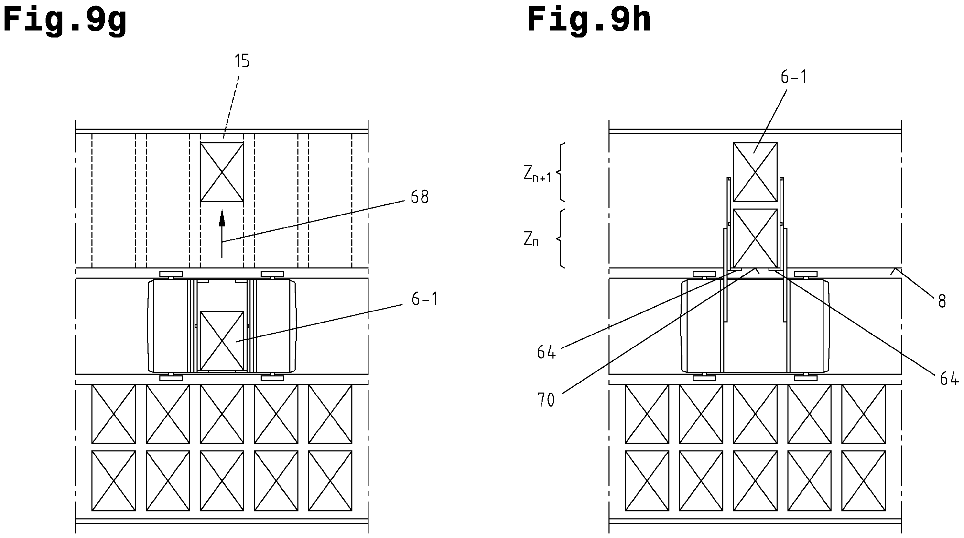

In den Fig. 9a-9h ist der Verfahrensablauf zum Einlagern von Stückgütern 6-1, welche jeweils eine erste Längenabmessung 19 aufweisen, in zumindest einen von mehreren Lagerkanälen 15 anhand eines Sequenzablaufes gezeigt. Aus Gründen der besseren Übersicht sind die Lagerkanäle 15 nur in den Fig. 9a, 9f, 9g und dort durch strichlierte Begrenzungslinien angedeutet.

Die Einlagervorgänge basieren auf Einlageraufträgen, welche elektronisch erfasst werden, beispielweise an einer Eingabevorrichtung, beispielweise einem Computer. Die Einlageraufträge werden fortlaufend an die Steuereinheit 18 übermittelt, die ihrerseits die Steuerung der Fördertechniken 4, 5, Stückgutaufnahmevorrichtung(en) 7 und Transportvorrichtung(en) 28 koordiniert.

Die Steuereinheit 18 bestimmt zu einem Einlagerauftrag den Lagerkanal 15, in welchen die Stückgüter 6-1 eingelagert werden sollen. Umfasst der Einlagerauftrag mehr Stückgüter 6-1 als in einem Lagerkanal 15 aufgenommen werden können, so wird von der Steuereinheit 15 eine entsprechende Anzahl an Lagerkanälen 15 bestimmt, in welchen nacheinander die Stückgüter 6-1 eingelagert werden.

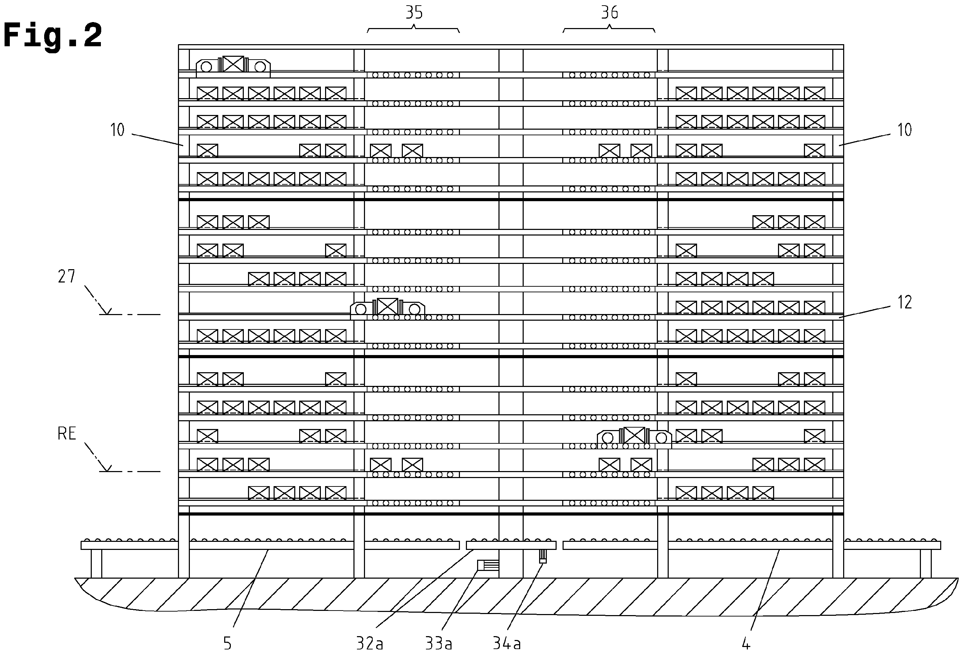

Die Stückgüter 6-1 werden auf einer Bereitstellvorrichtung 35 bereitgestellt. Die Stückgutaufnahmevorrichtung 7 holt die Stückgüter 6-1 nacheinander von der Bereitstellvorrichtung 35 ab, um diese danach in einem von der Steuereinheit 18 festgelegten Lagerkanal 15 einzulagern. Dies ist in Fig. 2 beispielhaft für die siebente Regalebene von unten dargestellt.

Die Stückgutaufnahmevorrichtung 7 übernimmt das erste Stückgut 6-1 von der Bereitstellvorrichtung 35 auf die Aufnahmeplattform 43 und verfährt danach in der x-Richtung zum festgelegten Lagerkanal 15, in welchen das erste Stückgut 6-1 eingelagert werden soll. Wie man auch gut erkennen kann, ist die Stückgutaufnahmevorrichtung 7 und Aufnahmeplattform 43 in der Breite 22 derart dimensioniert, dass auf ihr bloß ein einziges Stückgut 6-1, welches eine erste Längenabmessung 19 aufweist, aufgenommen werden kann. Das Stückgut 6-1 kann ausschließlich zwischen den äußeren Transportorganen 64, 65 aufgenommen werden, nicht jedoch zwischen einem der äußeren Transportorgane 64, 65 und dem inneren Transportorgan 66.

Fig. 9a zeigt die Stückgutaufnahmevorrichtung 7, welche gegenüber dem festgelegten Lagerkanal 15 positioniert wurde. Das erste Stückgut 6-1 ist gegen die äußeren Transportorgane 64, welche in dem in einer ersten Verstellrichtung (Ausfahrrichtung gemäß Pfeil 68) gegenüberliegenden Endbereich der Transportvorrichtung 28 bzw. zweiten Schlitten 55 angeordnet sind, positioniert. Es ist auch möglich, dass das erste Stückgut 6-1 vor der Verlagerungsbewegung in den Lagerkanal 15 durch einen Zentrierhub der Teleskopiereinheiten 52 gegenüber der Stückaufnahmevorrichtung 7 positioniert werden, sodass das erste Stückgut 6-1 in paralleler Ausrichtung zur Längsachse des Lagerkanales 15 gefördert werden kann.

Umfasst die Aufnahmeplattform 43 eine Fördervorrichtung, so kann das erste Stückgut 6-1 vor der Verlagerungsbewegung in den Lagerkanal 15 auf der Stückgutaufnahmevorrichtung 7 in einer Richtung parallel zur Längserstreckung des Lagerkanales 15 positioniert werden, in dem das erste Stückgut 6-1 über die Fördervorrichtung entgegen einer Einlagerrichtung bewegt und gegen die in die Betätigungsstellung bewegten Transportorgane 64 der Transportvorrichtung 28 bzw. Teleskopiereinheiten 52 positioniert wird, wobei sich die Transportvorrichtung 28 bzw. Teleskopiereinheiten 52 in der Ausgangsstellung befindet.

Wie in Fig. 9b ersichtlich, wird das erste Stückgut 6-1, welches an einer Tiefenposition Zₙ₊₁ abgestellt werden soll, mit den äußeren Transportorganen 64, welche in dem in einer ersten Verstellrichtung (Ausfahrrichtung der Transportvorrichtung gemäß Pfeil 68) gegenüberliegenden Endbereich der Transportvorrichtung 28 bzw. zweiten Schlitten 55 angeordnet sind, im Lagerkanal 15 bis zu einer Zwischenposition Z_{P} verlagert, insbesondere verschoben. In der Zwischenposition Z_{P} befindet sich das Stückgut 6-1 entweder vollständig im Lagerkanal 15 oder teilweise auf der Aufnahmeplattform 43 der Stückgutaufnahmevorrichtung 7 und teilweise im Lagerkanal 15 des Lagerregales 1.

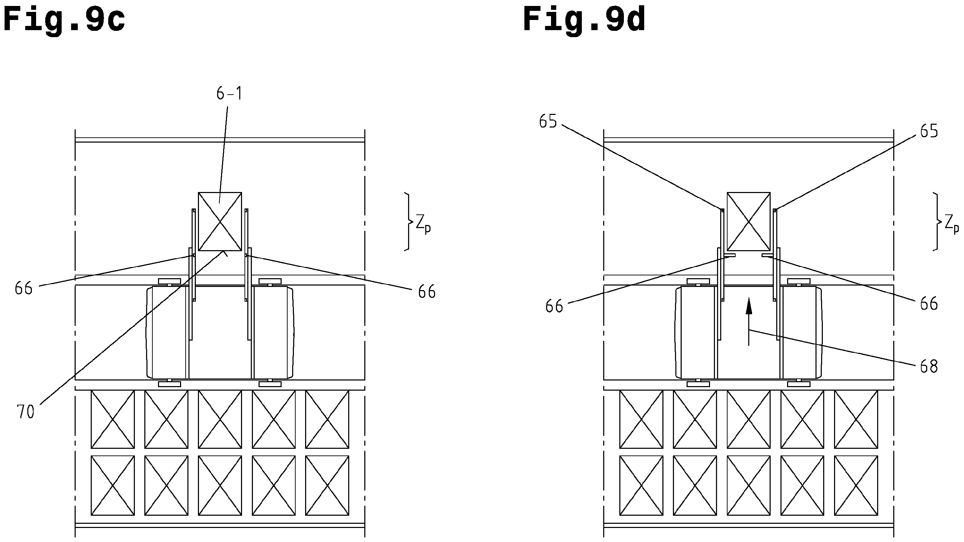

Danach wird die Transportvorrichtung 28 soweit in einer zweiten Verstellrichtung (Einfahrrichtung der Transportvorrichtung gemäß Pfeil 69) rückbewegt, dass die inneren Transportorgane 66 hinter einer der Stückgutaufnahmevorrichtung 7 zugewandten Seitenwand 70 des Stückgutes 6-1 positioniert sind, wie in Fig. 9c gezeigt.

Darauffolgend werden die inneren Transportorgane 66, welche sich gemäß Fig. 9c noch in der gegenüber dem Stückgut 6-1 zurückgezogenen Ausgangsstellung befinden, in die in Fig. 9d eingetragene Betätigungsstellung bewegt, sodass diese die Seitenwand 70 hintergreifen.

Anschließend wird die Transportvorrichtung 28 wiederum in einer ersten Verstellrichtung (Ausfahrrichtung der Transportvorrichtung gemäß Pfeil 68) vorbewegt, sodass die inneren Transportorgane 66 das erste Stückgut 6-1 im Lagerkanal 15 aus der Zwischenposition Z_{P} in die zweite Tiefenposition Zₙ₊₁ bewegen. Dies zeigt Fig. 9e.

Befindet sich nun das erste Stückgut 6-1 in der von der Steuereinheit 18 festgelegten zweiten Tiefenposition Zₙ₊₁, wird die Transportvorrichtung 28 wiederum in einer zweiten Verstellrichtung (Einfahrrichtung der Transportvorrichtung gemäß Pfeil 69) rückbewegt, sodass diese die Ausgangsstellung einnimmt, siehe Fig. 9f.

Danach wird die Stückgutaufnahmevorrichtung 7 neuerlich zur Bereitstellvorrichtung 35 verfahren, wo gegebenenfalls schon das zweite Stückgut 6-1, welches eine erste Längenabmessung 19 aufweist, bereitgestellt wurde. Die Stückgutaufnahmevorrichtung 7 übernimmt nun das zweite Stückgut 6-1 von der Bereitstellvorrichtung 35 auf die Aufnahmeplattform 43 und verfährt danach in der x-Richtung zum festgelegten Lagerkanal 15, in welchen bereits das erste Stückgut 6-1 eingelagert wurde.

Fig. 9g zeigt die Stückgutaufnahmevorrichtung 7, welche gegenüber dem festgelegten Lagerkanal 15 positioniert wurde. Das zweite Stückgut 6-1 ist gegen die äußeren Transportorgane 64, welche in dem in Verlagerungsrichtung (Einlagerrichtung gemäß Pfeil 68) gegenüberliegenden Endbereich der Transportvorrichtung 28 bzw. zweiten Schlitten 55 angeordnet sind, positioniert. Vor der Verlagerungsbewegung kann das zweite Stückgut 6-1 wiederum positioniert werden, wie oben für das erste Stückgut 6-1 beschrieben.

Darauffolgend wird die Transportvorrichtung 28 in einer ersten Verstellrichtung (Ausfahrrichtung der Transportvorrichtung gemäß Pfeil 68) bewegt, sodass die äußeren Transportorgane 64 das zweite Stückgut 6-1 von der Stückgutaufnahmevorrichtung 7 bzw. der Aufnahmeplattform 43 in den Lagerkanal 15 bis in eine erste Tiefenposition Zₙ bewegen, siehe Fig. 9h. Das zweite Stückgut 6-1 wird dabei soweit in Tiefenrichtung des Lagerkanales 15 bewegt, dass die Seitenwand 70 im Wesentlichen fluchtend mit einer Stirnkante des Lagerkanales 15 bzw. vorderen Längsseite 8 verläuft. Der Begriff "im Wesentlichen fluchtend" ist dabei so zu verstehen, dass das Stückgut 6-1 mit seiner Seitenwand 70 gegenüber der Stirnkante soweit in Richtung des Lagerkanales 15 versetzt sein kann, dass ein Versatzabstand weniger als 80 mm, beispielweise 20 mm beträgt.

Wie in Fig. 9h ersichtlich, sind das erste Stückgut 6-1 und zweite Stückgut 6-1 im Lagerkanal 15 mit gegenseitigem Abstand an den Tiefenpositionen Zₙ, Zₙ₊₁ abgestellt, sodass beim Auslagern nacheinander auf die einzelnen Stückgüter 6-1 zugegriffen werden kann.

Befinden sich das zweite Stückgut 6-1 im Lagerkanal 15, wird die in den Lagerkanal 15 ausgefahrene Transportvorrichtung 28, insbesondere die Teleskopeinheiten 52, wieder in eine Ausgangsstellung zurückbewegt.

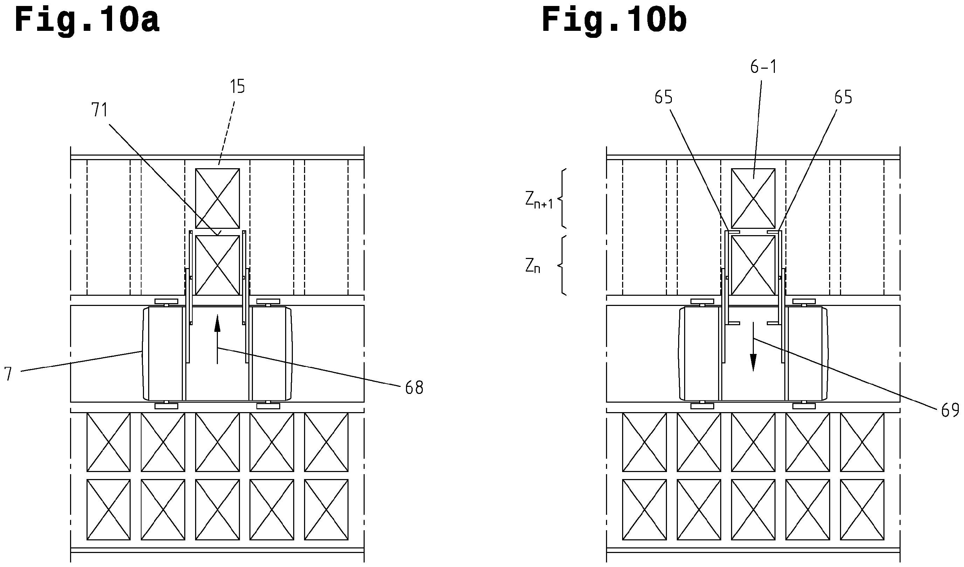

In den Fig. 10a und 10b ist der Verfahrensablauf zum Auslagern von Stückgütern 6-1, welche jeweils eine erste Längenabmessung 19 aufweisen, in zumindest einen von mehreren Lagerkanälen 15 anhand eines Sequenzablaufes gezeigt. Aus Gründen der besseren Übersicht sind die Lagerkanäle 15 durch strichlierte Begrenzungslinien angedeutet.

Ist ein Stückgut 6-1 zu einem Auslagerauftrag auszulagern, wird die Stückgutaufnahmevorrichtung 7 vor dem von der Steuereinheit 18 festgelegten Lagerkanal 15 positioniert. Beispielweise soll das zweite Stückgut 6-1 von der Tiefenposition Zₙ ausgelagert werden. Dabei wird die Transportvorrichtung 28 in einer ersten Verstellrichtung (Ausfahrrichtung der Transportvorrichtung gemäß Pfeil 68) bewegt, sodass die äußeren Transportorgane 65 hinter einer der Stückgutaufnahmevorrichtung 7 abgewandten Seitenwand 71 des zweiten Stückgutes 6-1, welches im Lagerkanal 15 an der ersten Tiefenposition Zₙ abgestellt wurde, positioniert sind. Anschließend werden die äußeren Transportorgane 65, welche sich noch in der gegenüber dem Stückgut 6-1 zurückgezogenen Ausgangsstellung befinden, in die Betätigungsstellung bewegt, sodass diese die Seitenwand 71 hintergreifen. Mit der Bewegung der Transportvorrichtung 28 in einer zweiten Verstellrichtung (Einfahrrichtung der Transportvorrichtung gemäß Pfeil 69) zurück in die Ausgangsstellung, wird das zweite Stückgut 6-1 von den in die Betätigungsstellung bewegten Transportorganen 65 auf die Stückgutaufnahmevorrichtung 7 verlagert. Danach wird das zweite Stückgut 6-1 zu einer Bereitstellvorrichtung 36 gefördert, um es anschließend über die Stückgut-Hebevorrichtung 29a, 29b und die Fördertechnik 5 aus dem Lagersystem auszulagern.

Auf gleiche Weise kann nachfolgend das erste Stückgut 6-1 von der Tiefenposition Zₙ₊₁ ausgelagert werden.

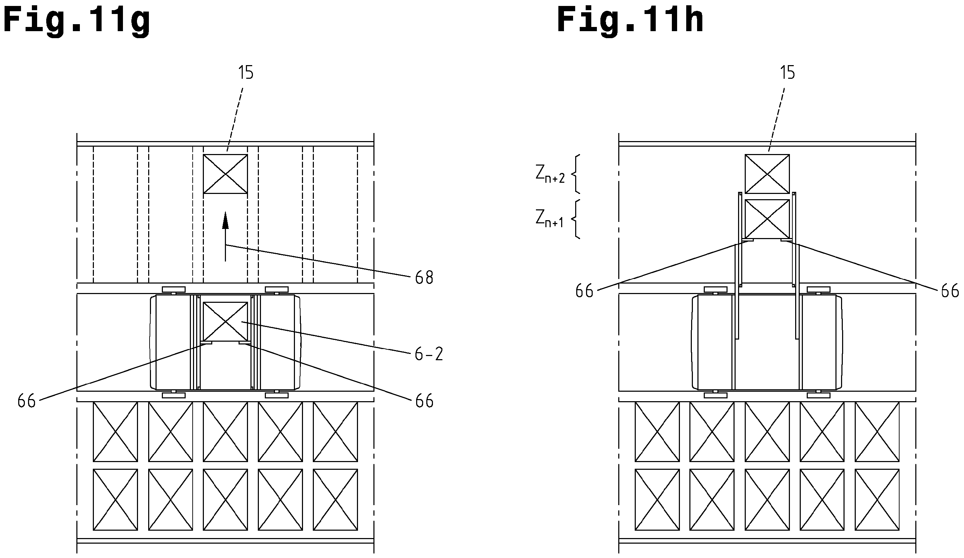

In den Fig. 11a-11i ist der Verfahrensablauf zum Einlagern von Stückgütern 6-2, welche jeweils eine zweite Längenabmessung 20 aufweisen, in zumindest einen von mehreren Lagerkanälen 15 anhand eines Sequenzablaufes gezeigt. Aus Gründen der besseren Übersicht sind die Lagerkanäle 15 nur in den Fig. 11a, 11f, 11g und dort durch strichlierte Begrenzungslinien angedeutet. Das Stückgut 6-2 kann entweder zwischen den äußeren Transportorganen 64 und inneren Transportorganen 66 oder, wie gezeigt, zwischen den äußeren Transportorganen 65 und inneren Transportorganen 66 platziert werden.

Die Einlagervorgänge basieren auf Einlageraufträgen, welche fortlaufend an die Steuereinheit 18 übermittelt werden, die ihrerseits die Steuerung der Fördertechniken 4, 5, Stückgutaufnahmevorrichtung(en) 7 und Transportvorrichtung(en) 28 koordiniert, wie oben beschrieben.

Die Stückgüter 6-2 werden auf einer Bereitstellvorrichtung 35 bereitgestellt. Die Stückgutaufnahmevorrichtung 7 holt die Stückgüter 6-2 nacheinander von der Bereitstellvorrichtung 35 ab, um diese danach in einem von der Steuereinheit 18 festgelegten Lagerkanal 15 einzulagern.

Die Stückgutaufnahmevorrichtung 7 übernimmt das erste Stückgut 6-2 von der Bereitstellvorrichtung 35 auf die Aufnahmeplattform 43 und verfährt danach in der x-Richtung zum festgelegten Lagerkanal 15, in welchen das erste Stückgut 6-2 eingelagert werden soll. Die Stückgutaufnahmevorrichtung 7 und Aufnahmeplattform 43 sind in der Breite 22 derart dimensioniert, dass auf ihr zumindest ein Stückgut 6-2, welches eine zweite Längenabmessung 20 aufweist, aufgenommen werden kann.

Fig. 11a zeigt die Stückgutaufnahmevorrichtung 7, welche gegenüber dem festgelegten Lagerkanal 15 positioniert wurde. Das erste Stückgut 6-2 ist gegen die inneren Transportorgane 66 positioniert. Es ist auch möglich, dass das erste Stückgut 6-2 vor der Verlagerungsbewegung in den Lagerkanal 15 durch einen Zentrierhub der Teleskopiereinheiten 52 gegenüber der Stückaufnahmevorrichtung 7 positioniert wird, sodass das erste Stückgut 6-2 in paralleler Ausrichtung zur Längsachse des Lagerkanales 15 gefördert werden kann.

Umfasst die Aufnahmeplattform 43 eine Fördervorrichtung, so kann das erste Stückgut 6-2 vor der Verlagerungsbewegung in den Lagerkanal 15 auf der Stückgutaufnahmevorrichtung 7 in einer Richtung parallel zur Längserstreckung des Lagerkanales 15 positioniert werden, in dem das erste Stückgut 6-2 über die Fördervorrichtung entgegen einer Einlagerrichtung bewegt und gegen die in die Betätigungsstellung bewegten Transportorgane 66 der Transportvorrichtung 28 bzw. Teleskopiereinheiten 52 positioniert wird, wobei sich die Transportvorrichtung 28 bzw. Teleskopiereinheiten 52 in der Ausgangsstellung befindet.

Wie in Fig. 11b ersichtlich, wird das erste Stückgut 6-2, welches an einer Tiefenposition Zₙ₊₂ abgestellt werden soll, mit den inneren Transportorganen 66 im Lagerkanal 15 bis zu einer Zwischenposition Z_{P} verlagert, insbesondere verschoben. In der Zwischenposition Z_{P} befindet sich das Stückgut 6-2 entweder vollständig im Lagerkanal 15 oder teilweise auf der Aufnahmeplattform 43 der Stückgutaufnahmevorrichtung 7 und teilweise im Lagerkanal 15 des Lagerregales 1.

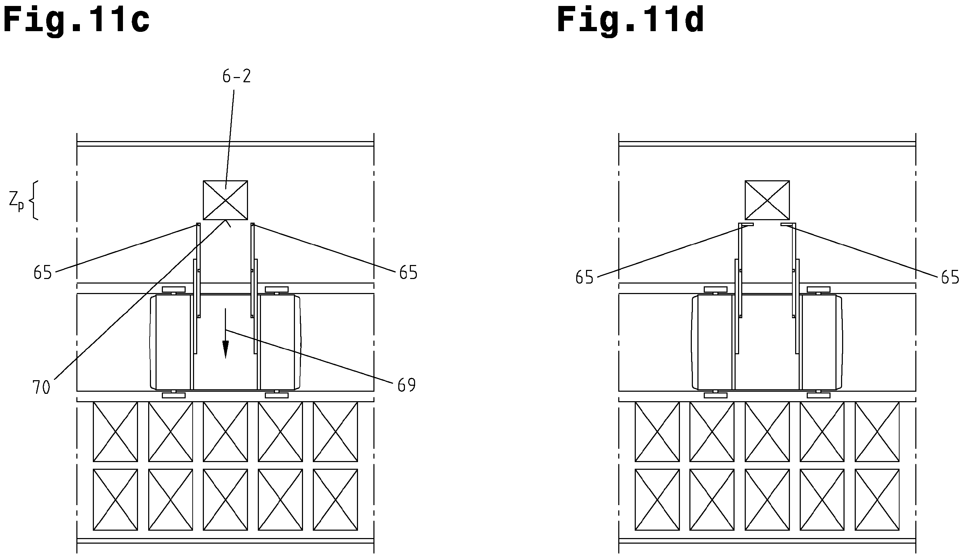

Danach wird die Transportvorrichtung 28 soweit in einer zweiten Verstellrichtung (Einfahrrichtung der Transportvorrichtung gemäß Pfeil 69) rückbewegt, dass die äußeren Transportorgane 65, welche in dem in einer zweiten Verstellrichtung (Einfahrrichtung der Transportvorrichtung gemäß Pfeil 69) gegenüberliegenden Endbereich der Transportvorrichtung 28 bzw. zweiten Schlitten 55 angeordnet sind, hinter einer der Stückgutaufnahmevorrichtung 7 zugewandten Seitenwand 70 des Stückgutes 6-2 positioniert sind, wie in Fig. 11c gezeigt.

Darauffolgend werden die äußeren Transportorgane 65, welche sich gemäß Fig. 11c noch in der gegenüber dem Stückgut 6-2 zurückgezogenen Ausgangsstellung befinden, in die in Fig. 11d eingetragene Betätigungsstellung bewegt, sodass diese die Seitenwand 70 hintergreifen.

Anschließend wird die Transportvorrichtung 28 wiederum in einer ersten Verstellrichtung (Ausfahrrichtung der Transportvorrichtung gemäß Pfeil 68) vorbewegt, sodass die äußeren Transportorgane 65 das erste Stückgut 6-2 im Lagerkanal 15 aus der Zwischenposition Z_{P} in die dritte Tiefenposition Zₙ₊₂ bewegen. Dies zeigt Fig. 11e.

Befindet sich nun das erste Stückgut 6-2 in der von der Steuereinheit 18 festgelegten dritten Tiefenposition Zₙ₊₂, wird die Transportvorrichtung 28 wiederum in einer zweiten Verstellrichtung (Einfahrrichtung der Transportvorrichtung gemäß Pfeil 69) rückbewegt, sodass diese die Ausgangsstellung einnimmt, siehe Fig. 11f.

Danach wird die Stückgutaufnahmevorrichtung 7 neuerlich zur Bereitstellvorrichtung 35 verfahren, wo gegebenenfalls schon das zweite Stückgut 6-2, welches eine zweite Längenabmessung 20 aufweist, bereitgestellt wurde. Die Stückgutaufnahmevorrichtung 7 übernimmt nun das zweite Stückgut 6-2 von der Bereitstellvorrichtung 35 auf die Aufnahmeplattform 43 und verfährt danach in der x-Richtung zum festgelegten Lagerkanal 15, in welchen bereits das erste Stückgut 6-2 eingelagert wurde.

Fig. 11g zeigt die Stückgutaufnahmevorrichtung 7, welche gegenüber dem festgelegten Lagerkanal 15 positioniert wurde. Das zweite Stückgut 6-2 ist gegen die inneren Transportorgane 66 positioniert. Vor der Verlagerungsbewegung kann das zweite Stückgut 6-1 wiederum positioniert werden, wie oben für das erste Stückgut 6-1 beschrieben.

Darauffolgend wird die Transportvorrichtung 28 in einer ersten Verstellrichtung (Ausfahrrichtung der Transportvorrichtung gemäß Pfeil 68) bewegt, sodass die inneren Transportorgane 66 das zweite Stückgut 6-2 von der Stückgutaufnahmevorrichtung 7 bzw. der Aufnahmeplattform 43 in den Lagerkanal 15 bis in eine zweite Tiefenposition Zₙ₊₁ bewegen, siehe Fig. 11h.

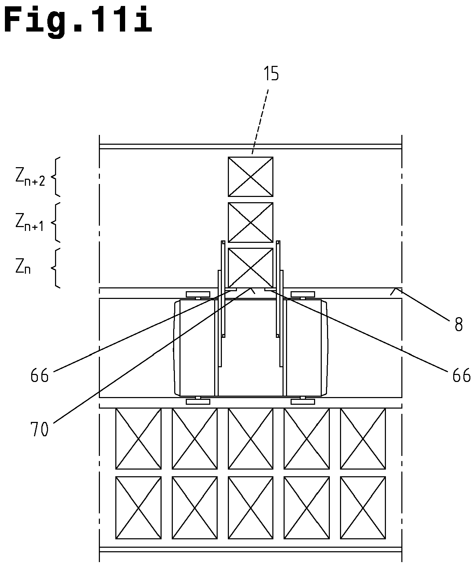

Auf gleiche Weise erfolgt die Einlagerung des dritten Stückgutes 6-2. Nach Positionierung der Stückgutaufnahmevorrichtung 7 vor dem Lagerkanal 15, wird die Transportvorrichtung 28 in einer ersten Verstellrichtung (Ausfahrrichtung der Transportvorrichtung gemäß Pfeil 68) bewegt, sodass die inneren Transportorgane 66 das dritte Stückgut 6-2 von der Stückgutaufnahmevorrichtung 7 bzw. der Aufnahmeplattform 43 in den Lagerkanal 15 bis in eine erste Tiefenposition Zₙ bewegen, siehe Fig. 11i. Das dritte Stückgut 6-2 wird dabei soweit in Tiefenrichtung des Lagerkanales 15 bewegt, dass die Seitenwand 70 im Wesentlichen fluchtend mit einer Stirnkante des Lagerkanales 15 bzw. vorderen Längsseite 8 verläuft, wie auch schon oben beschrieben.

Wie aus den Fig. 11h und Fig. 11i ersichtlich, sind sowohl das erste Stückgut 6-2 und zweite Stückgut 6-2 als auch das zweite Stückgut 6-2 und dritte Stückgut 6-2 im Lagerkanal 15 mit gegenseitigem Abstand an den Tiefenpositionen Zₙ₊₂, Zₙ₊₁, Zₙ abgestellt, sodass beim Auslagern nacheinander auf die einzelnen Stückgüter 6-2 zugegriffen werden kann.

Bei Ausführung nach Fig. 11a bis Fig. 11i wird das Stückgut 6-2 von den inneren Transportorganen 66 von der Stückgutaufnahmevorrichtung 7 in den Lagerkanal 15 entweder auf die Zwischenposition Z_{P} oder die endgültige Tiefenpositionen Zₙ₊₁, Zₙ bewegt.

Anders gestaltet sich der (nicht dargestellte) Einlagervorgang, wenn beispielweise das zweite Stückgut 6-2 von den äußeren Transportorganen 64, welche in dem in einer ersten Verstellrichtung (Ausfahrrichtung der Transportvorrichtung gemäß Pfeil 68) gegenüberliegenden Endbereich der Transportvorrichtung 28 bzw. zweiten Schlitten 55 angeordnet sind, von der Stückgutaufnahmevorrichtung 7 in den Lagerkanal 15 bewegt wird. In diesem Fall kann nämlich das zweite Stückgut 6-2, welches an einer Tiefenposition Zₙ₊₂ abgestellt werden soll, ebenso vorerst bis zu einer Zwischenposition Z_{P} verlagert, insbesondere verschoben werden. In der Zwischenposition Z_{P} befindet sich das Stückgut 6-2 entweder vollständig im Lagerkanal 15 oder teilweise auf der Aufnahmeplattform 43 der Stückgutaufnahmevorrichtung 7 und teilweise im Lagerkanal 15 des Lagerregales 1. Befindet sich das zweite Stückgut 6-2 in der Zwischenposition Z_{P} wird die Transportvorrichtung 28 soweit in einer zweiten Verstellrichtung (Einfahrrichtung der Transportvorrichtung gemäß Pfeil 69) rückbewegt, dass die inneren Transportorgane 66 oder die äußeren Transportorgane 65, welche in dem in einer zweiten Verstellrichtung (Einfahrrichtung der Transportvorrichtung gemäß Pfeil 69) gegenüberliegenden Endbereich der Transportvorrichtung 28 bzw. zweiten Schlitten 55 angeordnet sind, hinter einer der Stückgutaufnahmevorrichtung 7 zugewandten Seitenwand 70 des Stückgutes 6-2 positioniert sind. Darauffolgend werden die inneren Transportorgane 66 oder äußeren Transportorgane 65, welche sich noch in der gegenüber dem Stückgut 6-2 zurückgezogenen Ausgangsstellung befinden, in die Betätigungsstellung bewegt, sodass diese die Seitenwand 70 hintergreifen. Anschließend wird die Transportvorrichtung 28 wiederum in einer ersten Verstellrichtung (Ausfahrrichtung der Transportvorrichtung gemäß Pfeil 68) vorbewegt, sodass die inneren Transportorgane 65 oder äußeren Transportorgane 66 das zweite Stückgut 6-2 im Lagerkanal 15 aus der Zwischenposition Z_{P} in die zweite Tiefenposition Zₙ₊₁ bewegen.

Der Einlagervorgang des dritten Stückgut 6-2 kann sich auch derart gestalten, dass das dritte Stückgut 6-2 von den äußeren Transportorganen 64, welche in dem in einer ersten Verstellrichtung (Ausfahrrichtung der Transportvorrichtung gemäß Pfeil 68) gegenüberliegenden Endbereich der Transportvorrichtung 28 bzw. zweiten Schlitten 55 angeordnet sind, von der Stückgutaufnahmevorrichtung 7 in den Lagerkanal 15 bewegt wird. In diesem Fall können die äußeren Transportorgane 64 das dritte Stückgut 6-2 unmittelbar (daher ohne Zwischenposition Z_{P}) in die erste Tiefenposition Zₙ bewegen.

Es sei auch hingewiesen, dass in den Fig. 9a-9h und Fig. 11a-11i die Einlagerung der Stückgüter 6-1, 6-2 in das rechte Lagerregal 1 erläutert wurde. Erfolgt die Einlagerung der Stückgüter 6-1, 6-2 in das linke Lagerregal 1, so ist in der Bezeichnung anstatt dem ersten äußeren Transportorgan 64 das zweite äußere Transportorgan 65 zu verwenden. Ebenso verlaufen die erste Verstellrichtung 68 und zweite Verstellrichtung 69 jeweils in die entgegengesetzte Richtung. Außerdem wird ersichtlich, dass der Ausfahrweg der Transportvorrichtung 28 durch die hintere Längsseite 9 des Lagerregales 1 begrenzt ist.

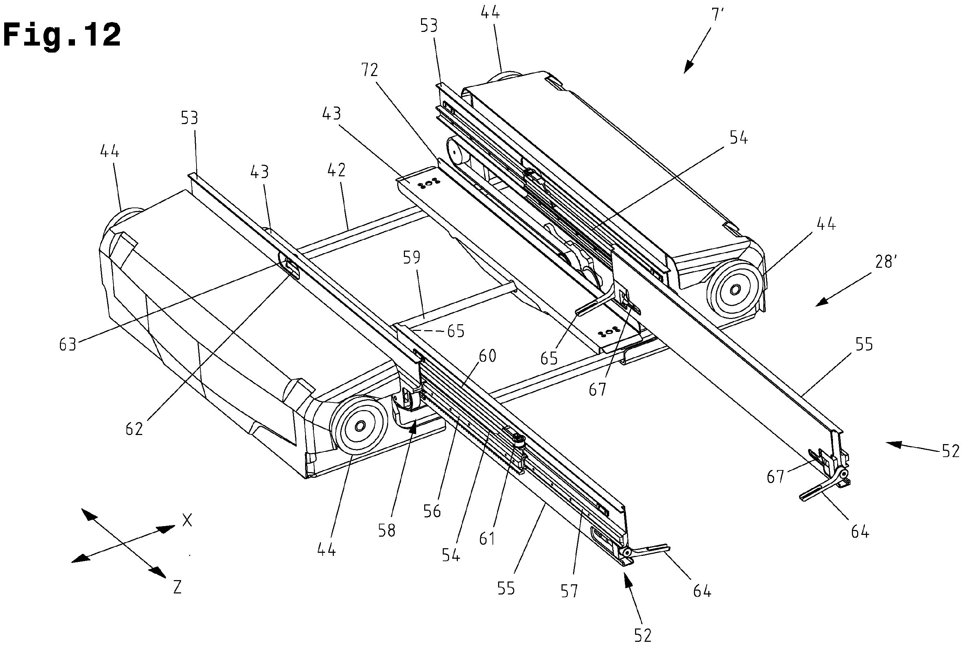

In der Fig. 12 ist eine weitere mögliche Ausgestaltung der Stückgutaufnahmevorrichtung 7' gezeigt, welches als Einebenenregalbediengerät ausgebildet ist.

Die Stückgutaufnahmevorrichtung 7' entspricht mit Ausnahme der Ausgestaltung der Transportvorrichtung 28' der oben ausführlich beschriebenen Stückgutaufnahmevorrichtung 7'. Um Wiederholungen zu vermeiden, wird vorwiegend auf die Transportvorrichtung 28', beispielweise zur Einlagerung und Auslagerung von Stückgütern 6, 6-1, 6-2 in ein bzw. aus einem Lagerregal 1 eingegangen.

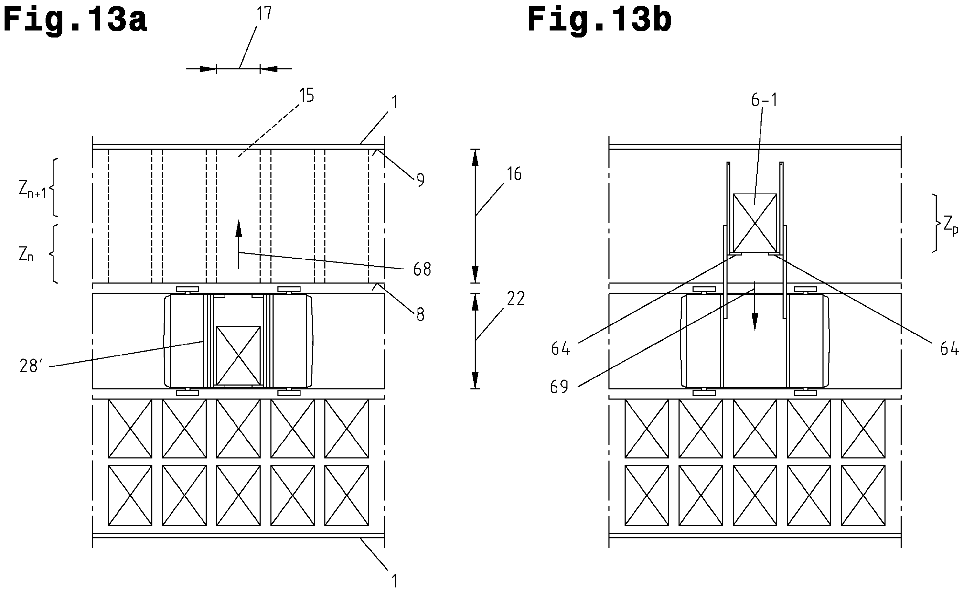

Die Transportvorrichtung 28' (Lastaufnahmevorrichtung) kann parallel zueinander auf dem Tragrahmen 42 angeordnete und aus einer Ausgangsstellung (Fig. 13a) nach beiden Richtung synchron ausfahrbare Teleskopiereinheiten 52 umfassen, sodass in die zu beiden Seiten der Stückgutaufnahmevorrichtung 7' angeordneten Lagerregale 1 Stückgüter 6, 6-1, 6-2 eingelagert bzw. Stückgüter 6, 6-1, 6-2 ausgelagert werden können. Der Ausfahrweg bzw. Ausfahrlänge der Transportvorrichtung 28' bzw. Teleskopiereinheit(en) 52 relativ gegenüber der Stückgutaufnahmevorrichtung 7', daher die Länge der Transportvorrichtung 28 bzw. Teleskopiereinheit(en) 52 welche an der Stückgutaufnahmevorrichtung 7 in z-Richtung vorragt, beträgt nach gezeigter Ausführung weniger als 1500 mm.

Die Teleskopiereinheiten 52 weisen jeweils einen Grundrahmen 53 und relativ gegenüber dem Grundrahmen 53 horizontal in einer Richtung (z-Richtung) ein- bzw. ausfahrbare Schlitten 54, 55 auf. Die Teleskopiereinheiten 52 bilden Teleskoparme. Der erste Schlitten 54 ist über eine Führungsanordnung 56 am Grundrahmen 53 verschiebbar gelagert und der zweite Schlitten 55 ist über eine Führungsanordnung 57 am ersten Schlitten 54 verschiebbar gelagert. Der erste Schlitten 54 kann mit Hilfe einer schematisch dargestellten Antriebsvorrichtung 58 relativ gegenüber dem Grundrahmen 53, beispielweise einer Zahnriemen- und Zahnleistenanordnung gegenüber dem Grundrahmen 53 bewegt werden. Andererseits ist auch eine Ketten- und Zahnleistenanordnung möglich. Das endlose Zugmittel (Zahnriemen oder Kette) ist an einen (in Fig. 8 schematisch dargestellten) elektrischen Antriebsmotor 47 gekuppelt. Bevorzugt sind die Zahnriemen für die beiden ersten Schlitten 54 über eine gemeinsame Antriebswelle 59 miteinander gekoppelt. Auch sind getrennte Antriebsvorrichtungen 58 möglich. Die Teleskopiereinheit 52 umfasst demnach ausschließlich einen ersten Schlitten 54 und einen zweiten Schlitten 55. Die Teleskopiereinheit(en) 52, insbesondere der Grundrahmen 53, der erste Schlitten 54 und der zweite Schlitten 55 haben nach gezeigter Ausführung eine Längenabmessung von weniger als 1000 mm, beispielweise 990 mm.

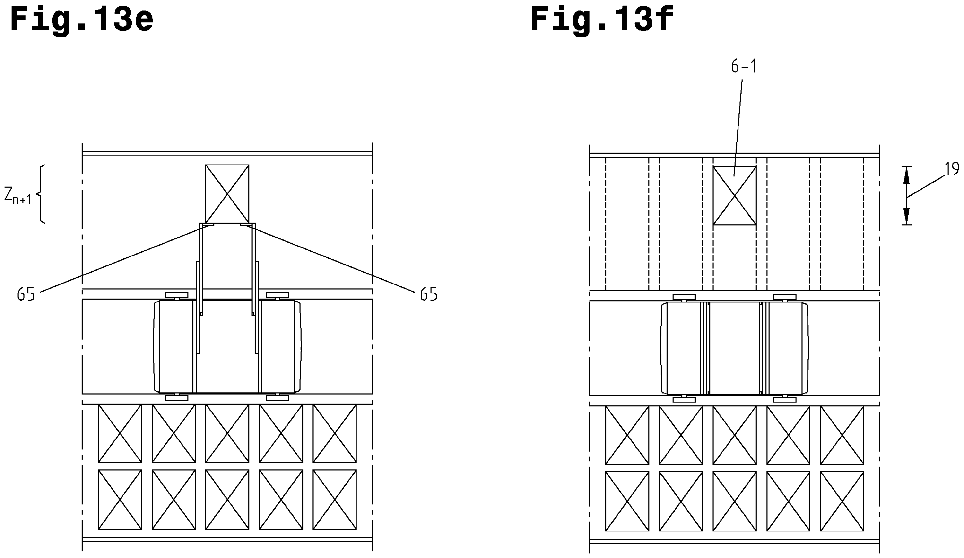

Die zweiten Schlitten 55 umfassen jeweils Transportorgane 64, 65 zum Transport von Stückgütern 6, 6-1, 6-2 zwischen dem Lagerkanal 15 und der Stückgutaufnahmevorrichtung 7'. Im Unterschied zu obiger Ausführung sind die inneren Transportorgane 66 nicht vorgesehen, sondern ausschließlich die äußeren Transportorgane 64, 65. Die äußeren Transportorgane 64, 65 sind in den gegenüber liegenden Endbereichen des zweiten Schlittens 55 angeordnet, wobei jedes Transportorgan 64, 65 (Mitnahmeorgan) mit einem elektrischen Antriebsmotor 67 gekuppelt und über diesen zwischen einer Ausgangsstellung und Betätigungsstellung bewegbar ist. In der Ausgangsstellung sind die äußeren Transportorgane 64, 65 aus einem Transportweg für die Stückgüter 6, 6-1, 6-2 heraus bewegt, sodass das Stückgut 6, 6-1, 6-2 die Transportorgane 64, 65 passieren kann, und in der Betätigungsstellung sind die Transportorgane 64, 65 in den Transportweg für die Stückgüter 6, 6-1, 6-2 hinein bewegt, sodass die jeweiligen Transportorgane 64, 65 das Stückgut 6, 6-1, 6-2 formschlüssig hintergreifen. Es wäre auch denkbar, dass die äußeren Transportorgane 64, 65 jeweils von den einander gegenüberliegenden Stirnenden des zweiten Schlittens 55 entfernt angeordnet sind, sodass eine Länge des zweiten Schlittens 55 größer ist als ein Abstand zwischen den äußeren Transportorganen 64, 65. Dadurch kann das Stückgut 6, 6-1, 6-2 während der Verlagerungsbewegung von der Stückgutaufnahmevorrichtung 7' bis in die Zwischenposition Z_{P} (Fig. 13b) bzw. endgültige Lagerposition Zₙ₊₁ (Fig. 13e) nicht bloß von den äußeren Transportorganen 64, 65, sondern auch durch die zweiten Schlitten 55 geführt werden.

Auch wenn in einer bevorzugten Ausführung jeder zweite Schlitten 55 die Transportorgane 64, 65 umfasst, welche paarweise zusammenwirken, wäre es auch denkbar, dass nur einer der zweiten Schlitten 55 mit den Transportorganen 64, 65 ausgestattet ist. Auch kann die Transportvorrichtung 28' nur eine einzige Teleskopeinheit 52 aufweisen, wie dies jedoch nicht weiters dargestellt ist.

Darüber hinaus erweist es sich auch von Vorteil, wenn die Teleskopiereinheiten 52 auch über einen (nicht dargestellten) Stellantrieb relativ zueinander und in einer x-Richtung verstellbar am Tragrahmen 42 gelagert sind. Auf diese Weise kann ein Abstand zwischen den Teleskopiereinheiten 52 variabel und auf die jeweiligen Breitenabmessungen der Stückgüter 6, 6-1, 6-2 eingestellt werden. Andererseits kann die Abstandsverstellung zwischen den Teleskopiereinheiten 52 auch nur der Ausrichtung (Zentrierung) eines Stückgutes 6, wenn sich dieses auf der Stückgutaufnahmevorrichtung 7' befindet, dienen.

Der Antriebsmotor 45 für den Fahrantrieb, der Antriebsmotor 47 für den Stellantrieb sind an die Steuerelektronik 48 der Stückgutaufnahmevorrichtung 7 angeschlossen, wobei die Steuerelektronik 48 mit der Steuereinheit 18 verbunden ist, um von ihr Fahrbefehle, Ein- und/oder Auslagerbefehle bzw. Steuersignale zu erhalten.

Wie in Fig. 12 auch ersichtlich, kann die Aufnahmeplattform durch in z-Richtung verlaufende Stückgutauflagen 43 gebildet sein. Ist eine Abstandsverstellung zwischen den Teleskopiereinheiten 52 vorgesehen, so sind auch die Stückgutauflagen 43 relativ zueinander und in einer x-Richtung verstellbar am Tragrahmen 42 gelagert.

Weisen die Stückgutauflagen 43 nach einer möglichen Ausführung jeweils eine in z-Richtung verlaufende Zentrierleiste 72 auf, so kann ein Abstand zwischen den Zentrierleisten 72 variabel und auf die jeweiligen Breitenabmessungen der Stückgüter 6, 6-1, 6-2 eingestellt werden. Auf diese Weise kann alternativ zu obiger Ausführung ein Stückgut 6, wenn sich dieses auf der Stückgutaufnahmevorrichtung 7' befindet, mittels der Zentrierleisten 72 ausgerichtet (zentriert) werden.

Wie nicht weiters dargestellt, kann zwischen den Stückgutauflagen 43 zusätzlich eine dritte Stückgutauflage vorgesehen werden, welche das Stückgut 6, 6-1, 6-2 zusätzlich von unten unterstützen kann, wenn sich dieses auf der Stückgutaufnahmevorrichtung 7' befindet, wie oben beschrieben.

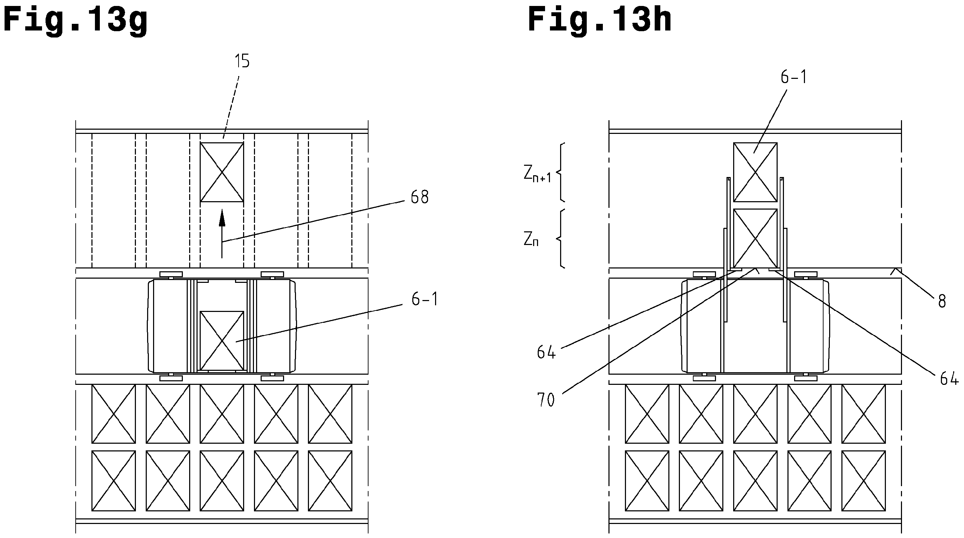

In den Fig. 13a-13h ist der Verfahrensablauf zum Einlagern von Stückgütern 6-1, welche jeweils eine erste Längenabmessung 19 aufweisen, in zumindest einen von mehreren Lagerkanälen 15 anhand eines Sequenzablaufes gezeigt. Aus Gründen der besseren Übersicht sind die Lagerkanäle 15 nur in den Fig. 13a, 13f, 13g und dort durch strichlierte Begrenzungslinien angedeutet. Es versteht sich, dass auch die Stückgüter 6-2, welche jeweils eine zweite Längenabmessung 20 aufweisen, auf nachfolgende Weise eingelagert werden können. Natürlich sind auch andere Längenabmessungen, als die Gesagten möglich. Das Stückgut 6 kann eine solche maximale Längenabmessung aufweisen, dass dieses "gerade noch" zwischen den äußeren Transportorganen 64, 65 aufgenommen werden kann.

Die Einlagervorgänge basieren auf Einlageraufträgen, welche elektronisch erfasst werden, beispielweise an einer Eingabevorrichtung, beispielweise einem Computer. Die Einlageraufträge werden fortlaufend an die Steuereinheit 18 übermittelt, die ihrerseits die Steuerung der Fördertechniken 4, 5, Stückgutaufnahmevorrichtung(en) 7' und Transportvorrichtung(en) 28' koordiniert.

Die Steuereinheit 18 bestimmt zu einem Einlagerauftrag den Lagerkanal 15, in welchen die Stückgüter 6-1 eingelagert werden sollen. Umfasst der Einlagerauftrag mehr Stückgüter 6-1 als in einem Lagerkanal 15 aufgenommen werden können, so wird von der Steuereinheit 15 eine entsprechende Anzahl an Lagerkanälen 15 bestimmt, in welchen nacheinander die Stückgüter 6-1 eingelagert werden.

Die Stückgüter 6-1 werden auf einer Bereitstellvorrichtung 35 bereitgestellt. Die Stückgutaufnahmevorrichtung 7' holt die Stückgüter 6-1 nacheinander von der Bereitstellvorrichtung 35 ab, um diese danach in einem von der Steuereinheit 18 festgelegten Lagerkanal 15 einzulagern. Dies ist in Fig. 2 beispielhaft für die siebente Regalebene von unten dargestellt.

Die Stückgutaufnahmevorrichtung 7' übernimmt das erste Stückgut 6-1 von der Bereitstellvorrichtung 35 auf die Aufnahmeplattform 43 und verfährt danach in der x-Richtung zum festgelegten Lagerkanal 15, in welchen das erste Stückgut 6-1 eingelagert werden soll. Wie man auch gut erkennen kann, ist die Stückgutaufnahmevorrichtung 7' und Aufnahmeplattform 43 in der Breite 22 derart dimensioniert, dass auf ihr ein Stückgut 6-1, welches eine erste Längenabmessung 19 aufweist, aufgenommen werden kann. Das Stückgut 6-1 wird zwischen den äußeren Transportorganen 64, 65 aufgenommen.

Fig. 13a zeigt die Stückgutaufnahmevorrichtung 7', welche gegenüber dem festgelegten Lagerkanal 15 positioniert wurde. Das erste Stückgut 6-1 ist gegen die äußeren Transportorgane 64, welche in dem in einer ersten Verstellrichtung (Ausfahrrichtung gemäß Pfeil 68) gegenüberliegenden Endbereich der Transportvorrichtung 28' bzw. zweiten Schlitten 55 angeordnet sind, positioniert. Es ist auch möglich, dass das erste Stückgut 6-1 vor der Verlagerungsbewegung in den Lagerkanal 15 durch einen Zentrierhub der Teleskopiereinheiten 52 und/oder einen Zentrierhub der Zentrierleisten 72 auf und relativ zu der Stückaufnahmevorrichtung 7' positioniert werden, sodass das erste Stückgut 6-1 in paralleler Ausrichtung zur Längsachse des Lagerkanales 15 gefördert werden kann.

Umfasst die Aufnahmeplattform 43 eine Fördervorrichtung, so kann das erste Stückgut 6-1 vor der Verlagerungsbewegung in den Lagerkanal 15 auf der Stückgutaufnahmevorrichtung 7 in einer Richtung parallel zur Längserstreckung des Lagerkanales 15 positioniert werden, in dem das erste Stückgut 6-1 über die Fördervorrichtung entgegen einer Einlagerrichtung bewegt und gegen die in die Betätigungsstellung bewegten Transportorgane 64 der Transportvorrichtung 28' bzw. Teleskopiereinheiten 52 positioniert wird, wobei sich die Transportvorrichtung 28' bzw. Teleskopiereinheiten 52 in der Ausgangsstellung befindet.

Wie in Fig. 13b ersichtlich, wird das erste Stückgut 6-1, welches an einer Tiefenposition Zₙ₊₁ abgestellt werden soll, mit den (ersten) äußeren Transportorganen 64, welche in dem in einer ersten Verstellrichtung (Ausfahrrichtung der Transportvorrichtung gemäß Pfeil 68) gegenüberliegenden Endbereich der Transportvorrichtung 28' bzw. zweiten Schlitten 55 angeordnet sind, im Lagerkanal 15 bis zu einer Zwischenposition Z_{P} verlagert, insbesondere verschoben. In der Zwischenposition Z_{P} befindet sich das Stückgut 6-1 entweder vollständig im Lagerkanal 15 oder teilweise auf der Aufnahmeplattform 43 der Stückgutaufnahmevorrichtung 7 und teilweise im Lagerkanal 15 des Lagerregales 1.

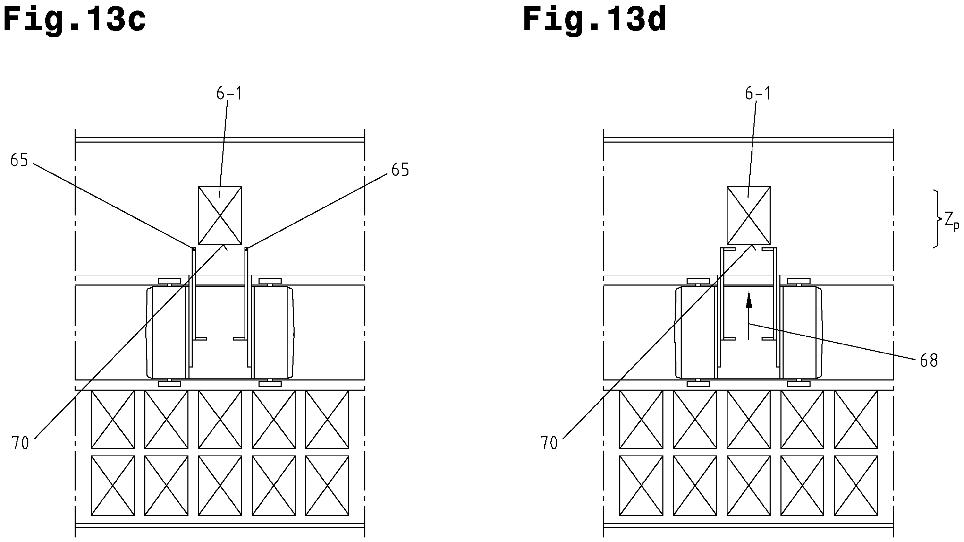

Danach wird die Transportvorrichtung 28' soweit in einer zweiten Verstellrichtung (Einfahrrichtung der Transportvorrichtung gemäß Pfeil 69) rückbewegt, dass die (zweiten) äußeren Transportorgane 65 hinter einer der Stückgutaufnahmevorrichtung 7' zugewandten Seitenwand 70 des Stückgutes 6-1 positioniert sind, wie in Fig. 13c gezeigt.

Darauffolgend werden die (zweiten) äußeren Transportorgane 65, welche sich gemäß Fig. 13c noch in der gegenüber dem Stückgut 6-1 zurückgezogenen Ausgangsstellung befinden, in die in Fig. 13d eingetragene Betätigungsstellung bewegt, sodass diese die Seitenwand 70 hintergreifen.

Anschließend wird die Transportvorrichtung 28' wiederum in einer ersten Verstellrichtung (Ausfahrrichtung der Transportvorrichtung gemäß Pfeil 68) vorbewegt, sodass die (zweiten) äußeren Transportorgane 65 das erste Stückgut 6-1 im Lagerkanal 15 aus der Zwischenposition Z_{P} in die zweite Tiefenposition Zₙ₊₁ bewegen. Dies zeigt Fig. 13e.

Befindet sich nun das erste Stückgut 6-1 in der von der Steuereinheit 18 festgelegten zweiten Tiefenposition Zₙ₊₁, wird die Transportvorrichtung 28' wiederum in einer zweiten Verstellrichtung (Einfahrrichtung der Transportvorrichtung gemäß Pfeil 69) rückbewegt, sodass diese die Ausgangsstellung einnimmt, siehe Fig. 13f.

Danach wird die Stückgutaufnahmevorrichtung 7' neuerlich zur Bereitstellvorrichtung 35 verfahren, wo gegebenenfalls schon das zweite Stückgut 6-1, welches eine erste Längenabmessung 19 aufweist, bereitgestellt wurde. Die Stückgutaufnahmevorrichtung 7' übernimmt nun das zweite Stückgut 6-1 von der Bereitstellvorrichtung 35 auf die Aufnahmeplattform 43 und verfährt danach in der x-Richtung zum festgelegten Lagerkanal 15, in welchen bereits das erste Stückgut 6-1 eingelagert wurde.

Fig. 13g zeigt die Stückgutaufnahmevorrichtung 7', welche gegenüber dem festgelegten Lagerkanal 15 positioniert wurde. Das zweite Stückgut 6-1 ist gegen die äußeren Transportorgane 64, welche in dem in Verlagerungsrichtung (Einlagerrichtung gemäß Pfeil 68) gegenüberliegenden Endbereich der Transportvorrichtung 28' bzw. zweiten Schlitten 55 angeordnet sind, positioniert. Vor der Verlagerungsbewegung kann das zweite Stückgut 6-1 wiederum ausgerichtet und/oder positioniert werden, wie oben für das erste Stückgut 6-1 beschrieben.

Darauffolgend wird die Transportvorrichtung 28'in einer ersten Verstellrichtung (Ausfahrrichtung der Transportvorrichtung gemäß Pfeil 68) bewegt, sodass die äußeren Transportorgane 64 das zweite Stückgut 6-1 von der Stückgutaufnahmevorrichtung 7' bzw. der Aufnahmeplattform 43 in den Lagerkanal 15 bis in eine erste Tiefenposition Zₙ bewegen, siehe Fig. 13h. Das zweite Stückgut 6-1 wird dabei soweit in Tiefenrichtung des Lagerkanales 15 bewegt, dass die Seitenwand 70 im Wesentlichen fluchtend mit einer Stirnkante des Lagerkanales 15 bzw. vorderen Längsseite 8 verläuft. Der Begriff "im Wesentlichen fluchtend" ist dabei so zu verstehen, dass das Stückgut 6-1 mit seiner Seitenwand 70 gegenüber der Stirnkante soweit in Richtung des Lagerkanales 15 versetzt sein kann, dass ein Versatzabstand weniger als 80 mm, beispielweise 20 mm beträgt.

Wie in Fig. 13h ersichtlich, sind das erste Stückgut 6-1 und zweite Stückgut 6-1 im Lagerkanal 15 mit gegenseitigem Abstand an den Tiefenpositionen Zₙ, Zₙ₊₁ abgestellt, sodass beim Auslagern nacheinander auf die einzelnen Stückgüter 6-1 zugegriffen werden kann. Ein solcher Auslagervorgang ist in den Fig. 10a und 10b beschrieben.

Befinden sich das zweite Stückgut 6-1 im Lagerkanal 15, wird die in den Lagerkanal 15 ausgefahrene Transportvorrichtung 28', insbesondere die Teleskopeinheiten 52, wieder in eine Ausgangsstellung zurückbewegt.

Abschließend sei noch erwähnt, dass die Stückgutaufnahmevorrichtung auch durch ein Regalförderfahrzeug gebildet sein kann, welches einen vertikalen Mast, ein am Mastfuß befestigtes unteres Fahrwerk, ein am Mastkopf befestigtes oberes Fahrwerk umfasst. Das untere Fahrwerk ist an einer unteren Führungsschiene und das obere Fahrwerk an einer oberen Führungsschiene geführt. Die Transportvorrichtung 28 ist in diesem Fall auf einem Hubrahmen montiert und über einen Hubantrieb in y-Richtung höhenverstellbar am vertikalen Mast gelagert, um die Lagerkanäle 15 in sämtlichen Regalebenen zu bedienen. Somit kann sich die Stückgutaufnahmevorrichtung sowohl in x-Richtung als auch in y-Richtung bewegen. Ein solches Regalförderfahrzeug ist beispielweise in der EP 2 419 365 B1 beschrieben.

Die Ausführungsbeispiele zeigen mögliche Ausführungsvarianten des Lagersystems und Einlagerverfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Vor allem können die einzelnen in den Fig. 1 bis 13 gezeigten Ausführungen den Gegenstand von eigenständigen, erfindungsgemäßen Lösungen bilden.

Der Ordnung halber sei abschließend darauf hingewiesen, dass zum besseren Verständnis des Aufbaus des Lagersystems dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Lagerregal | 30 | Puffervorrichtung |
| 2 | Stückgut-Manipulationseinheit | 31 | Hubantrieb |
| 3 | Regalgasse | 32 | Transportvorrichtung |
| 4 | Fördertechnik | 33 | Antriebsmotor |
| 5 | Fördertechnik | 34 | Förderantrieb |
| 6 | Stückgut | 35 | Bereitstellvorrichtung |
| 7 | Stückgutaufnahmevorrichtung | 36 | Bereitstellvorrichtung |
| 8 | vordere Längsseite | 37 | Förderantrieb |
| 9 | hintere Längsseite | 38 | Förderantrieb |
| 10 | vorderer Regalsteher | 39 | Stückgut-Manipulationseinheit |
| 11 | hinterer Regalsteher | 40 | Stückgut-Manipulationseinheit |
| 12 | vordere Längstraverse | 41 | Bereitstellvorrichtung |
| 13 | hintere Längstraverse | 42 | Tragrahmen |
| 14 | Querträger | 43 | Aufnahmeplattform |
| 15 | Lagerkanal | 44 | Laufrad |
| 16 | Lagertiefe | 45 | Antriebsmotor (Fahrantrieb) |
| 17 | Lagerbreite | 46 | Führungsvorrichtung |
| 18 | Steuereinheit | 47 | Antriebsmotor (Transportvorrichtung) |
| 19 | erste Längenabmessung | 48 | Steuerelektronik |
| 20 | zweite Längenabmessung | 49 | Sensor |
| 22 | Breite | 50 | Sensor |
| 27 | Fahrebene | 51 | Schleifleitungsanordnung |
| 28 | Transportvorrichtung | 52 | Teleskopiereinheit |
| 29 | Stückgut-Hebevorrichtung | 53 | Grundrahmen |
| 54 | erster Schlitten | | |
| 55 | zweiter Schlitten | | |
| 56 | Führungsanordnung | | |
| 57 | Führungsanordnung | | |
| 58 | Antriebsvorrichtung | | |
| 59 | Antriebswelle | | |
| 60 | erster Riemen | | |
| 61 | erste Rolle | | |
| 62 | zweiter Riemen | | |
| 63 | zweite Rolle | | |
| 64 | äußeres Transportorgan | | |
| 65 | äußeres Transportorgan | | |
| 66 | inneres Transportorgan | | |
| 67 | Antriebsmotor | | |
| 68 | Ausfahrrichtung | | |
| 69 | Einfahrrichtung | | |
| 70 | Seitenwand | | |
| 71 | Seitenwand | | |
| 72 | Zentrierleiste | | |

## Patentansprüche

1. Verfahren zum Einlagern von Stückgütern (6-1, 6-2) in Lagerkanäle (15) eines Lagerregales (1) mit einer Vielzahl von Lagerkanälen (15), bei dem die Stückgüter (6-1, 6-2) mittels einer entlang des Lagerregales (1) in einer ersten Richtung (x-Richtung) bewegbaren Stückgutaufnahmevorrichtung (7) zu den Lagerkanälen (15) und einer relativ gegenüber der Stückgutaufnahmevorrichtung (7) in einer zweiten Richtung (z-Richtung) in den Lagerkanal (15) ausfahrbaren Transportvorrichtung (28) in die Lagerkanäle (15) gefördert werden, wobei die Transportvorrichtung (28) in einander gegenüberliegenden Endbereichen mit jeweils zumindest einem äußeren Transportorgan (64, 65) und dazwischen mit zumindest einem inneren Transportorgan (66) ausgestattet ist, um in zumindest einem der Lagerkanäle (15) an hintereinander liegenden Tiefenpositionen (Zₙ .. Zₙ₊₂) die Stückgüter (6-1, 6-2) mit gegenseitigem Abstand einzulagern, und wobei die Stückgutaufnahmevorrichtung (7) entweder ein Stückgut (6-1) einer ersten Länge (19) ausschließlich zwischen den äußeren Transportorganen (64, 65) oder zumindest ein Stückgut (6-2) einer zweiten Länge (20) zwischen einem der äußeren Transportorgane (64, 65) und dem inneren Transportorgan (66) aufnehmen kann,
wobei die folgenden Schritte durchgeführt werden:
- Übernahme eines Stückgutes (6-1) der ersten Länge (19) oder zumindest eines Stückgutes (6-2) einer zweiten Länge (20) auf die Stückgutaufnahmevorrichtung (7),
- Positionierung der Stückgutaufnahmevorrichtung (7) vor einem durch eine Steuereinheit (18) festgelegten Lagerkanal (15), in welchen zumindest an einer ersten Tiefenposition (Zₙ) ein Stückgut (6-1, 6-2) und an einer dahinter liegenden zweiten Tiefenposition (Zₙ₊₁) ein Stückgut (6-1, 6-2) eingelagert werden sollen, **gekennzeichnet durch**:
- Vorverlagerung eines Stückgutes (6-1, 6-2) von der Stückgutaufnahmevorrichtung (7) in den Lagerkanal (15) derart, dass dieses Stückgut (6-1, 6-2) von einem der Transportorgane (64, 65, 66) durch Bewegung der Transportvorrichtung (28) in Richtung (erste Verstellrichtung 68) des Lagerkanales (15) bis zu einer Zwischenposition (Z_{P}) verlagert wird,
- Rückbewegung der Transportvorrichtung (28) in Richtung (zweite Verstellrichtung 69) der Stückgutaufnahmevorrichtung (7) derart, dass das andere der Transportorgane (64, 65, 66), welches das Stückgut (6-1, 6-2) aus der Zwischenposition (Z_{P}) in die zweite Tiefenposition (Zₙ₊₁) verlagern soll, hinter einer der Stückgutaufnahmevorrichtung (7) zugewandten Seitenwand (70) des Stückgutes (6-1, 6-2) positioniert wird,
- Nachverlagerung des Stückgutes (6-1, 6-2) im Lagerkanal (15) aus der Zwischenposition (Z_{P}) in die zweite Tiefenposition (Zₙ₊₁) mittels dem anderen der Transportorgane (64, 65, 66) durch Bewegung der Transportvorrichtung (28) in Richtung (erste Verstellrichtung 68) des Lagerkanales (15).

2. Verfahren nach Anspruch 1, **gekennzeichnet durch** die Schritte:
- Übernahme eines ersten Stückgutes (6-1) der ersten Länge (19) auf die Stückgutaufnahmevorrichtung (7),
- Positionierung der Stückgutaufnahmevorrichtung (7) vor einem durch eine Steuereinheit (18) festgelegten Lagerkanal (15), in welchen zumindest an einer ersten Tiefenposition (Zₙ) ein Stückgut (6-1) der ersten Länge (19) und an einer dahinter liegenden zweiten Tiefenposition (Zₙ₊₁) ein Stückgut (6-1) der ersten Länge (19) eingelagert werden sollen,
- Vorverlagerung des Stückgutes (6-1) von der Stückgutaufnahmevorrichtung (7) in den Lagerkanal (15) derart, dass dieses Stückgut (6-1) von dem in Verlagerungsrichtung hinteren, äußeren Transportorgan (64, 65) durch Bewegung der Transportvorrichtung (28) in Richtung (erste Verstellrichtung 68) des Lagerkanales (15) bis zur Zwischenposition (Z_{P}) verlagert wird,
- Rückbewegung der Transportvorrichtung (28) in Richtung (zweite Verstellrichtung 69) der Stückgutaufnahmevorrichtung (7) derart, dass das innere Transportorgan (66) hinter einer der Stückgutaufnahmevorrichtung (7) zugewandten Seitenwand (70) des Stückgutes (6-1) positioniert wird,
- Nachverlagerung des Stückgutes (6-1) im Lagerkanal (15) aus der Zwischenposition (Z_{P}) in die zweite Tiefenposition (Zₙ₊₁) mittels dem inneren Transportorgan (66) durch Bewegung der Transportvorrichtung (28) in Richtung (erste Verstellrichtung 68) des Lagerkanales (15).

3. Verfahren nach Anspruch 1 oder 2, **gekennzeichnet durch** die Schritte:
- Übernahme eines zweiten Stückgutes (6-1) der ersten Länge (19) auf die Stückgutaufnahmevorrichtung (7),
- Positionierung der Stückgutaufnahmevorrichtung (7) vor dem festgelegten Lagerkanal (15), in welchem bereits auf die zweite Tiefenposition (Zₙ₊₁) das erste Stückgut (6-1) der ersten Länge (19) eingelagert wurde,
- Verlagerung des zweiten Stückgutes (6-1) von der Stückgutaufnahmevorrichtung (7) in den Lagerkanal (15) auf die erste Tiefenposition (Zₙ) von dem in Verlagerungsrichtung hinteren, äußeren Transportorgan (64, 65) durch Bewegung der Transportvorrichtung (28) in Richtung (erste Verstellrichtung 68) des Lagerkanales (15).

4. Verfahren nach Anspruch 1, **gekennzeichnet durch** die Schritte:
- Übernahme eines ersten Stückgutes (6-2) der zweiten Länge (20) auf die Stückgutaufnahmevorrichtung (7),
- Positionierung der Stückgutaufnahmevorrichtung (7) vor einem durch eine Steuereinheit (18) festgelegten Lagerkanal (15), in welchen zumindest an einer ersten Tiefenposition (Zₙ) ein Stückgut (6-2) der zweiten Länge (20) und an einer dahinter liegenden zweiten Tiefenposition (Zₙ₊₁) ein Stückgut (6-2) der zweiten Länge (20) und an einer dahinter liegenden dritten Tiefenposition (Zₙ₊₂) ein Stückgut (6-2) der zweiten Länge (20) eingelagert werden sollen,
- Vorverlagerung des Stückgutes (6-2) von der Stückgutaufnahmevorrichtung (7) in den Lagerkanal (15) derart, dass dieses Stückgut (6-2) von dem inneren Transportorgan (66) durch Bewegung der Transportvorrichtung (28) in Richtung (erste Verstellrichtung 68) des Lagerkanales (15) bis zur Zwischenposition (Z_{P}) verlagert wird,
- Rückbewegung der Transportvorrichtung (28) in Richtung (zweite Verstellrichtung 69) der Stückgutaufnahmevorrichtung (7) derart, dass das in zweiter Verstellrichtung (69) hintere, äußere Transportorgan (64, 65) hinter einer der Stückgutaufnahmevorrichtung (7) zugewandten Seitenwand (70) des Stückgutes (6-2) positioniert wird,
- Nachverlagerung des Stückgutes (6-2) im Lagerkanal (15) aus der Zwischenposition (Z_{P}) in die dritte Tiefenposition (Zₙ₊₂) mittels dem in erster Verstellrichtung (68) vorderen, äußeren Transportorgan (64, 65) durch Bewegung der Transportvorrichtung (28) in Richtung (erste Verstellrichtung 68) des Lagerkanales (15).

5. Verfahren nach Anspruch 1 oder 4, **gekennzeichnet durch** die Schritte:
- Übernahme eines zweiten Stückgutes (6-2) der zweiten Länge (20) auf die Stückgutaufnahmevorrichtung (7),
- Positionierung der Stückgutaufnahmevorrichtung (7) vor dem festgelegten Lagerkanal (15), in welchem bereits auf die dritte Tiefenposition (Zₙ₊₂) das erste Stückgut (6-2) der zweiten Länge (20) eingelagert wurde,
- Verlagerung des zweiten Stückgutes (6-2) von der Stückgutaufnahmevorrichtung (7) in den Lagerkanal (15) auf die zweite Tiefenposition (Zₙ₊₁) von dem in Verlagerungsrichtung hinteren, äußeren Transportorgan (64, 65) oder mittleren Transportorgan (66) durch Bewegung der Transportvorrichtung (28) in Richtung (erste Verstellrichtung 68) des Lagerkanales (15), und danach
- Übernahme eines dritten Stückgutes (6-2) der zweiten Länge (20) auf die Stückgutaufnahmevorrichtung (7),
- Positionierung der Stückgutaufnahmevorrichtung (7) vor dem festgelegten Lagerkanal (15), in welchem bereits auf die dritte Tiefenposition (Zₙ₊₂) das erste Stückgut (6-2) der zweiten Länge (20) und auf die zweite Tiefenposition (Zₙ₊₁) das zweite Stückgut (6-2) der zweiten Länge (20) eingelagert wurden,
- Verlagerung des dritten Stückgutes (6-2) von der Stückgutaufnahmevorrichtung (7) in den Lagerkanal (15) auf die erste Tiefenposition (Zₙ) von dem in Verlagerungsrichtung hinteren, äußeren Transportorgan (64, 65) oder mittleren Transportorgan (66) durch Bewegung der Transportvorrichtung (28) in Richtung (erste Verstellrichtung 68) des Lagerkanales (15).

6. Lagersystem mit zumindest einem Lagerregal (1) mit einer Vielzahl von Lagerkanälen (15), zumindest einer entlang des Lagerregales (1) in einer ersten Richtung (x-Richtung) bewegbaren Stückgutaufnahmevorrichtung (7) und einer relativ gegenüber der Stückgutaufnahmevorrichtung (7) in einer zweiten Richtung (z-Richtung) in den Lagerkanal (15) ausfahrbaren Transportvorrichtung (28) sowie einer Steuereinheit (18) für die Stückgutaufnahmevorrichtung (7) und Transportvorrichtung (28), wobei die Transportvorrichtung (28) in einander gegenüberliegenden Endbereichen mit jeweils zumindest einem äußeren Transportorgan (64, 65) und dazwischen mit zumindest einem inneren Transportorgan (66) ausgestattet ist, um in zumindest einem der Lagerkanäle (15) an hintereinander liegenden Tiefenpositionen (Zₙ .. Zₙ₊₁) die Stückgüter (6-1, 6-2) mit gegenseitigem Abstand einzulagern, und wobei die Stückgutaufnahmevorrichtung (7) entweder ein Stückgut (6-1) einer ersten Länge (19) ausschließlich zwischen den äußeren Transportorganen (64, 65) oder zumindest ein Stückgut (6-2) einer zweiten Länge (20) zwischen einem der äußeren Transportorgane (64, 65) und dem inneren Transportorgan (66) aufnehmen kann, wobei die Steuereinheit (18) dazu eingerichtet ist, die Stückgutaufnahmevorrichtung (7) und Transportvorrichtung (28) derart anzusteuern, um nachfolgende Verfahrensschritte auszuführen:
- Übernahme eines Stückgutes (6-1) der ersten Länge (19) oder zumindest eines Stückgutes (6-2) einer zweiten Länge (20) auf die Stückgutaufnahmevorrichtung (7),
- Positionierung der Stückgutaufnahmevorrichtung (7) vor einem durch eine Steuereinheit (18) festgelegten Lagerkanal (15), in welchen zumindest an einer ersten Tiefenposition (Zₙ) ein Stückgut (6-1, 6-2) und an einer dahinter liegenden zweiten Tiefenposition (Zₙ₊₁) ein Stückgut (6-1, 6-2) eingelagert werden sollen, **gekennzeichnet durch**:
- Vorverlagerung eines Stückgutes (6-1, 6-2) von der Stückgutaufnahmevorrichtung (7) in den Lagerkanal (15) derart, dass dieses Stückgut (6-1, 6-2) von einem der Transportorgane (64, 65, 66) durch Bewegung der Transportvorrichtung (28) in Richtung (erste Verstellrichtung 68) des Lagerkanales (15) bis zu einer Zwischenposition (Z_{P}) verlagert wird,
- Rückbewegung der Transportvorrichtung (28) in Richtung (zweite Verstellrichtung 69) der Stückgutaufnahmevorrichtung (7) derart, dass das andere der Transportorgane (64, 65, 66), welches das Stückgut (6-1, 6-2) aus der Zwischenposition (Z_{P}) in die zweite Tiefenposition (Zₙ₊₁) verlagern soll, hinter einer der Stückgutaufnahmevorrichtung (7) zugewandten Seitenwand (70) des Stückgutes (6-1, 6-2) positioniert wird,
- Nachverlagerung des Stückgutes (6-1, 6-2) im Lagerkanal (15) aus der Zwischenposition (Z_{P}) in die zweite Tiefenposition (Zₙ₊₁) mittels dem anderen der Transportorgane (64, 65, 66) durch Bewegung der Transportvorrichtung (28) in Richtung (erste Verstellrichtung 68) des Lagerkanales (15).

7. Lagersystem nach Anspruch 6, **dadurch gekennzeichnet, dass** die Stückgutaufnahmevorrichtung (7) einen Tragrahmen (42), die Transportvorrichtung (28) und eine Aufnahmeplattform (43) aufweist, wobei die Aufnahmeplattform (43) dazu eingerichtet ist, ein einziges Stückgut (6-1) der ersten Länge (19) oder zumindest ein Stückgut (6-2) der zweiten Länge (20) zu transportieren, und wobei die Transportvorrichtung (28) parallel zu Längsseiten der Aufnahmeplattform (43) angeordnete Teleskopeinheiten (52) aufweist, und wobei die Teleskopeinheiten (52) jeweils einen Grundrahmen (53), einen gegenüber dem Grundrahmen (53) verstellbaren ersten Schlitten (54) und einen gegenüber dem ersten Schlitten (54) verstellbaren zweiten Schlitten (55) aufweisen, und wobei die zweiten Schlitten (55) jeweils an ihren einander gegenüberliegenden Endbereichen mit dem äußeren Transportorgan (64, 65) und dem dazwischen angeordneten inneren Transportorgan (66) versehen sind, und wobei die Transportorgane (64, 65, 66) zwischen einer gegenüber dem Stückgut (6-1, 6-2) zurückgezogenen Ausgangsstellung und einer das Stückgut (6-1, 6-2) ergreifenden Betätigungsstellung verstellbar sind.

8. Lagersystem nach Anspruch 7, **dadurch gekennzeichnet, dass** die Stückgutaufnahmevorrichtung (7) ein Einebenenregalbediengerät ist.

9. Lagersystem nach Anspruch 7 oder 8, **dadurch gekennzeichnet, dass** das Lagersystem ferner umfasst:
- ein erstes Lagerregal (1) mit in übereinander liegenden Regalebenen (RE) nebeneinander angeordneten Lagerkanälen (15),
- ein zweites Lagerregal (1) mit in übereinander liegenden Regalebenen (RE) nebeneinander angeordneten Lagerkanälen (15),
- eine Regalgasse (3), welche in x-Richtung zwischen dem ersten Lagerregal (1) und zweiten Lagerregal (1) verläuft,
- eine Vielzahl von Stückgutaufnahmevorrichtungen (7), wobei jede Stückgutaufnahmevorrichtung (7) eine relativ gegenüber dieser Stückgutaufnahmevorrichtung (7) in einer zweiten Richtung (z-Richtung) in den Lagerkanal (15) ausfahrbare Transportvorrichtung (28) aufweist, und wobei die Steuereinheit (18) die Stückgutaufnahmevorrichtungen (7) und Transportvorrichtungen (28) ansteuert, um in den Lagerkanälen (15) an hintereinander liegenden Tiefenpositionen (Zₙ .. Zₙ₊₂) die Stückgüter (6-1, 6-2) mit gegenseitigem Abstand einzulagern,
- eine Ladegut-Manipulationseinheit (2; 39; 40), welche zumindest eine Stückgut-Hebevorrichtung (29a, 29b) mit einer heb- und senkbaren Transportvorrichtung (32a, 32b) zum Einlagern und/oder Auslagern von Stückgütern (6-1, 6-2) sowie eine Puffervorrichtung (30a, 30b) mit Bereitstellvorrichtungen (35, 36) für das Zwischenpuffern von Stückgütern (6-1, 6-2),
- Führungsschienen (12), welche in zumindest einigen der Regalebenen (RE) zwischen dem ersten Lagerregal (1) und zweiten Lagerregal (1) derart angeordnet sind, dass die Stückgutaufnahmevorrichtungen (7) die Lagerkanäle (15) und die Bereitstellvorrichtungen (35, 36) anfahren können, um Stückgüter (6-1, 6-2) zwischen den Lagerkanälen (15) und Bereitstellvorrichtungen (35, 36) zu transportieren,
- einer an die Stückgut-Hebevorrichtung (29a, 29b) angeschlossenen Fördertechnik (4, 5) zum Antransport und Abtransport von Stückgütern (6-1, 6-2) zu bzw. von der Stückgut -Hebevorrichtung (29a, 29b).

10. Verfahren zum Einlagern von Stückgütern (6-1, 6-2) in Lagerkanäle (15) eines Lagerregales (1) mit einer Vielzahl von Lagerkanälen (15), bei dem die Stückgüter (6-1, 6-2) mittels einer entlang des Lagerregales (1) in einer ersten Richtung (x-Richtung) bewegbaren Stückgutaufnahmevorrichtung (7') zu den Lagerkanälen (15) und einer relativ gegenüber der Stückgutaufnahmevorrichtung (7') in einer zweiten Richtung (z-Richtung) in den Lagerkanal (15) ausfahrbaren Transportvorrichtung (28') in die Lagerkanäle (15) gefördert werden, wobei die Transportvorrichtung (28') in einander gegenüberliegenden Endbereichen mit jeweils zumindest einem äußeren Transportorgan (64, 65) ausgestattet ist, um in zumindest einem der Lagerkanäle (15) an hintereinander liegenden Tiefenpositionen (Zₙ .. Zₙ₊₂) die Stückgüter (6-1, 6-2) mit gegenseitigem Abstand einzulagern, und wobei die Stückgutaufnahmevorrichtung (7') ein Stückgut (6-1) zwischen den äußeren Transportorganen (64, 65) aufnehmen kann, wobei die folgenden Schritte durchgeführt werden:
- Übernahme eines Stückgutes (6-1, 6-2) auf die Stückgutaufnahmevorrichtung (7'),
- Positionierung der Stückgutaufnahmevorrichtung (7') vor einem durch eine Steuereinheit (18) festgelegten Lagerkanal (15), in welchen zumindest an einer ersten Tiefenposition (Zₙ) ein Stückgut (6-1, 6-2) und an einer dahinter liegenden zweiten Tiefenposition (Zₙ₊₁) ein Stückgut (6-1, 6-2) eingelagert werden sollen,
**gekennzeichnet durch**:
- Vorverlagerung eines Stückgutes (6-1, 6-2) von der Stückgutaufnahmevorrichtung (7') in den Lagerkanal (15) derart, dass dieses Stückgut (6-1, 6-2) von einem der Transportorgane (64, 65) durch Bewegung der Transportvorrichtung (28') in Richtung (erste Verstellrichtung 68) des Lagerkanales (15) bis zu einer Zwischenposition (Z_{P}) verlagert wird,
- Rückbewegung der Transportvorrichtung (28') in Richtung (zweite Verstellrichtung 69) der Stückgutaufnahmevorrichtung (7') derart, dass das andere der Transportorgane (64, 65), welches das Stückgut (6-1, 6-2) aus der Zwischenposition (Z_{P}) in die zweite Tiefenposition (Zₙ₊₁) verlagern soll, hinter einer der Stückgutaufnahmevorrichtung (7') zugewandten Seitenwand (70) des Stückgutes (6-1, 6-2) positioniert wird,
- Nachverlagerung des Stückgutes (6-1, 6-2) im Lagerkanal (15) aus der Zwischenposition (Z_{P}) in die zweite Tiefenposition (Zₙ₊₁) mittels dem anderen der Transportorgane (64, 65) durch Bewegung der Transportvorrichtung (28') in Richtung (erste Verstellrichtung 68) des Lagerkanales (15).

11. Verfahren nach Anspruch 10, **dadurch gekennzeichnet, dass** das Stückgut (6-1, 6-2) vor deren Verlagerung von der Stückgutaufnahmevorrichtung (7') in den Lagerkanal (4) auf der Stückgutaufnahmevorrichtung (7') und in einer Richtung quer zur Längserstreckung des Lagerkanales (15) ausgerichtet wird.

12. Verfahren nach Anspruch 10 oder 11, **dadurch gekennzeichnet, dass** das Stückgut (6-1, 6-2) vor deren Verlagerung von der Stückgutaufnahmevorrichtung (7') in den Lagerkanal (4) auf der Stückgutaufnahmevorrichtung (7') und in einer Richtung parallel zur Längserstreckung des Lagerkanales (15) positioniert wird.

13. Lagersystem mit zumindest einem Lagerregal (1) mit einer Vielzahl von Lagerkanälen (15), zumindest einer entlang des Lagerregales (1) in einer ersten Richtung (x-Richtung) bewegbaren Stückgutaufnahmevorrichtung (7') und einer relativ gegenüber der Stückgutaufnahmevorrichtung (7') in einer zweiten Richtung (z-Richtung) in den Lagerkanal (15) ausfahrbaren Transportvorrichtung (28') sowie einer Steuereinheit (18) für die Stückgutaufnahmevorrichtung (7') und Transportvorrichtung (28'), wobei die Transportvorrichtung (28') in einander gegenüberliegenden Endbereichen mit jeweils zumindest einem äußeren Transportorgan (64, 65) ausgestattet ist, um in zumindest einem der Lagerkanäle (15) an hintereinander liegenden Tiefenpositionen (Zₙ .. Zₙ₊₁) die Stückgüter (6-1, 6-2) mit gegenseitigem Abstand einzulagern, und wobei die Stückgutaufnahmevorrichtung (7') ein Stückgut (6-1, 6-2) zwischen den äußeren Transportorganen (64, 65) aufnehmen kann, wobei die Steuereinheit (18) dazu eingerichtet ist, die Stückgutaufnahmevorrichtung (7') und Transportvorrichtung (28') derart anzusteuern, um nachfolgende Verfahrensschritte auszuführen:
- Übernahme eines Stückgutes (6-1, 6-2) auf die Stückgutaufnahmevorrichtung (7'),
- Positionierung der Stückgutaufnahmevorrichtung (7') vor einem durch eine Steuereinheit (18) festgelegten Lagerkanal (15), in welchen zumindest an einer ersten Tiefenposition (Zₙ) ein Stückgut (6-1, 6-2) und an einer dahinter liegenden zweiten Tiefenposition (Zₙ₊₁) ein Stückgut (6-1, 6-2) eingelagert werden sollen, **gekennzeichnet durch**
- Vorverlagerung eines Stückgutes (6-1, 6-2) von der Stückgutaufnahmevorrichtung (7') in den Lagerkanal (15) derart, dass dieses Stückgut (6-1, 6-2) von einem der Transportorgane (64, 65) durch Bewegung der Transportvorrichtung (28') in Richtung (erste Verstellrichtung 68) des Lagerkanales (15) bis zu einer Zwischenposition (Z_{P}) verlagert wird,
- Rückbewegung der Transportvorrichtung (28') in Richtung (zweite Verstellrichtung 69) der Stückgutaufnahmevorrichtung (7') derart, dass das andere der Transportorgane (64, 65), welches das Stückgut (6-1, 6-2) aus der Zwischenposition (Z_{P}) in die zweite Tiefenposition (Zₙ₊₁) verlagern soll, hinter einer der Stückgutaufnahmevorrichtung (7') zugewandten Seitenwand (70) des Stückgutes (6-1, 6-2) positioniert wird,
- Nachverlagerung des Stückgutes (6-1, 6-2) im Lagerkanal (15) aus der Zwischenposition (Z_{P}) in die zweite Tiefenposition (Zₙ₊₁) mittels dem anderen der Transportorgane (64, 65) durch Bewegung der Transportvorrichtung (28') in Richtung (erste Verstellrichtung 68) des Lagerkanales (15).

## Claims

1. Method for transferring unit loads (6-1, 6-2) to storage channels (15) of a storage rack (1) having a plurality of storage channels (15), whereby the unit loads (6-1, 6-2) are conveyed to the storage channels (15) by means of a unit load receiving device (7) which can be moved along the storage rack (1) in a first direction (x-direction) and into the storage channels (15) by means of a transport device (28) which can be extended relative to the unit load receiving device (7) in a second direction (z-direction) into the storage channel (15), and the transport device (28) is equipped with at least one outer transport element (64, 65) respectively in opposite end sections and at least one inner transport element (66) between them in order to transfer the unit loads (6-1, 6-2) to depth positions (Zₙ .. Zₙ₊₂) at a mutual distance one behind the other in at least one of the storage channels (15), and the unit load receiving device (7) is able to receive either a unit load (6-1) of a first length (19) exclusively between the outer transport elements (64, 65) or at least one unit load (6-2) of a second length (20) between one of the outer transport elements (64, 65) and the inner transport element (66),
wherein the following steps are implemented:
- transferring a unit load (6-1) of the first length (19) or at least one unit load (6-2) of a second length (20) to the unit load receiving device (7),
- positioning the unit load receiving device (7) in front of a storage channel (15) designated by a control unit (18) in which a unit load (6-1, 6-2) is to be stored at least in a first depth position (Zₙ) and a unit load (6-1, 6-2) is to be stored in a second depth position (Zₙ₊₁) lying behind the first depth position (Zₙ),
**characterized by**:
- initially shifting a unit load (6-1, 6-2) from the unit load receiving device (7) into the storage channel (15) such that this unit load (6-1, 6-2) is shifted by one of the transport elements (64, 65, 66) by moving the transport device (28) in the direction of the storage channel (15) (first direction of adjustment 68) as far as an intermediate position (Zp),
- moving back the transport device (28) in the direction of the unit load receiving device (7) (second direction of adjustment 69) such that the other one of the transport elements (64, 65, 66) that will be used to shift the unit load (6-1, 6-2) from the intermediate position (Z_{P}) to the second depth position (Zₙ₊₁) is positioned behind a side wall (70) of the unit load (6-1, 6-2) facing the unit load receiving device (7),
- finally shifting the unit load (6-1, 6-2) in the storage channel (15) from the intermediate position (Z_{P}) to the second depth position (Zₙ₊₁) by means of the other one of the transport elements (64, 65, 66) by moving the transport device (28) in the direction of the storage channel (15) (first direction of adjustment 68).

2. Method according to claim 1, **characterized by** the steps:
- transferring a first unit load (6-1) of the first length (19) to the unit load receiving device (7),
- positioning the unit load receiving device (7) in front of a storage channel (15) designated by a control unit (18) in which a unit load (6-1) of the first length (19) is to be stored at least in a first depth position (Zₙ) and a unit load (6-1) of the first length (19) is to be stored in a second depth position (Zₙ₊₁) lying behind the first depth position (Zₙ),
- initially shifting the unit load (6-1) from the unit load receiving device (7) into the storage channel (15) such that this unit load (6-1) is shifted by the rear, outer transport element (64, 65) in the direction of adjustment by moving the transport device (28) in the direction of the storage channel (15) (first direction of adjustment 68) as far as the intermediate position (Zp),
- moving back the transport device (28) in the direction of the unit load receiving device (7) (second direction of adjustment 69) such that the inner transport element (66) is positioned behind a side wall (70) of the unit load (6-1) facing the unit load receiving device (7),
- finally shifting the unit load (6-1) in the storage channel (15) from the intermediate position (Z_{P}) to the second depth position (Zₙ₊₁) by means of the inner transport element (66) by moving the transport device (28) in the direction of the storage channel (15) (first direction of adjustment 68).

3. Method according to claim 1 or 2, **characterized by** the steps:
- transferring a second unit load (6-1) of the first length (19) to the unit load receiving device (7),
- positioning the unit load receiving device (7) in front of the designated storage channel (15) in which the first unit load (6-1) of the first length (19) has already been transferred to the second depth position (Zₙ₊₁),
- shifting the second unit load (6-1) in the direction of adjustment from the unit load receiving device (7) into the storage channel (15) to the first depth position (Zₙ) by means of the rear, outer transport element (64, 65) by moving the transport device (28) in the direction of the storage channel (15) (first direction of adjustment 68).

4. Method according to claim 1, **characterized by** the steps:
- transferring a first unit load (6-2) of the second length (20) to the unit load receiving device (7),
- positioning the unit load receiving device (7) in front of a storage channel (15) designated by a control unit (18) in which at least a unit load (6-2) of the second length (20) is to be stored in a first depth position (Zₙ) and a unit load (6-2) of the second length (20) is to be stored in a second depth position (Zₙ₊₁) and a unit load (6-2) of the second length (20) is to be stored in a third depth position (Zₙ₊₂) lying behind it,
- initially shifting the unit load (6-2) from the unit load receiving device (7) into the storage channel (15) such that this unit load (6-2) is shifted by the inner transport element (66) by moving the transport device (28) in the direction of the storage channel (15) (first direction of adjustment 68) as far as the intermediate position (Zp),
- moving back the transport device (28) in the direction of the unit load receiving device (7) (second direction of adjustment 69) such that the rear, outer transport element (64, 65) is positioned in the second direction of adjustment (69) behind a side wall (70) of the unit load (6-2) facing the unit load receiving device (7),
- finally shifting the unit load (6-2) in the storage channel (15) from the intermediate position (Z_{P}) to the third depth position (Zₙ₊₂) by means of the front, outer transport element (64, 65) in the first direction of adjustment (68) by moving the transport device (28) in the direction of the storage channel (15) (first direction of adjustment 68).

5. Method according to claim 1 or 4, **characterized by** the steps:
- transferring a second unit load (6-2) of the second length (20) to the unit load receiving device (7),
- positioning the unit load receiving device (7) in front of the designated storage channel (15) in which the first unit load (6-2) of the second length (20) has already been transferred to the third depth position (Zₙ₊₂),
- shifting the second unit load (6-2) from the unit load receiving device (7) in the storage channel (15) in the direction of adjustment to the second depth position (Zₙ₊₁) by means of the rear, outer transport element (64, 65) or by means of the middle transport element (66) by moving the transport device (28) in the direction of the storage channel (15) (first direction of adjustment 68), and then
- transferring a third unit load (6-2) of the second length (20) to the unit load receiving device (7),
- positioning the unit load receiving device (7) in front of the designated storage channel (15) in which the first unit load (6-2) of the second length (20) has already been transferred to the third depth position (Zₙ₊₂) and the second unit load (6-2) of the second length (20) has already been transferred to the second depth position (Zₙ₊₁),
- shifting the third unit load (6-2) from the unit load receiving device (7) in the storage channel (15) in the direction of adjustment to the first depth position (Zₙ) by means of the rear, outer transport element (64, 65) or by means of the middle transport element (66) by moving the transport device (28) in the direction of the storage channel (15) (first direction of adjustment 68).

6. Storage system with at least one storage rack (1) having a plurality of storage channels (15), at least one unit load receiving device (7) which can be moved along the storage rack (1) in a first direction (x-direction) and a transport device (28) which can be extended relative to the unit load receiving device (7) into the storage channel (15) in a second direction (z-direction), and a control unit (18) for the unit load receiving device (7) and transport device (28), and the transport device (28) is equipped with at least one outer transport element respectively in opposite end sections (64, 65) and at least one inner transport element (66) between them in order to transfer the unit loads (6-1, 6-2) to depth positions (Zₙ .. Zₙ₊₁) lying at a mutual distance one after the other in at least one of the storage channels (15), and the unit load receiving device (7) is able to receive either one unit load (6-1) of a first length (19) exclusively between the outer transport elements (64, 65) or at least one unit load (6-2) of a second length (20) between one of the outer transport elements (64, 65) and the inner transport element (66), wherein the control unit (18) is configured to control the unit load receiving device (7) and transport device (28) in order to implement the following method steps:
- transferring a unit load (6-1) of the first length (19) or at least one unit load (6-2) of a second length (20) to the unit load receiving device (7),
- positioning the unit load receiving device (7) in front of a storage channel (15) designated by a control unit (18) in which a unit load (6-1, 6-2) is to be stored at least in a first depth position (Zₙ) and a unit load (6-1, 6-2) is to be stored in a second depth position (Zₙ₊₁) lying behind the first depth position (Zₙ),
**characterized by**:
- initially shifting a unit load (6-1, 6-2) from the unit load receiving device (7) into the storage channel (15) such that this unit load (6-1, 6-2) is shifted by means of one of the transport elements (64, 65, 66) by moving the transport device (28) in the direction of the storage channel (15) (first direction of adjustment 68) as far as an intermediate position (Zp),
- moving back the transport device (28) in the direction of the unit load receiving device (7) (second direction of adjustment 69) such that the other one of the transport elements (64, 65, 66) that will be used to shift the unit load (6-1, 6-2) from the intermediate position (Z_{P}) to the second depth position (Zₙ₊₁) is positioned behind a side wall (70) of the unit load (6-1, 6-2) facing the unit load receiving device (7),
- finally shifting the unit load (6-1, 6-2) in the storage channel (15) from the intermediate position (Z_{P}) to the second depth position (Zₙ₊₁) by means of the other one of the transport elements (64, 65, 66) by moving the transport device (28) in the direction of the storage channel (15) (first direction of adjustment 68).

7. Storage system according to claim 6, wherein the unit load receiving device (7) comprises a support frame (42), the transport device (28) and a receiving platform (43), and the receiving platform (43) is configured to convey a single unit load (6-1) of the first length (19) or at least one unit load (6-2) of the second length (20), and the transport device (28) comprises telescopic units (52) disposed parallel with longitudinal sides of the receiving platform (43), and the telescopic units (52) respectively comprise a base frame (53), a first rail (54) that is displaceable relative to the base frame (53) and a second rail (55) that is displaceable relative to the first rail (54), and the second rail (55) is provided with the outer transport element (64, 65) respectively at its oppositely lying end sections and the inner transport element (66) disposed between them, and the transport elements (64, 65, 66) can be moved between an initial position retracted away from the unit load (6-1, 6-2) and an operating position engaging with the unit load (6-1, 6-2).

8. Storage system according to claim 7, wherein the unit load receiving device (7) is a single-level storage and retrieval unit.

9. Storage system according to claim 7 or 8, wherein the storage system further comprises:
- a first storage rack (1) having storage channels (15) disposed adjacent to one another in rack levels (RE) lying one above the other,
- a second storage rack (1) having storage channels (15) disposed adjacent to one another in rack levels (RE) lying one above the other,
- a rack aisle (3) which extends in the x-direction between the first storage rack (1) and second storage rack (1),
- a plurality of unit load receiving devices (7), each unit load receiving device (7) having a transport device (28) which can be extended relative to this unit load receiving device (7) into the storage channel (15) in a second direction (z-direction), and the control unit (18) activates the unit load receiving devices (7) and transport devices (28) in order to transfer the unit loads (6-1, 6-2) to depth positions (Zₙ .. Zₙ₊₂) lying one behind the other in the storage channels (15) with a mutual spacing,
- a unit load handling device (2; 39; 40) comprising at least one unit load lifting device (29a, 29b) having a transport device (32a, 32b) which can be raised and lowered for storing and/or retrieving unit loads (6-1, 6-2) and a buffer device (30a, 30b) with waiting devices (35, 36) for temporarily buffering unit loads (6-1, 6-2),
- guide rails (12), which are disposed in at least some of the rack levels (RE) between the first storage rack (1) and second storage rack (1) in such a way that the unit load receiving devices (7) are able to move alongside the storage channels (15) and waiting devices (35, 36) in order to transport unit loads (6-1, 6-2) between the storage channels (15) and waiting devices (35, 36),
- a conveyor system (4, 5) connected to the unit load lifting device (29a, 29b) for conveying unit loads (6-1, 6-2) to and/or from the unit load -lifting device (29a, 29b).

10. Method for transferring unit loads (6-1, 6-2) to storage channels (15) of a storage rack (1) having a plurality of storage channels (15), whereby the unit loads (6-1, 6-2) are conveyed to the storage channels (15) by means of a unit load receiving device (7') which can be moved along the storage rack (1) in a first direction (x-direction) and into the storage channels (15) by means of a transport device (28') which can be extended relative to the unit load receiving device (7') in a second direction (z-direction) into the storage channel (15), and the transport device (28') is equipped with at least one outer transport element (64, 65) respectively in opposite end sections in order to transfer the unit loads (6-1, 6-2) to depth positions (Zₙ .. Zₙ₊₂) at a mutual distance one behind the other in at least one of the storage channels (15), and the unit load receiving device (7') is able to receive a unit load (6-1) between the outer transport elements (64, 65), wherein the following steps are implemented:
- transferring a unit load (6-1, 6-2) to the unit load receiving device (7'),
- positioning the unit load receiving device (7') in front of a storage channel (15) designated by a control unit (18) in which a unit load (6-1, 6-2) is to be stored at least in a first depth position (Zₙ) and a unit load (6-1, 6-2) is to be stored in a second depth position (Zₙ₊₁) lying behind the first depth position (Zₙ),
**characterized by**:
- initially shifting a unit load (6-1, 6-2) from the unit load receiving device (7') into the storage channel (15) such that this unit load (6-1, 6-2) is shifted by one of the transport elements (64, 65) by moving the transport device (28') in the direction of the storage channel (15) (first direction of adjustment 68) up to an intermediate position (Zp),
- moving back the transport device (28') in the direction of the unit load receiving device (7') (second direction of adjustment 69) such that the other one of the transport elements (64, 65) that will be used to shift the unit load (6-1, 6-2) from the intermediate position (Zp) to the second depth position (Zₙ₊₁) is positioned behind a side wall (70) of the unit load (6-1, 6-2) facing the unit load receiving device (7'),
- finally shifting the unit load (6-1, 6-2) in the storage channel (15) from the intermediate position (Z_{P}) to the second depth position (Zₙ₊₁) by means of the other one of the transport elements (64, 65) by moving the transport device (28') in the direction of the storage channel (15) (first direction of adjustment 68).

11. Method according to claim 10, wherein the unit load (6-1, 6-2) is aligned on the unit load receiving device (7') and in a direction extending transversely to the longitudinal extension of the storage channel (15) prior to being shifted from the unit load receiving device (7') into the storage channel (4).

12. Method according to claim 10 or 11, wherein the unit load (6-1, 6-2) is positioned on the unit load receiving device (7') and in a direction parallel with the longitudinal extension of the storage channel (15) prior to being shifted from the unit load receiving device (7') into the storage channel (4).

13. Storage system with at least one storage rack (1) having a plurality of storage channels (15), at least one unit load receiving device (7') which can be moved along the storage rack (1) in a first direction (x-direction) and a transport device (28') which can be extended relative to the unit load receiving device (7') in a second direction (z-direction) into the storage channel (15), and a control unit (18) for the unit load receiving device (7') and transport device (28'), and the transport device (28') is equipped with at least one outer transport element (64, 65) respectively in opposite end sections in order to transfer the unit loads (6-1, 6-2) to depth positions (Zₙ .. Zₙ₊₁) lying one behind the other at a mutual distance in at least one of the storage channels (15), and the unit load receiving device (7') is able to receive a unit load (6-1, 6-2) between the outer transport elements (64, 65), wherein the control unit (18) is configured to activate the unit load receiving device (7') and transport device (28') in order to implement the following method steps:
- transferring a unit load (6-1, 6-2) to the unit load receiving device (7'),
- positioning the unit load receiving device (7') in front of a storage channel (15) designated by a control unit (18) in which a unit load (6-1, 6-2) is to be stored at least in a first depth position (Zₙ) and a unit load (6-1, 6-2) is to be stored in a second depth position (Zₙ₊₁) lying behind the first depth position (Zₙ),
**characterized by**:
- initially shifting a unit load (6-1, 6-2) from the unit load receiving device (7') into the storage channel (15) such that this unit load (6-1, 6-2) is shifted by one of the transport elements (64, 65) by moving the transport device (28') in the direction of the storage channel (15) (first direction of adjustment 68) up to an intermediate position (Zp),
- moving back the transport device (28') in the direction of the unit load receiving device (7') (second direction of adjustment 69) such that the other one of the transport elements (64, 65) that will be used to shift the unit load (6-1, 6-2) from the intermediate position (Zp) to the second depth position (Zₙ₊₁) is positioned behind a side wall (70) of the unit load (6-1, 6-2) facing the unit load receiving device (7'),
- finally shifting the unit load (6-1, 6-2) in the storage channel (15) from the intermediate position (Z_{P}) to the second depth position (Zₙ₊₁) by means of the other one of the transport elements (64, 65) by moving the transport device (28') in the direction of the storage channel (15) (first direction of adjustment 68).

## Revendications

1. Procédé d'entreposage d'articles (6-1, 6-2) dans des allées de stockage (15) d'une étagère de stockage (1) avec une pluralité d'allées de stockage (15), dans lequel les articles (6-1, 6-2) sont convoyés au moyen d'un dispositif de logement d'articles (7) mobile le long de l'étagère de stockage (1) dans une première direction (direction x) vers les allées de stockage (15) et d'un dispositif de transport (28) pouvant être sorti vers l'allée de stockage (15) par rapport au dispositif de logement d'articles (7) dans une deuxième direction (direction z) vers les allées de stockage (15), le dispositif de transport (28) étant muni, dans des zones d'extrémité opposées entre elles, d'au moins un organe de transport externe (64, 65) et, entre ceux-ci, d'au moins un organe de transport interne (66), afin d'entreposer, dans au moins une des allées de stockage (15), à des positions en profondeur (Zₙ..Zₙ₊₂) les unes derrière les autres, les articles (6-1, 6-2) avec une certaine distance entre eux, et le dispositif de logement d'articles (7) pouvant loger soit un article (6-1) d'une première longueur (19) exclusivement entre les organes de transport externe (64, 65) et au moins un article (6-2) d'une deuxième longueur (20) entre un des organes de transport externes (64, 65) et l'organe de transport interne (66), les étapes suivantes étant exécutées :
- prise en charge d'un article (6-1) de la première longueur (19) ou d'au moins un article (6-2) d'une deuxième longueur (20) sur le dispositif de logement d'articles (7),
- positionnement du dispositif de logement d'articles (7) devant une allée de stockage (15) déterminée par une unité de commande (18), dans laquelle, au moins à une position en profondeur (Zₙ), un article (6-1, 6-2) doit être entreposé et à une deuxième position en profondeur (Zₙ₊₁) située derrière, un article (6-1, 6-2) doit être entreposé,
**caractérisé par** :
- pré-déplacement d'un article (6-1, 6-2) du dispositif de logement d'article (7) vers l'allée de stockage (15) de façon à ce que cet article (6-1, 6-2) soit déplacé par un des organes de transport (64, 65, 66) par le déplacement du dispositif de transport (28) en direction (première direction de déplacement 68) de l'allée de stockage (15) jusqu'à une position intermédiaire (Zp),
- retour du dispositif de transport (28) en direction (deuxième direction de déplacement 69) du dispositif de logement d'article (7) de façon à ce que l'autre organe de transport (64, 65, 66), qui doit déplacer l'article (6-1, 6-2) de la position intermédiaire (Zp) vers la deuxième position en profondeur (Zₙ₊₁), soit positionné derrière une paroi latérale (70) de l'article (6-1, 6-2) orientée vers le dispositif de logement d'article (7),
- post-déplacement de l'article (6-1, 6-2) dans l'allée de stockage (15) de la position intermédiaire (Z_{P}) vers la deuxième position en profondeur (Zₙ₊₁) au moyen de l'autre organe de transport (64, 65, 66) par le déplacement du dispositif de transport (28) en direction (première direction de déplacement 68) de l'allée de stockage (15).

2. Procédé selon la revendication 1, caractéristique par les étapes suivantes :
- prise en charge d'un premier article (6-1) de la première longueur (19) sur le dispositif de logement d'articles (7),
- positionnement du dispositif de logement d'articles (7) devant une allée de stockage (15) déterminée par une unité de commande (18), dans laquelle, au moins à une première position en profondeur (Zₙ), un article (6-1) de première longueur (19) et, à une deuxième position en profondeur (Zₙ₊₁) située derrière, un article (6-1) de première longueur (19) doit être entreposé,
- pré-déplacement de l'article (6-1) du dispositif de logement d'articles (7) dans l'allée de stockage (15) de façon à ce que cet article (6-1) soit déplacé par l'organe de transport externe (64, 65), situé derrière dans la direction de déplacement, grâce au déplacement du dispositif de transport (28) en direction (première direction de déplacement 68) de l'allée de stockage (15) jusqu'à la position intermédiaire (Zp),
- retour du dispositif de transport (28) en direction (deuxième direction de déplacement 69) du dispositif de logement d'articles (7) de façon à ce que l'organe de transport interne (66) soit positionné derrière une paroi latérale (70) de l'article (6-1) orientée vers le dispositif de logement d'articles (7),
- post-déplacement de l'article (6-1) dans l'allée de stockage (15) de la position intermédiaire (Z_{P}) vers la deuxième position en profondeur (Zₙ₊₁) au moyen de l'organe de transport interne (66) grâce au déplacement du dispositif de transport (28) en direction (première direction de déplacement 68) de l'allée de stockage (15).

3. Procédé selon la revendication 1 ou 2, **caractérisé par** les étapes suivantes :
- prise en charge d'un deuxième article (6-1) de première longueur (19) sur le dispositif de logement d'articles (7),
- positionnement du dispositif de logement d'articles (7) devant l'allée de stockage (15) déterminée, dans laquelle le premier article (6-1) de première longueur (19) a déjà été entreposé à la deuxième position en profondeur (Zₙ₊₁),
- déplacement du deuxième article (6-1) du dispositif de logement d'articles (7) vers l'allée de stockage (15) vers la première position en profondeur (Zₙ) par l'organe de transport externe (64, 65), situé derrière dans la direction de déplacement, grâce au déplacement du dispositif de transport (28) en direction (première direction de déplacement 68) de l'allée de stockage (15).

4. Procédé selon la revendication 1, **caractérisé par** les étapes suivantes :
- prise en charge d'un premier article (6-2) de deuxième longueur (20) sur le dispositif de logement d'articles (7),
- positionnement du dispositif de logement d'articles (7) devant l'allée de stockage (15) déterminée par une unité de commande (18), dans laquelle, au moins à une première position en profondeur (Zₙ), un article (6-2) de deuxième longueur (20) et, à une deuxième position en profondeur (Zₙ₊₁), située derrière, un article (6-2) de deuxième longueur (20) et, à une troisième position en profondeur (Zₙ₊₂), située derrière, un article (6-2) de deuxième longueur (20) doivent être entreposés,
- pré-déplacement de l'article (6-2) du dispositif de logement d'articles (7) vers l'allée de stockage (15) de façon à ce que cet article (6-2) soit déplacé par l'organe de transport interne (66) grâce au déplacement du dispositif de transport (28) en direction (première direction de déplacement 68) de l'allée de stockage (15) jusqu'à la position intermédiaire (Zp),
- retour du dispositif de transport (28) en direction (deuxième direction de déplacement 69) du dispositif de logement d'articles (7) de façon à ce que l'organe de transport externe (64, 65), situé derrière dans la deuxième direction de déplacement (69), soit positionné derrière une paroi latérale (70) de l'article (6-2) orientée vers le dispositif de logement d'articles (7),
- post-déplacement de l'article (6-2) dans l'allée de stockage (15) de la position intermédiaire (Z_{P}) vers la troisième position en profondeur (Zₙ₊₂) au moyen de l'organe de transport externe (64, 65), situé devant dans la première direction de déplacement (68), grâce au déplacement du dispositif de transport (28) en direction (première direction de déplacement 68) de l'allée de stockage (15).

5. Procédé selon la revendication 1 ou 4, **caractérisé par** les étapes suivantes :
- prise en charge d'un deuxième article (6-2) de deuxième longueur (20) sur le dispositif de logement d'articles (7),
- positionnement du dispositif de logement d'articles (7) devant l'allée de stockage (15) déterminée, dans laquelle, au moins à une troisième position en profondeur (Zₙ₊₂), le premier article (6-2) de deuxième longueur (20) a déjà été entreposé,
- déplacement du deuxième article (6-2) du dispositif de logement d'articles (7) vers l'allée de stockage (15) à la deuxième position en profondeur (Zₙ₊₁) par l'organe de transport externe (64, 65), situé derrière dans la direction de déplacement, par l'organe de transport central (66) grâce au déplacement du dispositif de transport (28) en direction (première direction de déplacement 68) de l'allée de stockage (15) puis
- prise en charge d'un troisième article (6-2) de deuxième longueur (20) sur le dispositif de logement d'articles (7),
- positionnement du dispositif de logement d'articles (7) devant l'allée de stockage (15) déterminée, dans laquelle, à la troisième position en profondeur (Zₙ₊₂), le premier article (6-2) de deuxième longueur (20) et, à la deuxième position en profondeur (Zₙ₊₁), le deuxième article (6-2) de deuxième longueur (20) ont déjà été entreposés,
- déplacement du troisième article (6-2) du dispositif de logement d'articles (7) vers l'allée de stockage (15) à la première position en profondeur (Zₙ) par l'organe de transport externe (64, 65), derrière dans la direction de déplacement, ou par l'organe de transport central (66) grâce au déplacement du dispositif de transport (28) en direction (première direction de déplacement 68) de l'allée de stockage (15).

6. Système de stockage avec au moins une étagère de stockage (1) avec une pluralité d'allées de stockage (15), au moins un dispositif de logement d'articles (7) mobile le long de l'étagère de stockage (1) dans une première direction (direction x) et un dispositif de transport (28) pouvant être sortie par rapport au dispositif de logement d'articles (7) dans une deuxième direction (direction z) vers l'allée de stockage (15) ainsi qu'une unité de commande (18) pour le dispositif de logement d'articles (7) et le dispositif de transport (28), le dispositif de transport (28) étant muni, dans des zones d'extrémités opposées entre elles, d'au moins un organe de transport externe (64, 65) et, entre ceux-ci, d'au moins un organe de transport interne (66) afin d'entreposer les articles (6-1, 6-2) avec une certaine distance entre eux dans au moins une des allées de stockage (15) à des positions de profondeur (Zₙ..Zₙ₊₁) situées les unes derrière les autres, et le dispositif de logement d'articles (7) pouvant loger soit un article (6-1) de première longueur (19) exclusivement entre les organes de transport externes (64, 65) soit au moins un article (6-2) de deuxième longueur (20) entre un des organes de transport externes (64, 65) et l'organe de transport interne (66), l'unité de commande (18) étant conçue pour contrôler le dispositif de logement d'articles (7) et le dispositif de transport (28) de façon à exécuter les étapes suivantes :
- prise en charge d'un article (6-1) de première longueur (19) ou d'au moins un article (6-2) de deuxième longueur (20) sur le dispositif de logement d'articles (7),
- positionnement du dispositif de logement d'articles (7) devant une allée de stockage (15), déterminée par une unité de commande (18), dans laquelle, au moins à une première position en profondeur (Zₙ), un article (6-1, 6-2) et, à une deuxième position en profondeur (Zₙ₊₁), située derrière, un article (6-1, 6-2) doivent être entreposés, **caractérisé par** :
- le pré-déplacement d'un article (6-1, 6-2) du dispositif de logement d'articles (7) vers l'allée de stockage (15) de façon à ce que cet article (6-1, 6-2) soit déplacé par un des organes de transport (64, 65, 66) grâce au déplacement du dispositif de transport (28) en direction (première direction de déplacement 68) de l'allée de stockage (15) jusqu'à une position intermédiaire (Zp),
- le retour du dispositif de transport (28) en direction (deuxième direction de déplacement 69) du dispositif de logement d'articles (7) de façon à ce que l'autre organe de transport (64, 65, 66) qui doit déplacer l'article (6-1, 6-2) de la position intermédiaire (Zp) vers la deuxième position en profondeur (Zₙ₊₁) soit positionné derrière une paroi latérale (70) de l'article (6-1, 6-2) orientée vers le dispositif de logement d'articles (7),
- le post-déplacement de l'article (6-1, 6-2) dans l'allée de stockage (15) de la position intermédiaire (Z_{P}) vers la deuxième position en profondeur (Zₙ₊₁) au moyen de l'autre organe de transport (64, 65, 66) grâce au déplacement du dispositif de transport (28) en direction (première direction de déplacement 68) de l'allée de stockage (15).

7. Système de stockage selon la revendication 6, **caractérisé en ce que** le dispositif de logement d'articles (7) comprend un châssis porteur (42), le dispositif de transport (28) et une plateforme de logement (43), la plateforme de logement (43) étant conçue pour transporter un seul article (6-1) de première longueur (19) ou au moins un article (6-2) de deuxième longueur (20), et le dispositif de transport (28) comprenant des unités télescopiques (52) disposées parallèlement à des côtés longitudinaux de la plateforme de logement (43) et les unités télescopiques (52) comprenant chacune un châssis de base (53), un premier chariot (54) mobile par rapport au châssis de base (53) et des deuxièmes chariots (55) mobiles par rapport au premier chariot (54) et les deuxièmes chariots (55) étant munis, à chacune de leurs zones d'extrémités opposées entre elles, de l'organe de transport externe (64, 65) et d'organe de transport interne (66) disposé entre ceux-ci et les organes de transport (64, 65, 66) pouvant être déplacés entre une position initiale en retrait par rapport à l'article (6-1, 6-2) et une position d'actionnement en prise avec l'article (6-1, 6-2).

8. Système de stockage selon la revendication 7, **caractérisé en ce que** le dispositif de logement d'articles (7) est un appareil de commande d'étagère à un niveau.

9. Système de stockage selon la revendication 7 ou 8, **caractérisé en ce que** le système de stockage comprend en outre :
- une première étagère de stockage (1) avec des allées de stockage (15) disposées les unes à côté des autres dans des niveaux d'étagère (RE) superposés,
- une deuxième étagère de stockage (1) avec des allées de stockage (15) disposées les unes à côté des autres dans des niveaux d'étagère (RE) superposés,
- un rayonnage (3) qui s'étend dans la direction x entre la première étagère de stockage (1) et la deuxième étagère de stockage (1),
- une pluralité de dispositifs de logement d'articles (7), chaque dispositif de logement d'articles (7) comprenant un dispositif de transport (28) pouvant être sortie par rapport à ce dispositif de logement d'articles (7) dans une deuxième direction (direction z) vers l'allée de stockage (15) et l'unité de commande (18) contrôlant les dispositifs de logement d'articles (7) et les dispositifs de transport (28), afin d'entreposer les articles (6-1, 6-2) avec une certaine distance entre eux dans les allées de stockage (15) à des positions en profondeur (Zₙ, ... Zₙ₊₂) situées les unes derrière les autres,
- une unité de manipulation de marchandises (2 ; 39 ; 40) qui comprend au moins un dispositif de levage d'articles (29a, 29b) avec un dispositif de transport pouvant être levé ou abaissé (32a, 32b) pour le stockage et/ou le déstockage d'articles (6-1, 6-2) ainsi qu'un dispositif tampon (30a, 30b) avec des dispositifs de mise à disposition (35, 36) pour le stockage tampon d'articles (6-1, 6-2),
- des rails de guidage (12) qui sont disposés dans au moins certains des niveaux d'étagères (RE) entre la première étagère de stockage (1) et la deuxième étagère de stockage (1) de façon à ce que les dispositifs de logement d'articles (7) puissent approcher des allées de stockage (15) et des dispositifs de mise à disposition (35, 36), afin de transporter des articles (6-1, 6-2) entre les allées de stockage (15) et les dispositifs de mise à disposition (35, 36),
- un système de convoyage (4, 5) raccordé au dispositif de levage d'articles (29a, 29b) pour l'entrée et la sortie d'articles (6-1, 6-2) vers ou hors du dispositif de levage d'articles (29a, 29b).

10. Procédé d'entreposage d'articles (6-1, 6-2) dans des allées de stockage (15) d'une étagère de stockage (1) avec une pluralité d'allées de stockage (15), dans lequel les articles (6-1, 6-2) sont convoyés au moyen d'un dispositif de logement d'articles (7') mobile le long de l'étagère de stockage (1) dans une première direction (direction x) vers les allées de stockage (15) et d'un dispositif de transport (28') pouvant être sorti par rapport au dispositif de logement d'articles (7') vers l'allée de stockage (15) dans une deuxième direction (direction z) vers les allées de stockage (15), le dispositif de transport (28') étant muni, dans chacune des zones d'extrémité opposées entre elles, d'au moins un organe de transport externe (64, 65), afin d'entreposer, dans au moins une des allées de stockage (15), à des positions en profondeur (Zₙ..Zₙ₊₂), les articles (6-1, 6-2) avec une certaine distance entre eux et le dispositif de logement d'articles (7') pouvant loger un article (6-1) entre les organes de transport externes (64, 65), les étapes suivantes étant exécutées :
- prise en charge d'un article (6-1, 6-2) sur le dispositif de logement d'articles (7'),
- positionnement du dispositif de logement d'articles (7') devant une allée de stockage (15), déterminée par une unité de commande (18), dans laquelle, au moins à une première position en profondeur (Zₙ), un article (6-1, 6-2) et à une deuxième position en profondeur (Zₙ₊₁), située derrière, un article (6-1, 6-2) doivent être entreposés, **caractérisé par** :
- le pré-déplacement d'un article (6-1, 6-2) du dispositif de logement d'articles (7') vers l'allée de stockage (15) de façon à ce que cet article (6-1, 6-2) soit déplacé par un des organes de transport (64, 65) grâce au déplacement du dispositif de transport (28') en direction (première direction de déplacement 68) de l'allée de stockage (15) jusqu'à une position intermédiaire (Zp),
- le retour du dispositif de transport (28') en direction (deuxième direction de déplacement 69) du dispositif de logement d'articles (7') de façon à ce que l'autre organe de transport (64, 65) qui doit déplacer l'article (6-1, 6-2) de la position intermédiaire (Z_{P}) vers la deuxième position en profondeur (Zₙ₊₁) soit positionné derrière une paroi latérale (70) de l'article (6-1, 6-2) orientée vers le dispositif de logement d'articles (7'),
- le post-déplacement de l'article (6-1, 6-2) dans l'allée de stockage (15) de la position intermédiaire (Z_{P}) vers la deuxième position en profondeur (Zₙ₊₁) au moyen de l'autre organe de transport (64, 65) grâce au déplacement du dispositif de transport (28') en direction (première direction de déplacement 68) de l'allée de stockage (15).

11. Procédé selon la revendication 10, **caractérisé en ce que** l'article (6-1, 6-2) est orienté, avant son déplacement du dispositif de logement d'articles (7') vers l'allée de stockage (4) sur le dispositif de logement d'articles (7') et dans une direction transversale par rapport à l'extension longitudinale de l'allée de stockage (15).

12. Procédé selon la revendication 10 ou 11, **caractérisé en ce que** l'article (6-1, 6-2) est positionné, avant son déplacement du dispositif de logement d'articles (7') vers l'allée de stockage (4) sur le dispositif de logement d'articles (7') et dans une direction parallèle à l'extension longitudinale de l'allée de stockage (15).

13. Système de stockage avec au moins une étagère de stockage (1) avec une pluralité d'allées de stockage (15), au moins un dispositif de logement d'articles (7') mobile le long d'une étagère de stockage (1) dans une première direction (direction x) et un dispositif de transport (28') pouvant être sorti par rapport au dispositif de logement d'articles (7') dans une deuxième direction (direction z) vers l'allée de stockage (15) ainsi qu'une unité de commande (18) pour le dispositif de logement d'articles (7') et le dispositif de transport (28'), le dispositif de transport (28') étant muni, dans chacune des zones d'extrémités opposées entre elles, d'au moins un organe de transport externe (64, 65) afin d'entreposer les articles (6-1, 6-2) avec une certaine distance entre eux dans au moins une des allées de stockage (15) à des positions de profondeur (Zₙ..Zₙ₊₁) situées les unes derrière les autres, et le dispositif de logement d'articles (7') pouvant loger un article (6-1, 6-2) entre les organes de transport externes (64, 65), l'unité de commande (18) étant conçue pour contrôler le dispositif de logement d'articles (7') et le dispositif de transport (28') de façon à exécuter les étapes suivantes :
- prise en charge d'un article (6-1, 6-2) sur le dispositif de logement d'articles (7'),
- positionnement du dispositif de logement d'articles (7') devant une allée de stockage (15), déterminée par une unité de commande (18), dans laquelle, au moins à une première position en profondeur (Zₙ), un article (6-1, 6-2) et à une deuxième position en profondeur (Zₙ₊₁), située derrière, un article (6-1, 6-2) doivent être entreposés, **caractérisé par** :
- le pré-déplacement d'un article (6-1, 6-2) du dispositif de logement d'articles (7') vers l'allée de stockage (15) de façon à ce que cet article (6-1, 6-2) soit déplacé par un des organes de transport (64, 65) grâce au déplacement du dispositif de transport (28') en direction (première direction de déplacement 68) de l'allée de stockage (15) jusqu'à une position intermédiaire (Zp),
- le retour du dispositif de transport (28') en direction (deuxième direction de déplacement 69) du dispositif de logement d'articles (7') de façon à ce que l'autre organe de transport (64, 65) qui doit déplacer l'article (6-1, 6-2) de la position intermédiaire (Z_{P}) vers la deuxième position en profondeur (Zₙ₊₁) soit positionné derrière une paroi latérale (70) de l'article (6-1, 6-2) orientée vers le dispositif de logement d'articles (7'),
- le post-déplacement de l'article (6-1, 6-2) dans l'allée de stockage (15) de la position intermédiaire (Z_{P}) vers la deuxième position en profondeur (Zₙ₊₁) au moyen de l'autre organe de transport (64, 65) grâce au déplacement du dispositif de transport (28') en direction (première direction de déplacement 68) de l'allée de stockage (15).
